(19) Europäisches Patentamt / European Patent Office / Office européen des brevets

(11) **EP 3 589 451 B1**

(12) **EUROPEAN PATENT SPECIFICATION**

(45) Date of publication and mention
of the grant of the patent:
**20.07.2022   Bulletin 2022/29**

(51) International Patent Classification (IPC):
**B25B 21/00** (2006.01)       **F16B 39/36** (2006.01)
**F16B 33/02** (2006.01)       **F16B 43/00** (2006.01)
**F16B 41/00** (2006.01)       **F16B 39/26** (2006.01)
**F16B 1/00** (2006.01)        **B25B 23/14** (2006.01)
**B25B 23/00** (2006.01)       **F16B 37/12** (2006.01)
**F16B 39/16** (2006.01)       **F16B 39/282** (2006.01)

(21) Application number: **17800693.8**

(22) Date of filing: **30.10.2017**

(52) Cooperative Patent Classification (CPC):
**B25B 23/0078; B25B 21/00; F16B 39/16;**
F16B 33/02; F16B 37/125; F16B 39/282

(86) International application number:
**PCT/US2017/059121**

(87) International publication number:
**WO 2018/160230 (07.09.2018 Gazette 2018/36)**

(54) **THREADED FASTENER WITH FRICTION COEFFICIENT INCREASING TREATMENTS**

ZWEITEILIGE KEGELGEWINDEMUTTERANORDNUNG

ENSEMBLE ÉCROU À FILETAGE CONIQUE EN DEUX PARTIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **02.03.2017   PCT/US2017/020548**

(43) Date of publication of application:
**08.01.2020   Bulletin 2020/02**

(73) Proprietor: **HYTORC Division UNEX Corporation
Mahwah, NJ 07430 (US)**

(72) Inventors:
• **JUNKERS, John, K.**
  **Saddle River, NJ 07458 (US)**
• **ZHANG, Xiaoxing**
  **Somerset, NJ 08873 (US)**
• **JUNKERS, Eric, P.**
  **Hoboken, NJ 07030 (US)**
• **DOLAN, Michael, F.**
  **Manasquan, NJ 08736 (US)**
• **LAY, David, E.**
  **Highland, UT 84003 (US)**

(74) Representative: **Walther Bayer Faber
Patentanwälte PartGmbB
Heimradstraße 2
34130 Kassel (DE)**

(56) References cited:
WO-A1-86/07624       WO-A2-2016/176518
CA-A- 1 242 096        US-A- 1 157 596
US-A- 2 996 735        US-A- 3 425 473
US-A- 4 322 989        US-A1- 2013 180 369
US-B1- 6 227 839

**Description**

Prior art documents relevant for the invention disclosed herein are WO 2017/151991 A1, WO 2016/176518 A2, WO 2015/095425 A2, WO 2014/176468 A1, WO 2014/176468 A1, WO 2011/098923 A2, WO 2013/019278 A1, WO 2012/017331 A2, WO 2013/019278 A1, WO 2012/017331 A3, US 5,931,618A, US 8,002,641 B2, US 8,079,795 B2, US 8,978,232 B2, US 5,137,408 A, US 5,318,397 A, US 5,622,465 A, US 5,640,749 A, US 5,888,041 A and US 6,254,322 B1.
Further relevant prior art documents are CA 1 242 096 A, WO 86/07624 A1, US 1 157 596 A, US 6 227 839 A1, US 2013/180369 A1, US 4 322 989 A1 and WO 2016/176518 A2. CA 1 242 096 A is considered to be the closest prior art and discloses a two-part tapered thread nut assembly for use with either a stud or a bolt of a threaded fastener and a torque device including: a rigid inner member having an inner surface threadedly engagable with the fastener and an outer surface defined by a thread formation that forms a taper;an outer member having an inner surface defined by an inversely tapered thread formation that is threadedly engagable with the tapered thread formation of the outer surface of the inner member; and wherein the two-part nut assembly, when rotated by an action portion of the torque device, applies a load to the threaded fastener.

Background

Threaded fasteners including bolts, studs, nuts and washers are known and used in traditional bolting applications. Maintenance and repair of industrial applications begin with loosening of and end with tightening of these threaded fasteners. Naturally industry seeks to reduce production loss during routine, unforeseen and/or emergency maintenance and/or repair.
Mechanical fastening with helically threaded components is typically achieved with bolts, studs, screws, nuts and washers. Washers are thin members that can be placed between the fastener and the fastened component. Washers are typically used to prevent frictional damage to assembled components. Washers are also commonly used to distribute stresses evenly and to control friction losses.
Conventional nuts are normally made from a single piece of contiguous and homogenous steel. The external geometries normally have rotational coupling features so that they can be tightened by torqueing with an external mating device or tool. The most common rotational coupling feature is a hexagon, but any other rotational coupling means is possible including features like squares, multiples hexes, slots, splines, grooves or holes. Nuts normally have an inside diameter that is helically threaded to mate with a stud's thread, which allows the nut to translate on the stud with only relative rotational movement between the stud and nut. In other words, they are used to retain and or deliver load to an externally threaded fastener.
There are two methods of tightening and/or loosening a threaded fastener, torque and tension. Until Applicant's innovations, however, it was not possible to perform hydraulic torqueing and hydraulic tensioning with the same tool. Operators needed separate tools to torque and tension threaded fasteners.
Torque has benefits in that it: can be applied to most existing threaded fasteners; is accurate within five percent (5%) of pre-calculated turning resistance of nut; avoids unintended loosening; assures more even circumferential bolt load than tension; and overcomes uneven lubrication applications, foreign particulate underneath the nut or on top of the flange and minor thread damage. Torque, however, has detriments in that it: is subject to thread friction and facial friction, both of which are unknown; requires use of back-up wrench applied to the nut on the other side of the application to keep still the bottom portion of the threaded fastener; results in unknown residual bolt load; and is subject to bolt torsion and side load, both of which adversely affect bolting applications. Sustainable and accurate use of torque in bolting requires establishing thread and bearing facial frictions and eliminating torsion and side load.
Tension has benefits in that it is torsion- and side load-free. Tension, however, has detriments in that it: requires the bolt to stick out by at least its diameter over and about the nut, so that it can be pulled upwards by a tensioner, which often necessitates bolt and nut replacement; is accurate only within 25% of assumed turning resistance; yields unpredictable, manual nut seating; is subject to thread friction and facial friction, both of which are unknown; often over pulls, not stretches the fastener; results in uncontrollable fastener relaxation due to load transfer from puller; and results in unknown residual bolt load. Sustainable and accurate use of tension in bolting requires eliminating stud/bolt pulling and load transfer.
Torque power tools are known in the art and include those pneumatically, electrically and hydraulically driven. Torque power tools produce a turning force to tighten and/or loosen the threaded fastener and an equal and opposite reaction force. Hydraulic tensioners use a puller to apply hydraulic pressure to the bolt, which is usually results in a 10%-20% higher than desired bolt elongation, causing the stud to be over pulled. Then the nut is hand tightened until snug; the pressure on the cylinder is released; the stud springs back; and the load is transferred from the bridge to the nut thereby compressing the joint with clamping force.
Related to torque, traditional reaction fixtures abut against viable and accessible stationary objects, such as adjacent fasteners, to stop the housing of the tool from turning backward while the fastener turns forward. This abutment force applies a pulling force, or side load, perpendicular to the bolt axis on the nut to be tightened or loosened. The reaction force of square drive tools travels through the reaction arm trying to twist off the cylinder end of the tool and/or bend the drive. Note Applicant's innovation in coaxial reaction force transfer found in the HYTORC® AVANTI®. Evolution of traditional reaction fixtures of the prior art are disclosed, for example, in Applicant's U.S. Patent Nos.: 4,671,142; 4,706,526; 5,016,502; Re. 33,951; 6,152,243; D500060; and 7,765,895.

Industry has been moving away from cumbersome and complicated hydraulic tensioners, yet also from torqueing due to the torsion and side load applied to the fastener. Indeed mechanical tensioning is quite popular.

Applicant advanced bolting and solved many bolting challenges with its HYTORC NUT™ mechanical tensioner product lines and drivers and tools for use therewith. The HYTORC NUT™ is an example of a self-reacting nut and includes an inner sleeve, an outer sleeve and a washer. It uses the washer as a reaction point for the application of input torque to the outer sleeve. In a self-reacting fastener the outer sleeve functions as the nut while the inner sleeve becomes an extension of the stud and is rotationally coupled with the washer. This rotational coupling prevents sliding motion between the inner sleeve and stud threads during the application of torque to the outer sleeve. Self-reacting nuts with the same external geometry as conventional nuts suffer from higher bearing surface stresses. The bearing surface stresses are higher because the outer sleeve inside diameter is increased to allow space for the inner sleeve causing a thinner wall thickness than standard nuts.

Additionally devices of coupling or mating a reaction or an output shaft of a torque output device to fasteners used in bolting also are known. Self-reacting three-piece mechanical tensioner fasteners typically have spline, hex or square features to allow torsion coupling with the reaction member of the torque input device. This is achieved with machined rotational interferences between two parts. The interference is typically created with a male and female engagement between any two mating features that prevent rotation between the two parts.

Applicant advanced bolting and solved many bolting challenges with its HYTORC SMARTSTUD™ mechanical tensioner product lines and drivers and tools for use therewith. The HYTORC SMARTSTUD™ is an example of a three-piece mechanical tensioning stud device. They consist of a stud, nut and washer. The stud has external threads on both ends. Under the upper thread the stud will also have a spline or other geometry to create a rotational coupling with the inner diameter of the washer. The topside of the stud will also have a spline or other geometry to allow rotational coupling with the reaction shaft of the torque input device. The nut is internally threaded to mate with the threads on the topside of stud. The nut will have a spline or other geometry to allow the introduction of torque from torque input device. The washer has an internal geometry that will mate rotationally with the spline or other geometry under the top thread of the stud.

In bolting applications stresses are typically near the elastic limits of the materials. The reaction feature that couples the HYTORC SMARTSTUD™ to the torque input device typically has to be oversized to prevent elastic material failures. Therefore it is not possible with known coupling features to carry the high magnitude of torque with an internal feature such as a square, hexagon or internal spline hole in the top surface of the stud. Consequently bolting applications that are subject to high stress must have an external feature on the topside of the stud that will allow the coupling of a sufficiently sized reaction shaft from the torque input device.

In other words, the HYTORC NUT™ has two sleeves, one inside the other, whereby the inner sleeve is connected with a splined washer to allow an axial movement of the inner sleeve only. It is screwed onto a stud or bolt as a unit. A proprietary driver holds onto the inner sleeve and turns the outer sleeve. The stud is drawn upward along with the inner sleeve and tensioned without over-extension and spring-back, as with a hydraulic tensioner. The inner nut never turns against the threads of the stud under load, eliminating the possibility of bolt thread galling or other damage. The HYTORC NUT™: mechanically utilizes the action and reaction force of the tool during tightening and loosening; converts torque to torsion-free bolt stretching rather than pulling as in tension; allows precision bolt load calibration with accurate setting of and achieving of desired, residual bolt elongation or load, as compared to torque; eliminates side-load, torsion, load transfer and relaxation, reaction arms, backup wrenches, pullers and bridges; eliminates bolt elongation measurements for critical applications; increases safety, error-free bolting, joint reliability and speed; cuts bolting times by over 50%; and works on all joints without alteration. It improves torque and tension by stretching bolts instead of pulling them preventing unsafe and fastener and joint damaging mechanical rebound. The operator sets and achieves the bolt load anywhere from 30% to 90% of the yield.

Evolution of the HYTORC NUT™ and the HYTORC SMARTSTUD™ are disclosed, for example, in Applicant's U.S. Patent Nos.: 5,318,397; 5,499,9558; 5,341,560; 5,539,970; 5,538,379; 5,640,749; 5,946,789; 6,152,243; 6,230,589; 6,254,323; 6,254,323; and 6,461,093.

The HYTORC NUT™ and the HYTORC SMARTSTUD™, however, has its set of challenges. End users must replace standard nuts with precisely machined, treated and lubricated units. Additionally the inner sleeve needs to be relatively radially thick at the point of connection with the washer. Sometimes this connection can hold the entire reaction force applied to the outer sleeve. In addition, they are costly to produce and often difficult to sell to cost minimizing, traditional bolting end-users. Further in some versions of the HYTORC NUT™, the nut has to be made with two sleeves whose outside diameter has to meet the outside diameter of a regular nut, so both sleeves have less material than a regular nut. This requires the use of high strength materials, which causes reluctance on the part of the customers to change materials and fear of the unknown. In other versions of the HYTORC NUT™, the bolt needs to be altered, which is costly and not easily acceptable by industry.

Applicant further advanced industrial bolting and solved many bolting challenges with its HYTORC WASHER™ product lines and drivers and tools for use therewith. The HYTORC WASHER™ was the first example of reaction washers used as reaction points for torqueing nuts and bolts on helically threaded fasteners. Reaction washers are positioned in the bolt or stud load path and therefore always experience the same and identical loading. In reaction washer systems rotational torque is applied to the top nut or bolt while the opposing reaction torque is imparted on the reaction washer. The top nut or bolt and the mating reaction washer experience the same and identical load and torque. Therefore only the frictional forces govern relative movement. The component with the lower friction coefficient will have a tendency to move while the other component will remain relatively anchored.

The HYTORC WASHER™ self-reacting load washer has an inner thread segment connected with the thread of a traditional bolt. It fits under a regular nut and stops the bolt from turning, while providing a reaction point for the driving tool. It is tightened with a proprietary dual socket. An outer socket holds on the washer, and an inner socket turns the regular nut, thereby drawing the stud up through the washer. The tool's reaction force is converted into a holding force that holds the HYTORC WASHER™ stationary. This keeps the segment and thus the bolt stationary when the nut is being turned until bolt elongation causes an axial segment to move in the inside of the HYTORC WASHER™. It improves torque and tension by stretching bolts instead of pulling them. The lack of load-transfer-relaxation, or mechanical rebound, allows stretching to 90% of yield.

The HYTORC WASHER™: provides a known bearing facial friction for a more even residual bolt load; requires no precision-machining of the spot face; minimizes the torsion and side-load of the bolting procedure; prevents the bolt from turning along with the nut; creates straight axial bolt stretch without the need for reaction arms and back-up wrenches; increases residual bolt load and evenness of circumferential joint compression; reduces set-up time; increases bolting speed; allows for bolting to become axially oriented and hands-free even on inverted applications; increases bolting safety; and minimizes risk of fastener and joint damage.

Evolution of the HYTORC WASHER™ product lines and drivers and tools for use therewith is disclosed, for example, in Applicant's U.S. Patent Nos.: 6,490,952; 6,609,868; 6,929,439; 6,883,401; 6,986,298; 7,003,862; 7,066,053; 7,125,213; 7,188,552; 7,207,760; and 7,735,397.

The HYTORC WASHER™, however, has its set of challenges. It adds unnecessary height to bolting applications. End users often must replace standard studs and bolts with longer versions due to regulations requiring two or more threads to protrude from the nut upon tightening. In addition, the HYTORC WASHER™ is more costly to produce than traditional washers and often difficult to sell to cost minimizing, traditional bolting end-users. Furthermore the HYTORC WASHER™ turns freely and in the opposite direction if the nut friction is higher. During operation the HYTORC WASHER™ has two facial frictions and the nut has a facial and a thread friction, so the overall friction of each is nearly identical, which means that the HYTORC WASHER™ may turn or the nut may turn. To avoid this a pre-load is required which cannot be achieved if both the HYTORC WASHER™ and nut are simultaneously turned down. Finally despite elimination of side load and torsion, corrosion still accumulates in the threads thereby not eliminating thread galling.

Applicant further advanced industrial bolting and solved many bolting challenges with its HYTORC SMARTWASHER™ product lines and drivers and tools for use therewith. This self-reacting all-purpose washer used for tightening and loosening threaded connectors including a nut, a bolt having an axis and introduced into an object with interposition of the washer between the nut and the object so that a first bearing face surface of the washer on one axial side cooperates with a nut and a second bearing face surface of the washer on an opposite axial side cooperates with the object. The washer includes: a radially outer body having a radially inner opening adapted to be larger than a diameter of the bolt and a radially outer surface adapted to absorb a reaction force of a tool; a radially inner segment engageable with a thread of the bolt, located radially inside the outer body in the radially inner opening, and connectable to the outer body with a limited axial frictional movement relative to the body; and a spacer adapted to be located between the radially inner segment and the nut and located also radially inside the outer body in the radially inner opening and axially spaced from the radially inner segment. The outer body, the radially inner segment, and the spacer are assemble-able and disassemble-able from one another and are usable jointly or individually.

Applicant used the radially outer body and the radially inner segment interposed together between the nut and the object for applications when even and accurate bolt elongation was necessary. When the nut is turned by the tool at the given force the radially outer body receives the given force in an opposite direction from the tool. The radially outer body stands still while the radially inner segment engaging with the thread of the bolt positively stops the bolt from turning. The bolt only elongates or relaxes. In this case the washer composed of the radially outer body and the radially inner segment functions as a tension washer.

Applicant used the radially outer body, the radially inner segment and the spacer interposed between the nut and the object for applications when a precise bolt elongation was needed and a bolt elongation must be controlled. When the nut is turned by the tool at the given force the radially outer body receives the given force in an opposite direction from the tool. The radially outer body stands still while the radially inner segment engaging with the threads of the bolt positively stops the bolt from turning. The bolt only elongates or relaxes and at the same time the radially inner segment moves axially while the spacer limits the axial movement of the segment. In this case the washer composed of the radially outer body, the radially inner segment, and the spacer functions as a high precision washer.

Applicant used only the radially outer body of the washer interposed between the nut and the object for regular applications when an even and accurate bolt elongation was not necessary. The radially outer surface of the body is used to absorb the equal and opposite reaction force when the tool applies the turning force to the nut. The nut turns but the radially outer body stands still, and in this case the washer composed only of the radially outer body functions as a reaction washer.

The HYTORC SMARTWASHER™ provides many of the advantages of the HYTORC WASHER™ in a lower cost and more flexible package. Evolution of the HYTORC SMARTWASHER™ product lines and drivers and tools for use therewith is disclosed, for example, in Applicant's U.S. Patent No. 8,079,795.

The HYTORC SMARTWASHER™, however, has its set of challenges, similar to those of the HYTORC WASHER™. It adds unnecessary height to bolting applications. End users often must replace standard studs and bolts with longer versions due to regulations requiring two or more threads to protrude from the nut upon tightening. In addition, the HYTORC SMARTWASHER™ is more costly to produce than traditional washers and often difficult to sell to cost minimizing, traditional bolting end-users. Notably Applicant believed that even, accurate and precise bolt elongation was not possible when only the radially outer body of the HYTORC SMARTWASHER™ is used as a reaction washer. Additionally use of the threaded insert with the radially outer body yielded even and accurate bolt elongation but travel of the stud is limited to the washer thickness. Travel is hindered further with use of the spacer. Finally despite elimination of side load and torsion, corrosion still accumulates in the threads thereby not eliminating thread galling.

Furthermore the HYTORC SMARTWASHER™ turns freely and in the opposite direction if the nut friction is higher. During operation the HYTORC SMARTWASHER™ has two facial frictions and the nut has a facial and a thread friction, so the overall friction of each is nearly identical, which means that the HYTORC SMARTWASHER™ may turn or the nut may turn. To avoid this a pre-load is required which cannot be achieved if both the HYTORC SMARTWASHER™ and nut are simultaneously turned down.

With conventional reaction washer systems, lubricant must be applied to selectively bias the washer to remain still under higher friction than the nut or stud. This allows the stud or nut to turn and generate load through helical mating threads. The required lubricant biasing is an undesirable and difficult to control step in the process of installing reaction washers. Even small amounts of lubricant on a conventional reaction washer will have the adverse effect of allowing the reaction washer to turn or slip before the nut or bolt. When the washer turns before the helically threaded bolt or nut the system cannot generate bolt load. Improper management of lubrication or frictional surfaces often results in inadvertent sliding or turning of conventional reaction washers.

Other examples of reaction washers in the prior art include those disclosed in U.S. Patent Nos. 7,462,007 and 7,857,566. These reaction washers are meant as substitutes for jam nuts and Belleville washers as they resiliently deform under load to store pre-load or live load energy. In most embodiments, the incorporation of a threaded bore seeks to minimize side loading on the bolt. The area that contacts the object of these concave and/or convex reaction washers is low compared to the total surface area of the bottom washer surface. A threadless bore is disclosed in one embodiment. Friction enhancements include protrusions, like the points of the hexagonal washer shape or planar knurled extensions, which bite or dig into the object surface. A substantially flat reaction washer is also disclosed having no friction enhancements.

Applicant made efforts to increase fastener rotation speeds in fluid operated torque power tools. The HYTORC® XXI® is a fluid operated wrench having: a fluid-operated drive including a cylinder; a piston reciprocatingly movable in the cylinder and having a piston rod with a piston rod end; a ratchet mechanism having a ratchet provided with a plurality of teeth; and at least two pawls operatably connectable with the piston rod end and engageable with a teeth of the ratchet so that during an advance stroke of the piston one of the at least two pawls engages with at least one ratchet tooth while the other of the at least two ratchets over at least one ratchet tooth, while during a return stroke of the piston the other of the at least two pawls engages with at least one ratchet tooth while the one of the at least two pawls ratchets over at least one ratchet tooth. At least one of the at least two pawls is disengageable from and liftable above the teeth of the ratchet. The HYTORC® XXI® also includes a disengaging unit which is activatable by an operator separately from the drive and can act on at least one pawl so as to distinguish it from and lift it above the ratchet teeth. This anti-backlash feature permits the ratchet to turn backwards to release buildup torsion and material flex, so that the fluid operated wrench can be taken off a job. The HYTORC® XXI® is the first continuously rotating hydraulic wrench in the world. That makes this tool up to three times faster than any other wrench on the market. Note that the benefits of the HYTORC NUT™ and the HYTORC WASHER™ are accentuated when used with the HYTORC® XXI® The HYTORC® XXI® is disclosed in Applicant's U.S. Patent No. 6,298,752.

Applicant then applied its thorough understanding and innovation in torque power tools to hand-held pneumatic torque intensifying tools, specifically by creating the HYTORC® jGUN® product lines and drivers and tools for use therewith. Applicant markets these tools under the trade names of HYTORC® jGUN® Single Speed, Dual Speed and Dual Speed Plus. Once the nut hits the flange surface the turning degree to tighten or loosen it up is very little. Customers desire high turning speeds to quickly run down or up nuts. Known impact wrenches, which provided a high run down and run off speed, had disadvantages of inaccuracy and slow rotation once the nut hit the flange face. Conversely, known handheld torque power tools were torque accurate, but relatively slow in run up and run down of fasteners. Still they were much faster than impact guns once the nut was turned on the flange face.

The motor housing in known handheld torque intensifying tools was independent to the gear housing such that the torque could not exceed an operator's arm/hand torque resistance. Otherwise the tool's motor housing could not be held and would spin in the operator's hand. There were many motor driven torque multipliers in the market and some of them had two speed mechanisms, some of them reacted on the bolt tip, which requires special bolts, and others with a reaction arm. No matter what torque or speed was applied, their gear housing turned in the opposite direction as the output shaft. At high speed, turning parts in then existing handheld torque intensifying tools required bearings because the gears and the output shaft turned so fast in the gear housing. High torque versions of such tools were too large and too heavy.

The HYTORC® jGUN® product lines includes a tool having a run down or run up speed where the entire gear housing together with the inner gear assembly and the output drive turns at the same high speed in the same direction. The operator simply switches the tool from applying a turning force to the gears and the output shaft in one direction and simultaneously an opposite turning force to the gear housing. Note that HYTORC NUT™ and HYTORC WASHER™ product lines and drivers and tools for use therewith are compatible with the HYTORC® jGUN® Dual Speed. For example, In a higher speed, lower torque embodiment of the HYTORC® jGUN® Dual Speed the drive socket having the nut and the reaction socket having the HYTORC WASHER™ always turned together and at the same higher speed and the same lower torque. The HYTORC WASHER™ and the nut are integrated as one unit by pins until the nut is seated on the HYTORC WASHER™. The torque increases and the pins are disintegrated by shearing, so that the nut is turned with a higher torque and a lower speed while the HYTORC WASHER™ becomes a stationary object and therefore a reaction point. The integration of the HYTORC WASHER™ and a known nut is no longer acceptable because pieces of the broken connection affect the coefficient of friction, can cause thread galling and leave detrimental unwanted deposits at thread interfaces.

When not used with the HYTORC WASHER™, the HYTORC® jGUN® required use of reaction fixtures to divert the reaction force generated during turning of the nut, to a stationary object. The run down speed had to be limited to avoid the reaction arm from being slammed against the adjacent nut at a high speed, which could cause an accident if the operator's extremities were in the way. Abutment of a reaction arm is necessary for the low speed, high torque mode of operation to tighten or loosen fasteners. But the reaction arm is not desirable for the high speed, low torque mode of operation - again to avoid accidents and OSHA recordable situations.

Applicant applied its thorough understanding and innovation in torque power tools having reaction fixtures and the HYTORC® jGUN® product lines to further advance hand-held pneumatic torque intensifying tools. Applicant created the HYTORC® FLIP-GUN® product lines and drivers and tools for use therewith. The HYTORC® FLIP-GUN® includes a positionable reaction arm. When placed in a first position, the torque intensifier unit is switched to a high speed, low torque mode and the reaction arm is usable as a handle by the operator while in a perpendicular direction to the tool axis. When the reaction arm is placed in a second position coaxial to the tool axis the torque intensifier unit is switched to low speed, high torque mode and the reaction arm can abut against a stationary object since the high torque can not be absorbed by the operator.

Often application characteristics adversely affect bolting jobs and include for example corroded, unclean, kinked, debris-laden, burred, galled, irregular, disoriented, misaligned and/or unevenly lubricated stud and nut threads and surfaces. Often production loss is exacerbated by such adverse bolting application characteristics. Naturally industry seeks to reduce production loss during routine, unforeseen and/or emergency maintenance and/or repair.

Applicant further innovated its hand-held pneumatic torque intensifying tools, specifically by creating the HYTORC® THRILL® product lines and drivers and tools for use therewith. The HYTORC® THRILL® is a handheld dual mode power driven torque intensifier tool which operates in reaction-free and reaction-assisted tightening and loosening of industrial fasteners. It includes: a motor to generate a turning force to turn the fastener; a turning force multiplication mechanism for a lower speed/higher torque mode including a plurality of turning force multiplication transmitters; a turning force impaction mechanism for a higher speed/lower torque mode including a plurality of turning force impaction transmitters; a housing operatively connected with at least one multiplication transmitter; a reaction arm to transfer a reaction force generated on the housing during the lower speed/higher torque mode to a stationary object; wherein during the lower speed/higher torque mode at least two multiplication transmitters rotate relative to the other; and wherein during the higher speed/lower torque mode at least two multiplication transmitters are unitary to achieve a hammering motion from the impaction mechanism. Advantageously the HYTORC® THRILL®: minimizes operator vibration exposure; provides high rotation inertia in the higher speed, lower torque mode due to a high mass from cooperation between the multiplication and impaction mechanisms, which increases the torque output of the impaction mechanism; runs down and runs off fasteners at high speed without the use of a reaction fixture even when a torque higher than the one absorbable by an operator is required to overcome substantial adverse bolting application characteristics like thread and facial deformation and/or thread galling; and loosens highly torqued or corroded fasteners that are stuck to their joints and tightens fasteners to a desired higher and more precise torque with use of a reaction fixture in the second mode.

The impact mode is not operatable in the THRILL® during lower speed / higher torque (multiplication) mode because: the positionable reaction arm abuts against a stationary object; and the impact mechanism is locked out during the torque multiplication mode. But note that during higher speed / lower torque mode, the turning force from the motor is transferred via the initial stage of the multiplication mechanism to the output shaft to run down or run up a nut or bolt head which exhibits little to no resistance. The impact mechanism activates when the fastener exhibits adverse bolting characteristics thus requiring intermittent force to overcome such deformities.

Note Applicant's recent advancements with the HYTORC® FLASH® Gun, which is electrically driven and the HYTORC® Lithium Series® Gun, which is also electrically driven but with a battery and therefore portable.

Evolution of the HYTORC® jGUN®, FLIP-Gun®, THRILL®, HYTORC® FLASH® Gun and HYTORC® Lithium Series® Gun product lines and drivers and tools for use therewith is disclosed, for example, in Applicant's U.S. Patent Nos. and U.S. Application Nos.: 6,490,952; 6,609,868; 6,929,439; 6,883,401; 6,986,298; 7,003,862; 7,066,053; 7,125,213; 7,188,552; 7,207,760; 7,735,397; 7,641,579; 7,798,038; 7,832,310; 7,950,309; 8,042,434; D608,614; and 13/577,995.

Despite Applicant's recent innovations with the THRILL®, side load and thread galling remain major issues of industrial bolting applications and have not been addressed at all by intensifier tools in the market. Galling is material wear caused by a combination of friction and adhesion between metallic surfaces during transverse motion, or sliding, often due to poor lubrication. When a material galls portions are pulled from a contacting surface and stuck to or even friction welded to the adjacent surface, especially if there is a large amount of force compressing the surfaces together. Galling often occurs in high load, low speed applications. It involves the visible transfer of material as it is adhesively pulled from one surface, leaving it stuck to the other in the form of a raised lump. Galling is usually not a gradual process, but occurs quickly and spreads rapidly as the raised lumps induce more galling.

The corrosion of a long since tightened corroded fastener usually occurs between the engaging threads of the nut and the bolt and the nut and the flange. Corrosion may come from several sources including chemical, heat, humidity and lubrication. On high temperature applications, for example, lubrication applied during tightening dries up and binds the threads together over time. Moreover chemical reactions within and without the vessel often cause galvanic corrosion. During loosening, the inner thread corrosion pushes the dried out grease along the bolt threads. The reaction force applied to the stationary object applies an equal force on the near side of the nut to be turned. Indeed the side load, or abutment force, for a tool may be 3x to 4x its ft.lbs. torque output because the abutment point of the reaction arm is often half if not less than a foot away from the center of the drive.

This side load causes the nut and bolt threads to engage with enormous force on the near side where it is applied such that the dried out grease gets piled up in that location when the nut is turned. Irregularities in threads often cannot be overcome. Merely half of the threads between the bolt and the nut are engaged and the threads start gripping. This causes the bolt thread to gall and requires substantially more torque and thus substantially more side load to take the nut off, which can ruin the bolt and the nut threads. The fastener often locks up to the point where all of the turning force is used by the thread friction, which can lead to breakage of the fastener or the tool turning it. The torque power tool originally used to tighten the fastener is often insufficient for loosening the same corroded fastener. Such corroded fasteners may require loosening torque values 1x to 3x more ft.lbs. than the tightening torque and an additional more powerful tool may be needed. High temperature bolting applications such as, for example, in turbines and casings, are usually critical requiring either stainless or precision manufactured fasteners with extremely high replacement costs. In addition the use of fine thread bolts, which is quite popular as of late, multiplies this problem.

Even if the tool applies no side load to the fastener, thread galling can still occur as the dried out grease accumulates in the engaging threads during the loosening of the nut. Such loosening requires at one point a higher torque than the original tightening torque, which when applied results in thread galling. This occurs even with the HYTORC NUT™ between the inner and outer sleeves. It is habit in the industry for operators to hit corroded fasteners with a sledgehammer to pulverize corrosion before applying loosening torque. This habit is dangerous, can ruin bolt threads extending over the nut, and is uncivilized. Adverse galling also occurs between the face of the nut and the face of the flange, since the side load changes a perpendicular orientation of the nut to be turned. This in turn increases the turning friction of the nut and makes the bolt load generated by the loosening torque unpredictable which causes adverse aesthetics, non-parallel joint closures, system leaks, and tool, fastener and joint failures.

Known washers may reduce surface galling between the threaded fastener, the nut, and the joint as the washer is made from a harder material. Appendix M of ASME PCC-1-2010 states that: "it is generally recognized that the use of through-hardened steel washers will improve the translation of torque input into bolt preload by providing a smooth and low friction bearing surface for the nut. Washers protect the contact surfaces of the flange from damage caused by a turning nut. These are important considerations when torqueing methods (either manual or hydraulic) are used for bolt tightening." Known washers, however, do not minimize and/or eliminate surface galling and thread galling created by side load. And known washers can move when being tightened so that the washer can rotate with the nut or bolt head rather than remaining fixed. This can affect the torque tension relationship.

Another purpose of installing washers in a typical bolting system is to distribute the loads under bolt heads and nuts by providing a larger area under stress. Otherwise, the bearing stress of bolts may exceed the bearing strength of the connecting materials and this leads to the loss of preload of bolts and the creeping of materials.

Hardening processes, such as, for example, nitriding have been discovered to prevent galling on the friction surfaces of fasteners. Nitriding hardens the surface of metals yet makes fractures more likely especially when tensile stresses are present. While nitriding can be used to prevent galling on compressive elements like washers, other bolting elements like studs are not good candidates for nitriding. Studs experience pure tensile stresses when loading and therefore would likely suffer from catastrophic fractures if they were nitrided. Nuts are safer but have hoop stresses from the thread loading. These hoop stresses are tensile in nature. While nuts have much lower tensile stress than studs, the risk of fractures to hardened surfaces is still possible. A fracture that migrates in a stud or nut is likely to lead to catastrophic load loss in the fastener. A fracture that migrates in a washer would not lead to load losses.

What is needed is: simplification in tool, driver, fastener and washer design and operation; elimination of reaction, bending and pulling forces; and increased bolting speed, efficiency, reliability, repeatability and safety, all at lower cost. The present inventions have therefore been devised to solve these issues.

These issues are solved by a two-part tapered thread nut assembly as defined in the appended set of claims. The claimed invention is defined in claim 1.

SPECIFICATION

The invention of the present application may be described by way of example only with reference to the accompanying drawings, of which:

FIGs. 1A-1C are perspective views of a top and a bottom surface and a side view of a first embodiment of a HYTORC® Z® Washer not belonging to the present invention;

FIGs. 2A-2B are upward and downward facing perspective views of a joint to be closed by a threaded fastener including the Z® Washer of FIGs. 1A-1C and a nut, a Z® Fastener not belonging to the present invention;

FIG. 3A-3C are side and perspective views of a reaction arm-free power tool, a HYTORC® Z® Gun, for gall-minimized tightening and/or loosening of the Z® Fastener not belonging to the present invention;

FIGs. 4A - 4B are perspective and side views of the tightened joint and the tightened Z® Fastener not belonging to the present invention;

FIGs. 5A-5D are perspective, perspective cross-sectional and side cross-sectional views of a dual drive coaxial action and reaction assembly, a HYTORC® Z® Socket not belonging to the present invention;

FIGs. 6A-6E are top-down, bottom-up and side views of Z®Washer Friction Coefficient Increasing Treatment Means and related forces acting on the Z® Fastener not belonging to the present invention;

FIGs. 7A-7C are multiple views of various embodiments of Z® Washers with varied dimensions and widths of Z®Washer Friction Coefficient Increasing Treatment Means such as knurl bands not belonging to the present invention;

FIGs. 8A-8L are top-down views of various embodiments of Z®Washers with varied shapes not belonging to the present invention;

FIGs. 8D1-8D3 are perspective views of a top and a bottom surface and a side view of a another embodiment of a Z® Washer not belonging to the present invention;

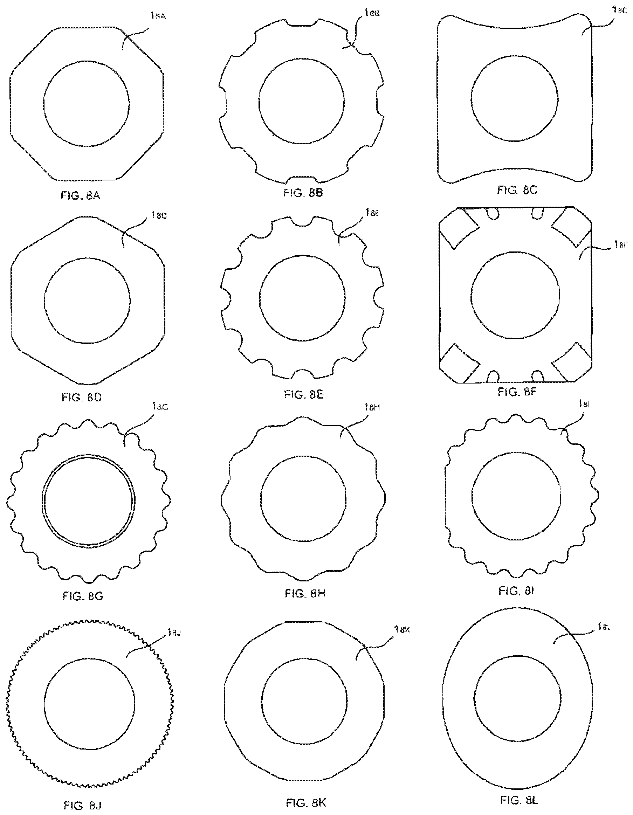

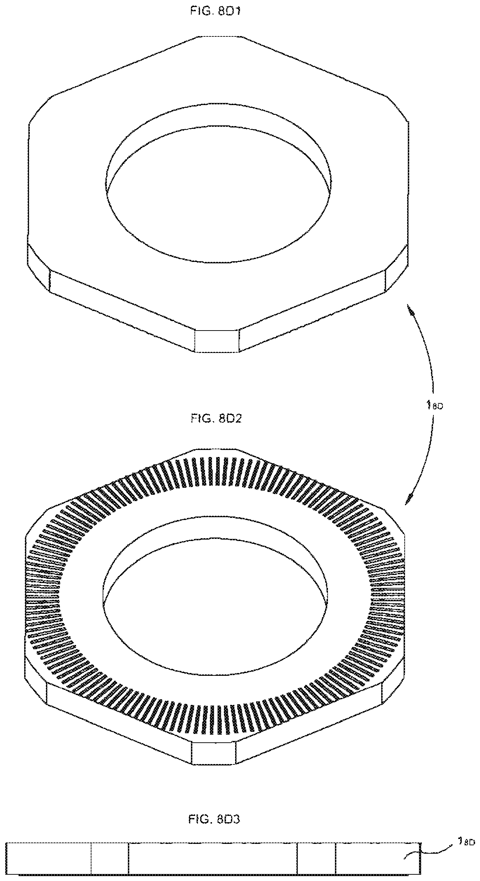

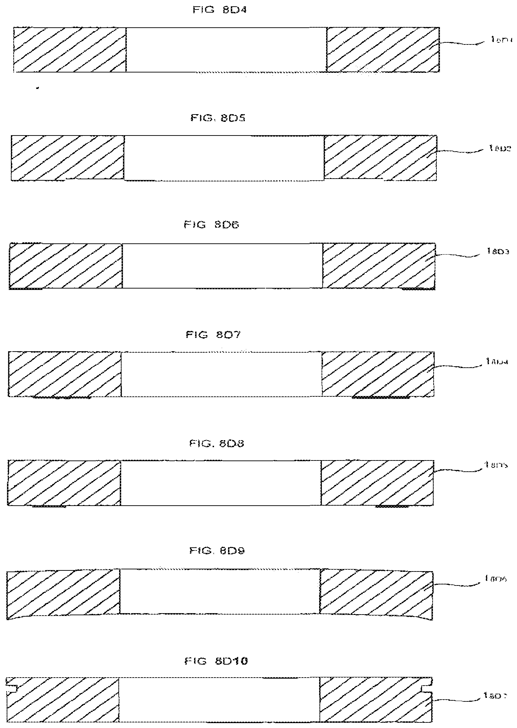

FIGs. 8D4-8D10 are cross-sectional side views of various types, sizes and locations of Z® Washer Friction Coefficient Increasing Treatment Means not belonging to the present invention;

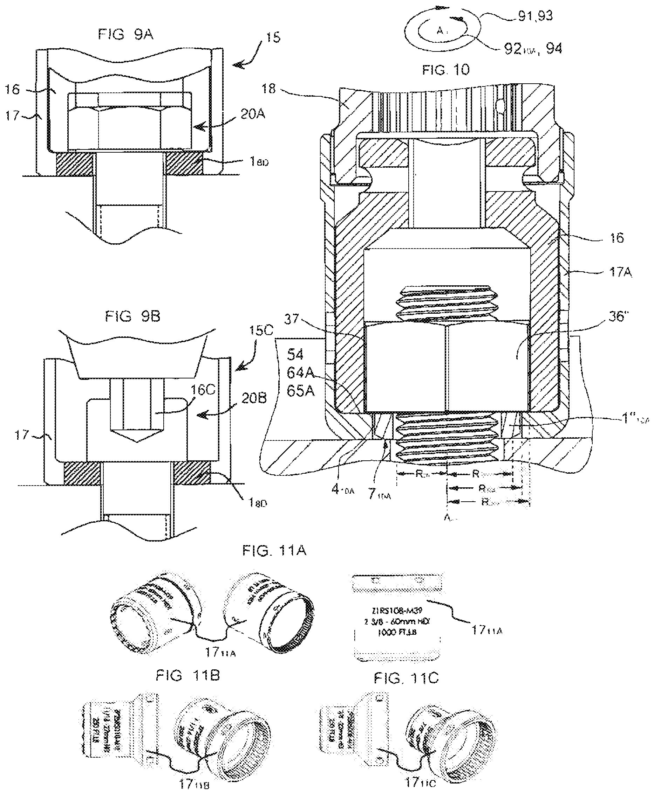

FIGs. 9A-9B are cross-sectional side views of alternative Z® Fastener and Z® Socket types for use with Z® Washers not belonging to the present invention;

FIG. 10 is a cross-sectional side view of an alternative Z® Washer and Z® Socket such that the diameter of the washer is less than that of the nut not belonging to the present invention;

FIGs. 11A-11C are multiple views of various embodiments of Z® Sockets with varied dimensions and widths not belonging to the present invention;

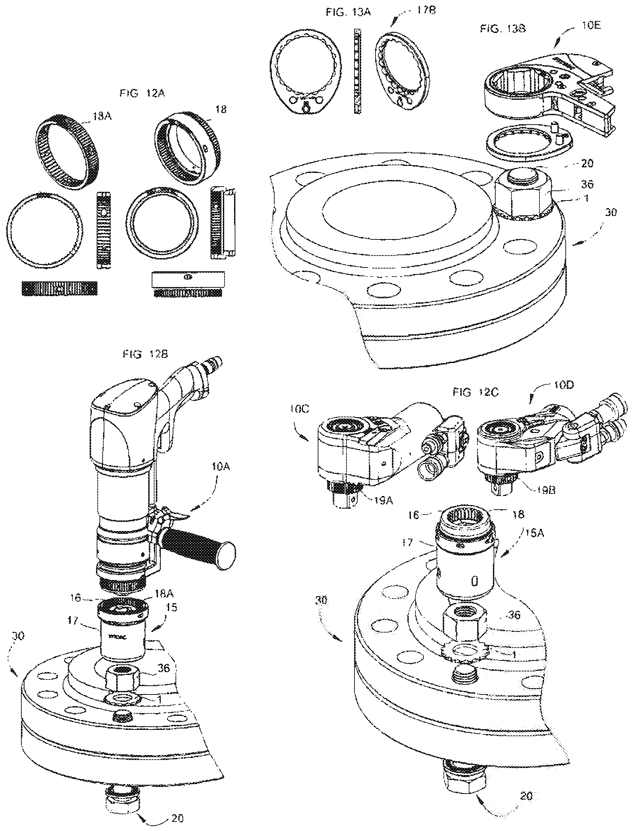

FIGs. 12A-14B are perspective views of the Z® System's application to HYTORC® Torque Tools including spline adapters, reaction plates and offset links not belonging to the present invention;

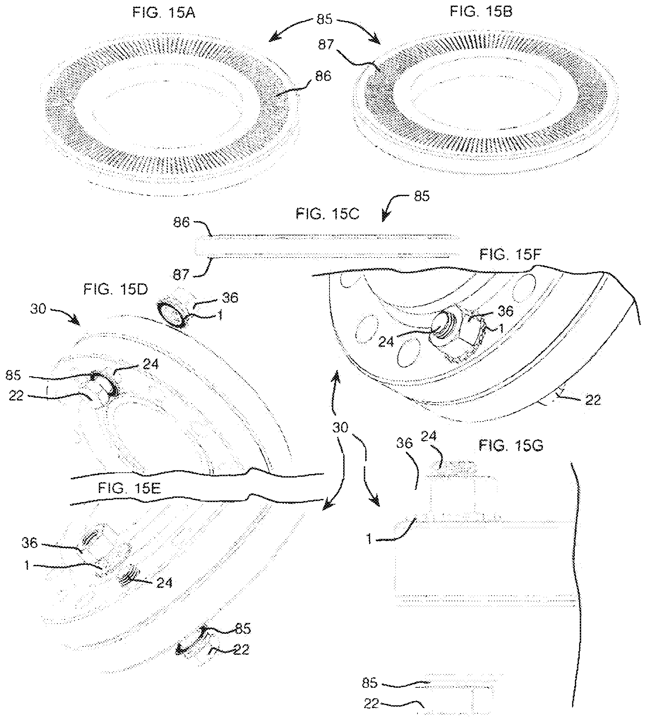

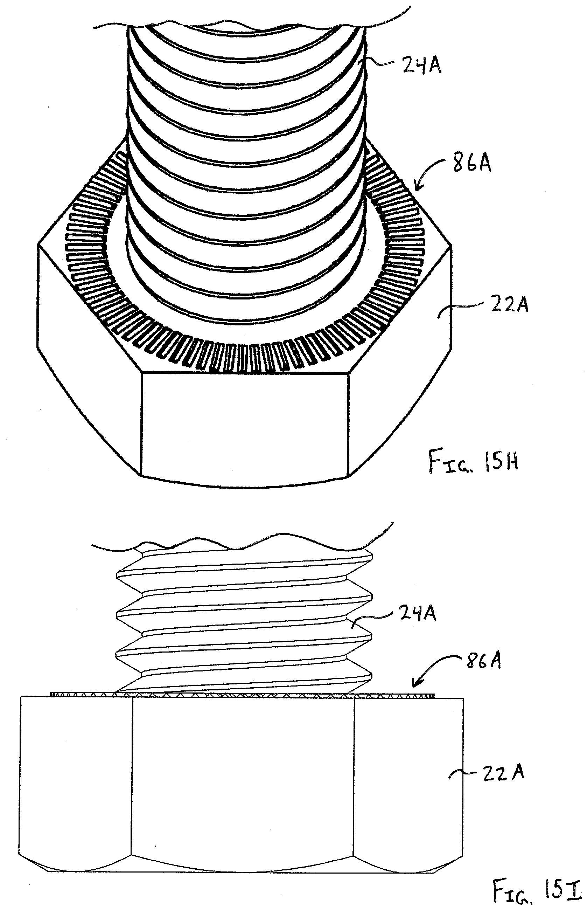

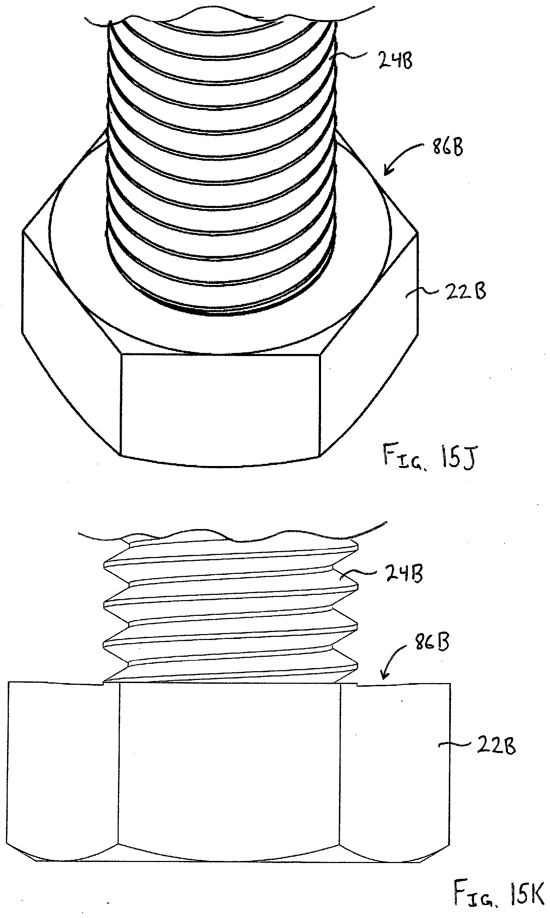

FIGs. 15A-15G are perspective and side views of the application of a HYTORC® Dual Faced Friction Washer to the Z® System not belonging to the present invention;

FIGs. 15H-15K are perspective and side views of the application of a HYTORC® Z® Nut/Bolt to the Z® System not belonging to the present invention;

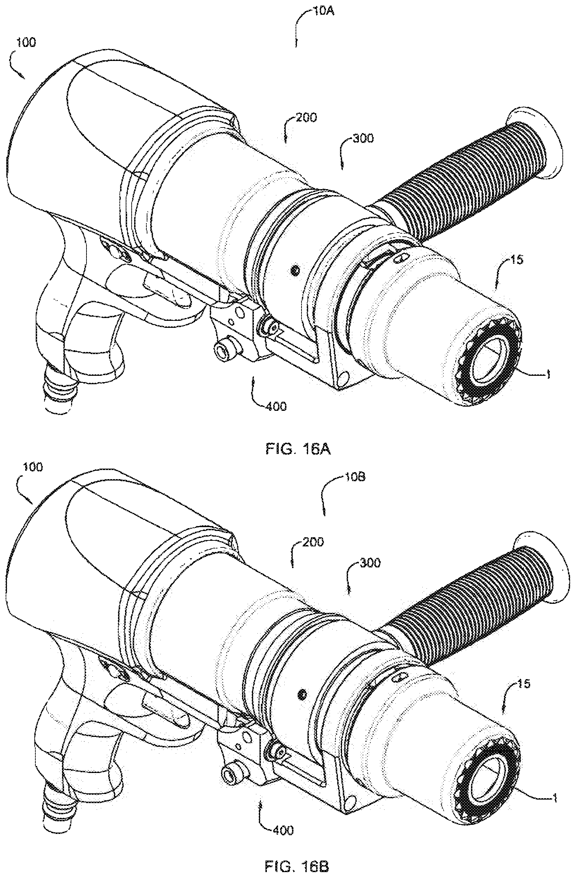

FIG. 16A is a perspective view of an embodiment not belonging to the present invention in the form of tool 10A in a lower speed, higher torque ("LSHT") mode;

FIG. 16B is a perspective view of an embodiment not belonging to the present invention in the form of tool 10B in a higher speed, lower torque ("HSLT") mode;

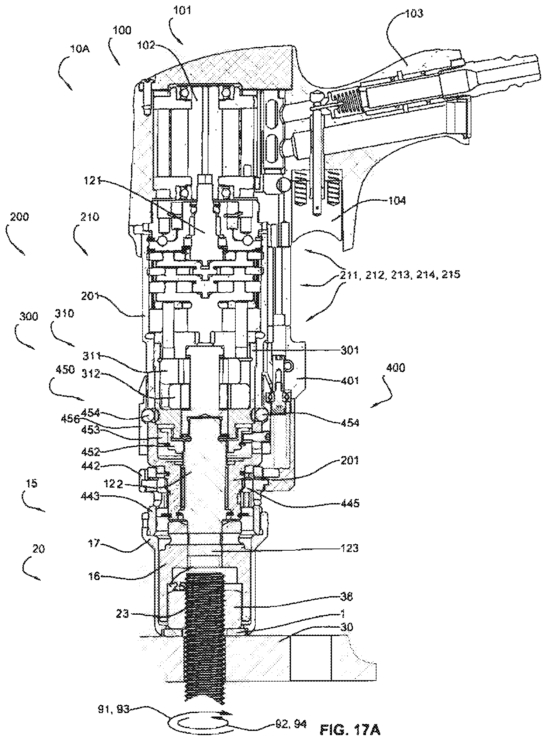

FIG. 17A is a side, cross-sectional view of tool 10A in LSHT mode not belonging to the present invention;

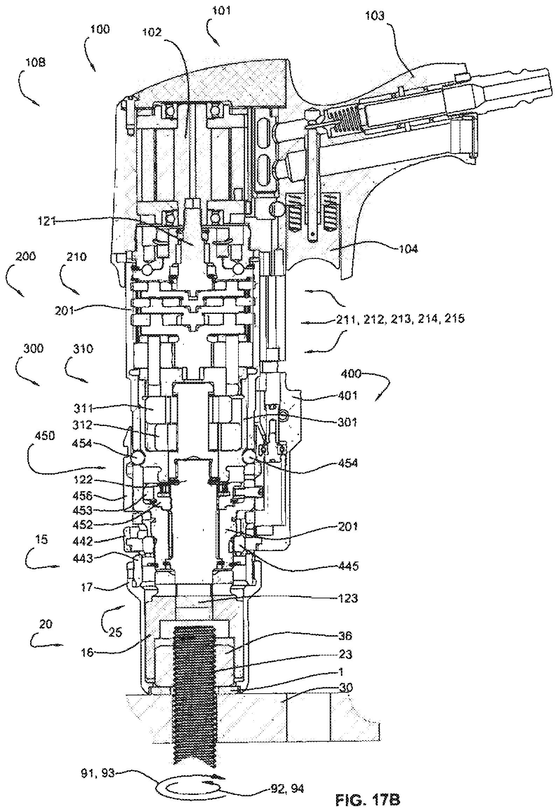

FIG. 17B is a side, cross-sectional view of tool 10B in HSLT mode not belonging to the present invention;

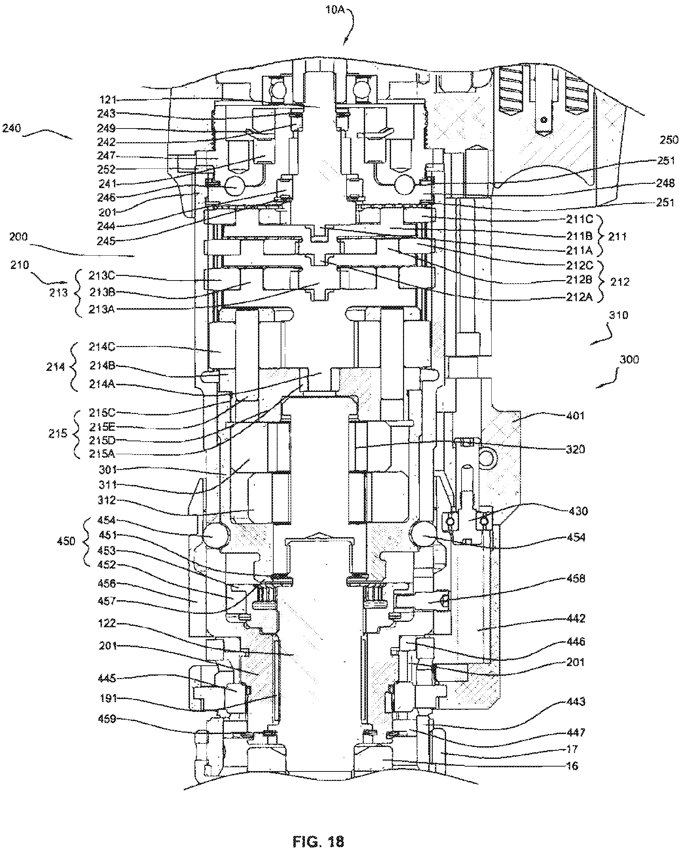

FIG. 18 is a side, cross-sectional view of a turning force multiplication assembly 200 and a vibration force assembly 300 of tool 10A in LSHT mode not belonging to the present invention;

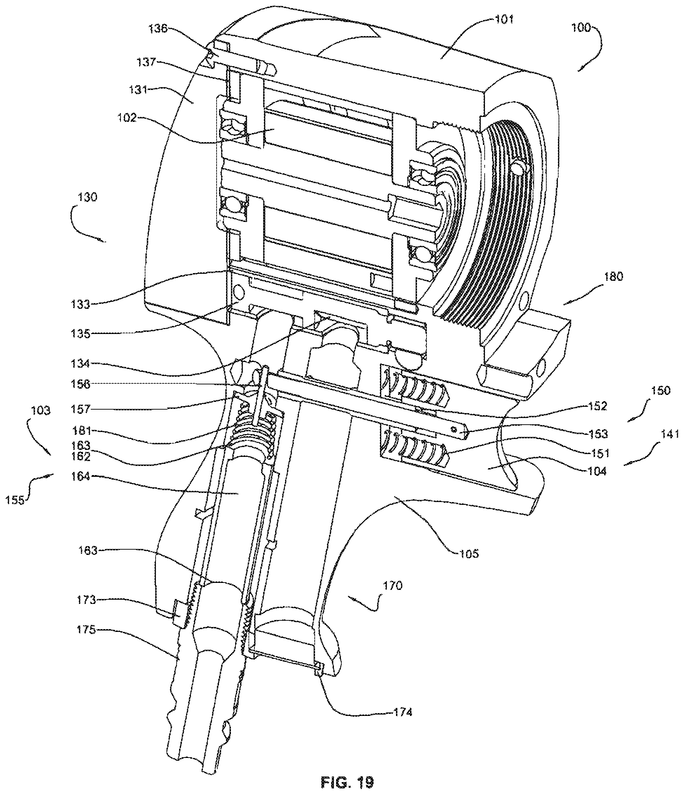

FIG. 19 is a perspective, cross-sectional view of a drive tool housing assembly 101, a drive tool handle assembly 103 and related internal components of tool 10A and tool 10B not belonging to the present invention;

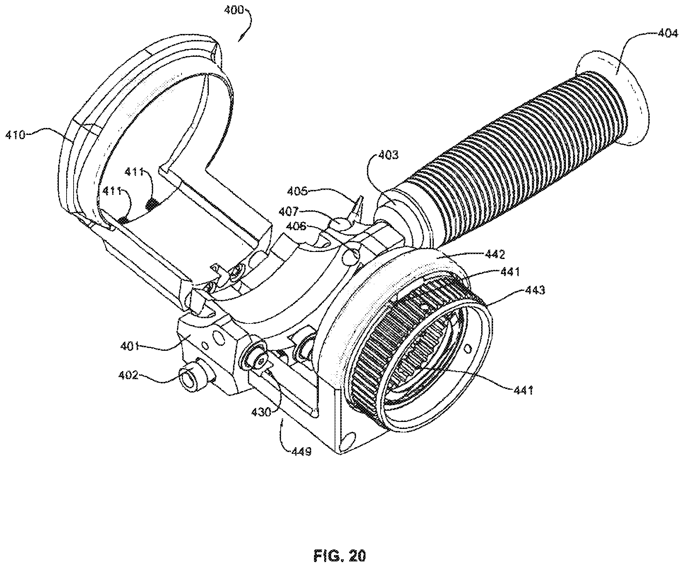

FIG. 20 is a perspective view of a mode shifting assembly 400 of tool 10A and tool 10B not belonging to the present invention;

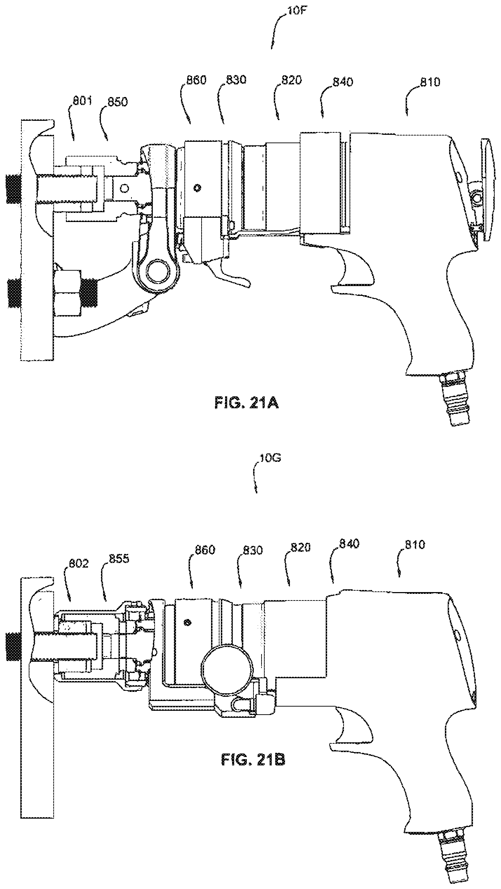

FIG. 21A is a side, cross-sectional view of an embodiment not belonging to the present invention in the form of a tool 10F;

FIG. 21B is a side, cross-sectional view of an embodiment not belonging to the present invention in the form of a tool 10G;

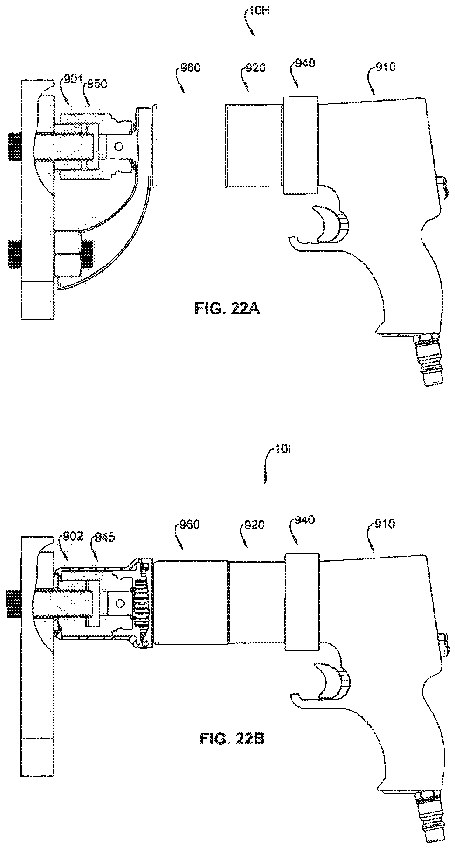

FIG. 22A is a side, cross-sectional view of an embodiment not belonging to the present invention in the form of a tool 10H;

FIG. 22B is a side, cross-sectional view of an embodiment not belonging to the present invention in the form of a tool 101;

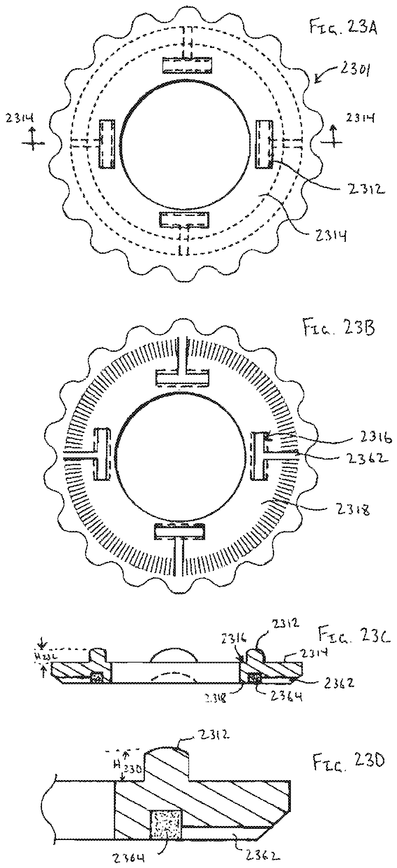

FIG. 23A is a top view of an embodiment not belonging to the present invention in the form of a Z®-Squirter® Washer 2301 for direct tension indication;

FIG. 23B is a bottom view of washer 2301 not belonging to the present invention;

FIG. 23C is a cross-sectional view of washer 2301 taken along line 2314 of

FIG. 23A not belonging to the present invention;

FIG. 23D is an enlarged view of a portion of FIG. 23C not belonging to the present invention;

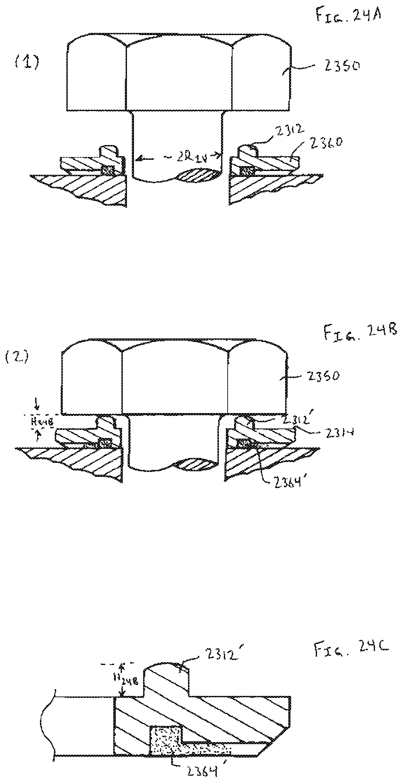

FIGs. 24A-24F illustrate the state of washer 2301 during the installation process not belonging to the present invention;

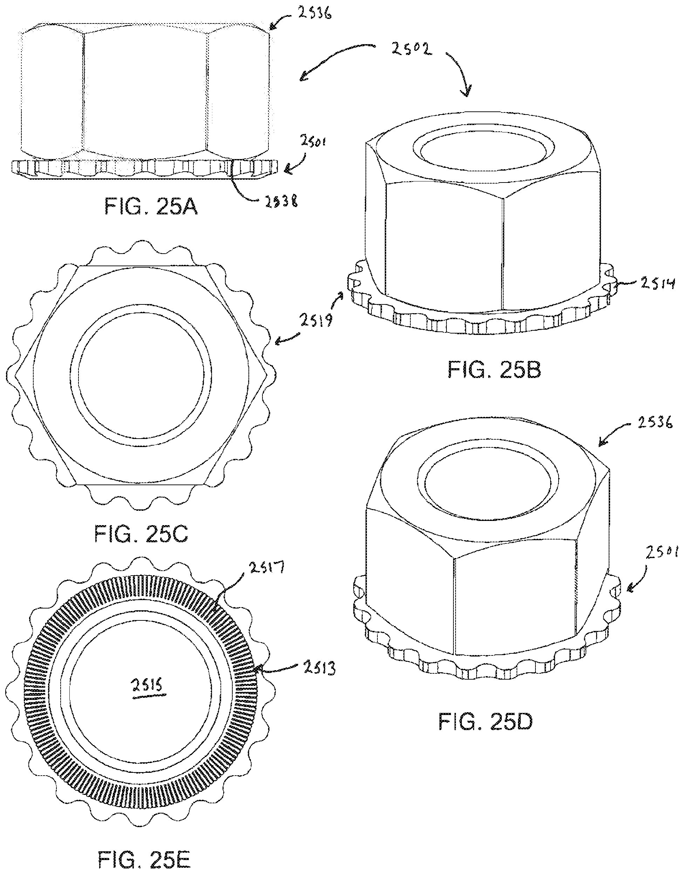

FIGs. 25A-25E are multiple views of an embodiment not belonging to the present invention in the form of HYTORC® Z® Washer and nut assembly 2502;

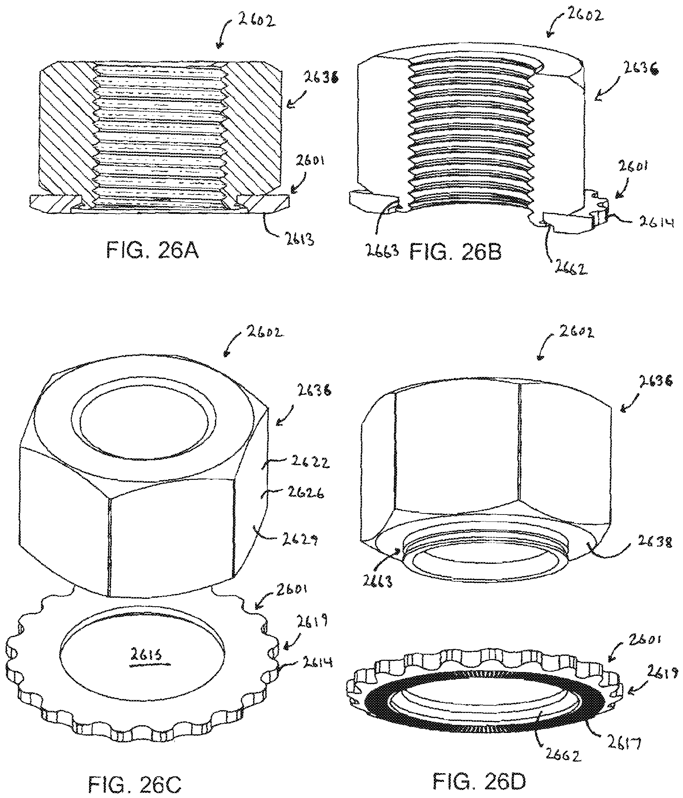

FIGs. 26A-26D are multiple views of an embodiment not belonging to the present invention in the form of HYTORC® Z® Washer and nut assembly 2602;

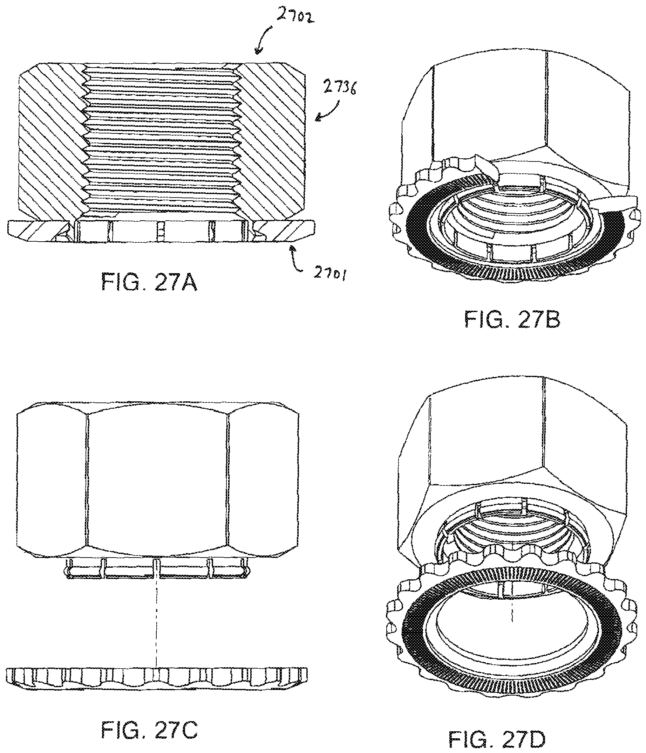

FIGs. 27A-27D are multiple views of an embodiment not belonging to the present invention in the form of HYTORC® Z® Washer and nut assembly 2702;

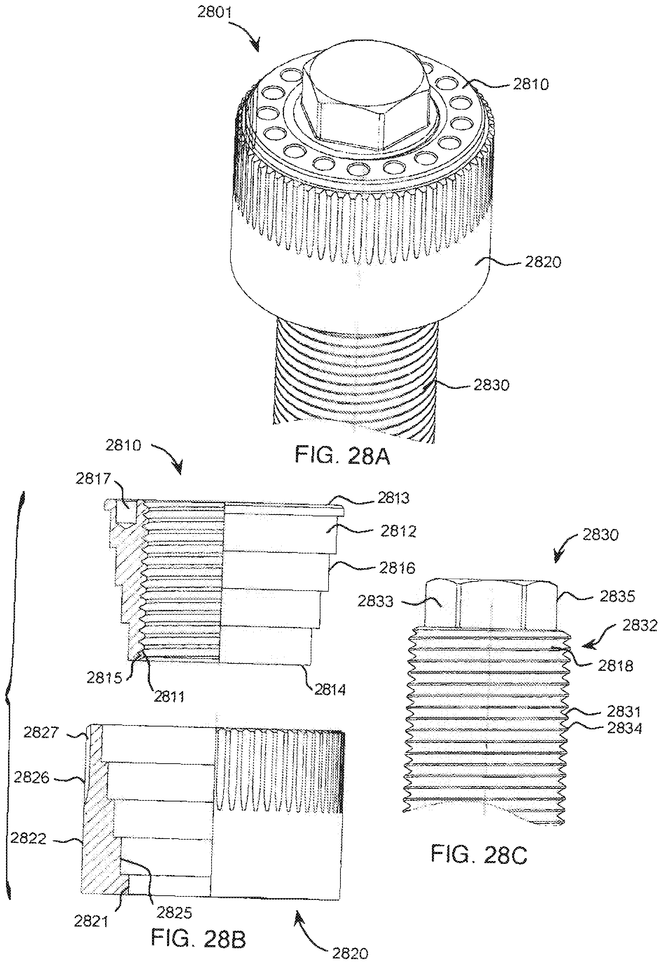

FIG. 28A is a perspective view of a threaded fastener with an embodiment not belonging to the present invention in the form of a two-part conical nut assembly 2801;

FIGs. 28B-28C are side and/or cross-sectional views of an inner sleeve and an outer sleeve of and a threaded fastener for use with two-part conical nut assembly 2801 not belonging to the present invention;

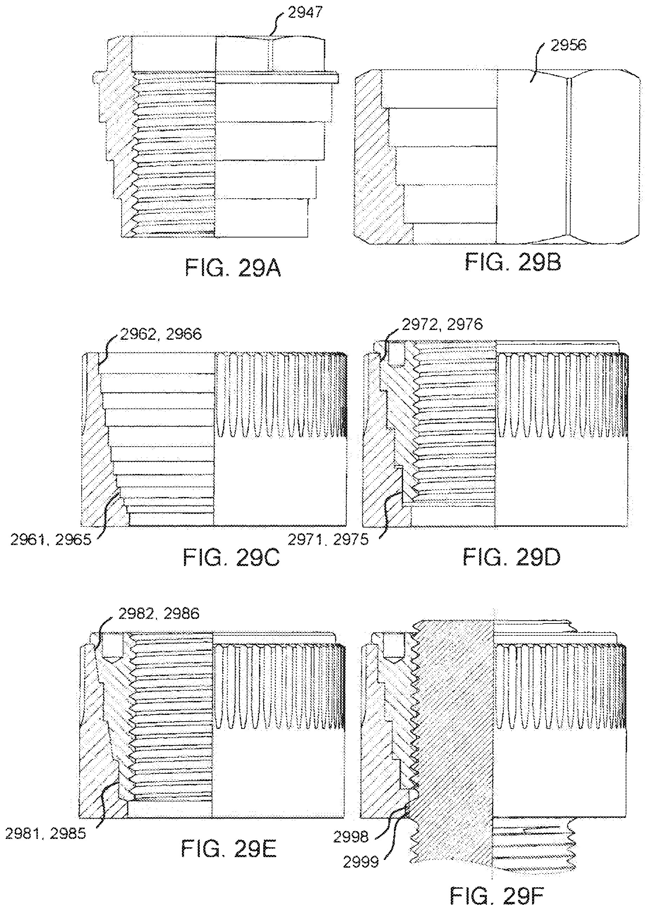

FIGs. 29A-29F are side, cross-sectional views of various embodiments of two-part conical nut assemblies of the present invention with varied step quantities, dimensions, geometries, angles and/or intervals not belonging to the present invention;

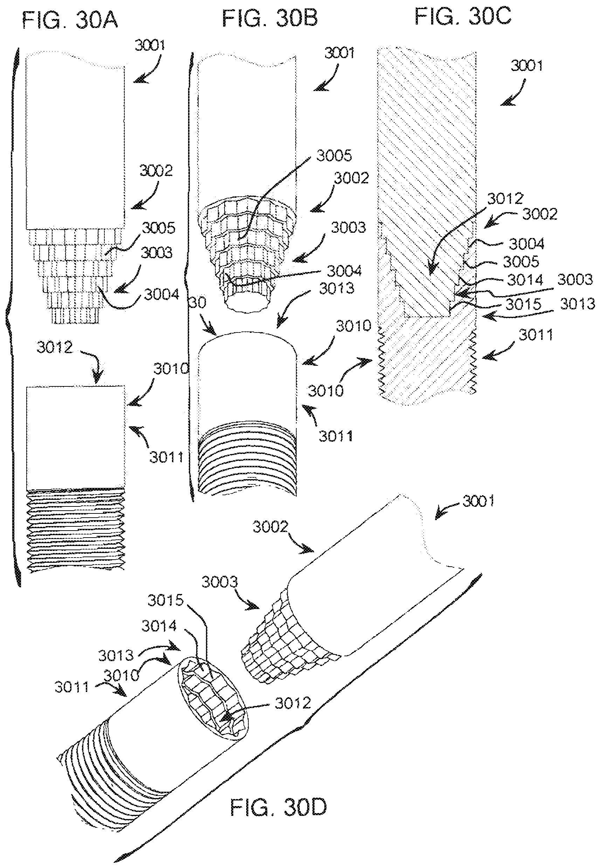

FIGs. 30A-30D are multiple views of an embodiment not belonging to the present invention in the form of apparatus 3001 for torsionally coupling a threaded fastener 3010 and a torque input device 3002;

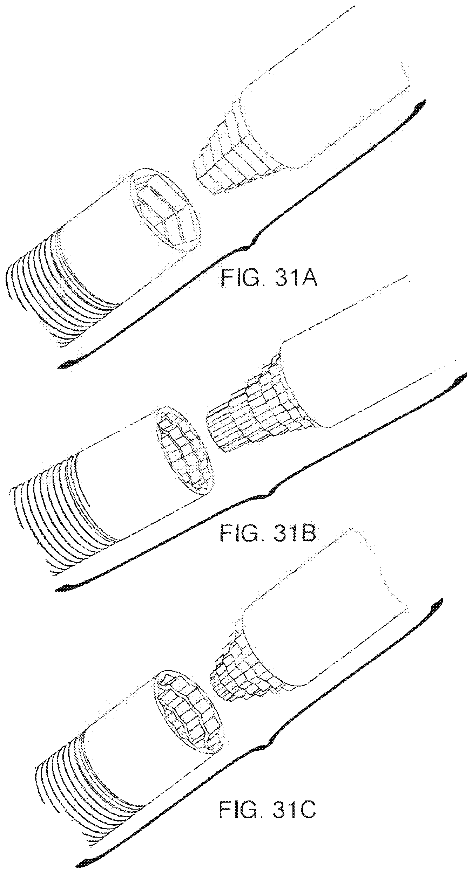

FIGs. 31A-31C are perspective views of various embodiments of apparatus for torsionally coupling a threaded fastener and a torque input device not belonging to the present invention with varied step quantities, dimensions, geometries, angles and/or intervals;

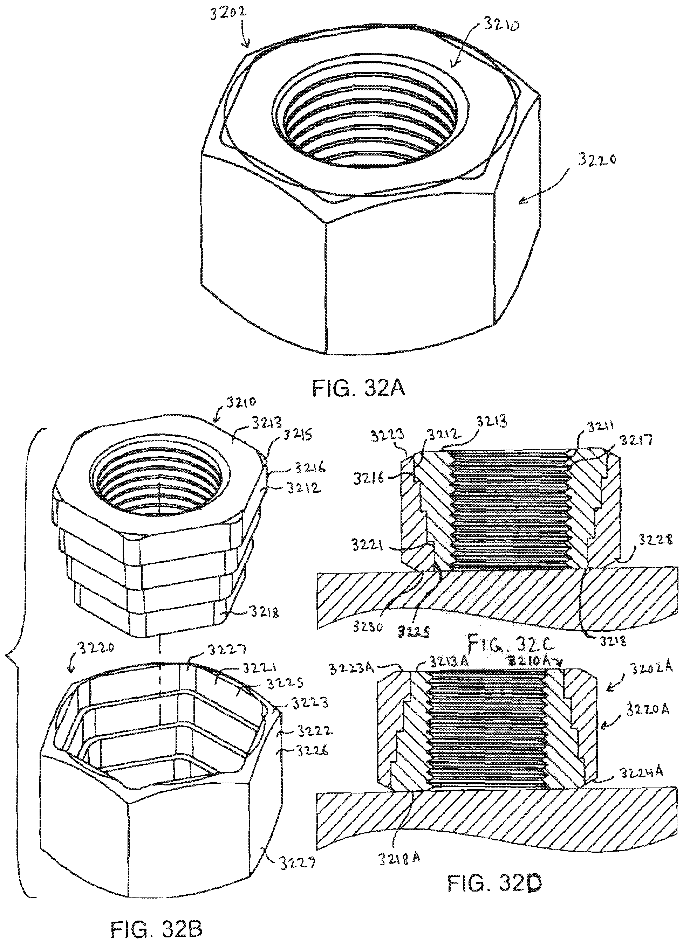

FIGs. 32A-32D are multiple views of an embodiment not belonging to the present invention in the form of a two-part tapered nut assembly 3202;

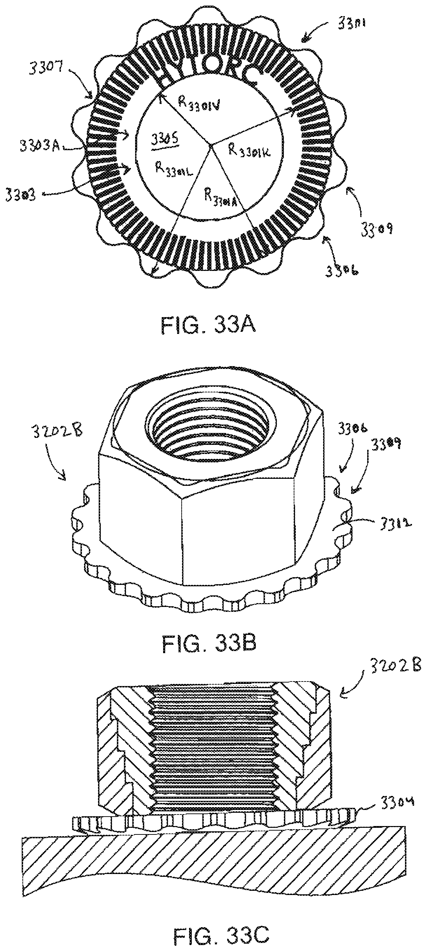

FIGs. 33A-33C are multiple views of an embodiment not belonging to the present invention in the form of HYTORC® Z® Washer and two-part tapered nut assembly 3202B;

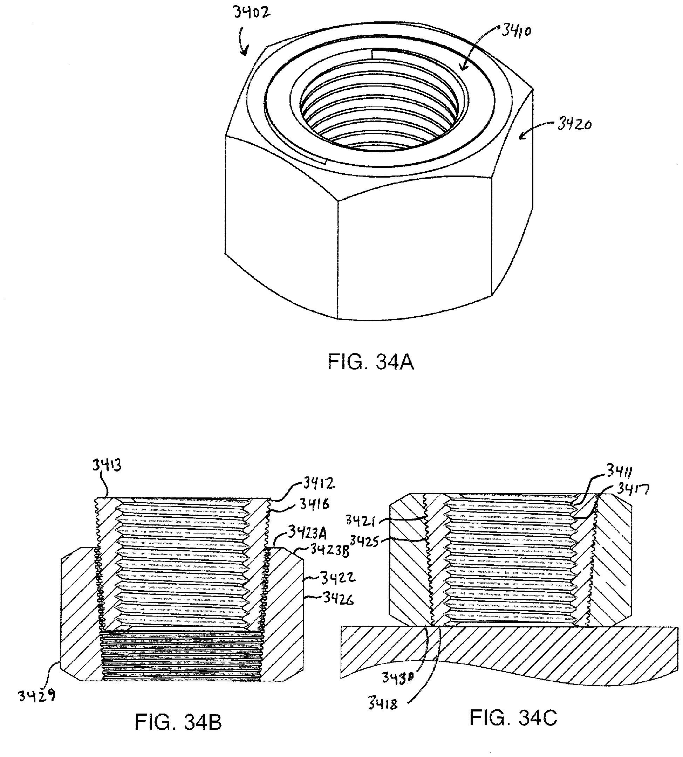

FIGs. 34A-34C are multiple views of an embodiment of the present invention in the form of a two-part tapered threaded nut assembly 3402; and

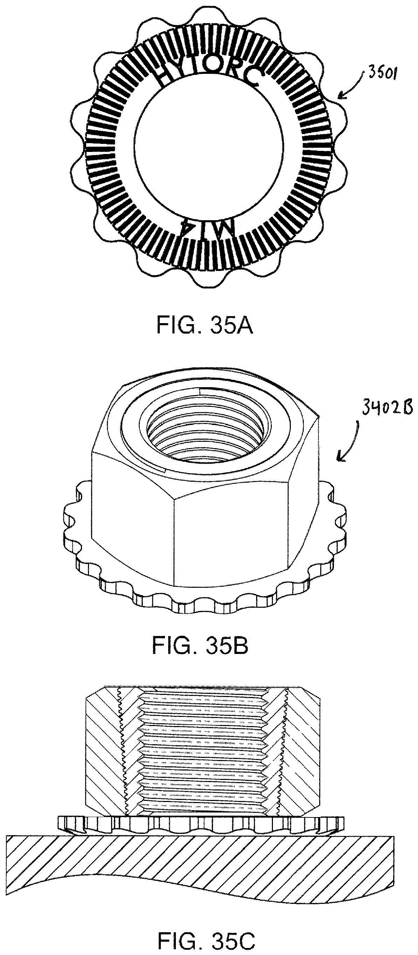

FIGs. 35A-35C are multiple views of an embodiment of the present invention in the form of HYTORC® Z® Washer and two-part tapered nut assembly 3402B.

**The** HYTORC® Z® System. This Application seeks to protect Applicant's HYTORC® Z® System which involves: tools having multi-speed / multi-torque modes with torque multiplication and vibration mechanisms without use of external reaction abutments; a force transfer means to yield in-line co-axial action and reaction for use with such tools; driving means and shifting means capable of attaching to washers under the nut for use with such tools and force transfer means; associated washers and fasteners for use with such tools, force transfer means and driving means; and related accessories for use with such tools, force transfer means, driving means, washers and fasteners.
The HYTORC® Z® System includes the following: Z® Washers located under nuts or bolt heads of various types having engageable perimeters of multiple shapes, sizes, geometries and serrations, such as washer/fastener radius engagement differentials, and frictionally biased faces with relatively higher friction against the flange surface and relatively lower friction against the nut, such as friction coefficient increasing treatment means of various types, sizes and locations; HYTORC Z® Guns incorporating a powerful impact mechanism and a precise torque multiplier in the same tool combining rapid run-down with calibrated torque; HYTORC®Z® Sockets with dual drive coaxial action and reaction having outer sleeves to react on Z® Washers and an inner sleeves to turn nuts or bolt heads; HYTORC®Z® Spline Adapters and Reaction Plates for backwards compatibility with HYTORC®'s torque/tension systems including the AVANTI® and ICE® square drive systems, the STEALTH® limited clearance system, the pneumatic jGUN® series, the FLASH® Gun and LITHIUM Series electric multipliers and more; the combination of HYTORC® Z® Washer and the HYTORC® Z® Dual Friction Washer™ including a dual friction-enhanced face washer and/or the HYTORC® Z® Nut/Bolt for counter-torque under a nut or bolt head on the other side of the joint; HYTORC®Z® Dual Drive Offset Links for tight clearances while using HYTORC®'s torque/tension systems; HYTORC®Z® Vibration Mechanisms applied thereof; Z®-Squirter® Washers; HYTORC® Z® Washer and Nut Assemblies; and any combinations thereof. Further disclosures include: Tapered Fastener Assemblies; Tapered Torsional Couplings; Two-Part Tapered Nut Assemblies; and Two-Part Tapered Thread Nut Assemblies.

The HYTORC® Z® Washer. International bolting standards call for hardened washers to be placed under industrial threaded fasteners. HYTORC® Z® Washers are hardened washers, proprietary to the Applicant, that become the reaction point directly under the nut or bolt head of the fastener during tightening and/or loosening. HYTORC® Z® Washers are used with industrial threaded fasteners of the kind having a coaxial reaction surface, a stud and either a nut threadedly engageable with the stud or a stud-head connected to the stud. They eliminate any possible pinch points for operators' appendages. Operators need not search for satisfactory stationary objects in which to react. Straight, co-axial tensioning all but eliminates bending and/or side loading of the stud. They provide a smooth, consistent, low-friction top surface on which turns the nut or bolt head; the top has a polished surface against which the nut or bolt head will turn. They provide a friction enhanced bottom surface against which the tool will react.

Z® Washers protect flange surfaces from damage or embedment and evenly distribute bolt load around the joint due to larger surface area. They can be made in a full range of inch and metric sizes from a full range of materials options for every application. They comply with all ASME, ASTM and API requirements for dimensions, hardness, and thickness. They work with pneumatic, hydraulic, electric and manual torque tools. And with the addition of a companion friction washer, it eliminates the need for a backup wrench to prevent the opposite nut from turning along with the bolt.

Applicant's recent Z®Washer-related research and development includes prototyping and experimentally evaluating different: thicknesses; outer engagement sizes; outer engagement geometries and serrations; low friction coatings and treatments on fastener engaging (top) sides; sizes, shapes and locations of friction enhancements, like knurl patterns, on flange engaging (bottom) sides; chamfers sizes and shapes on bottom, top, inside and outside faces; material specifications; and heat-treatment specifications.

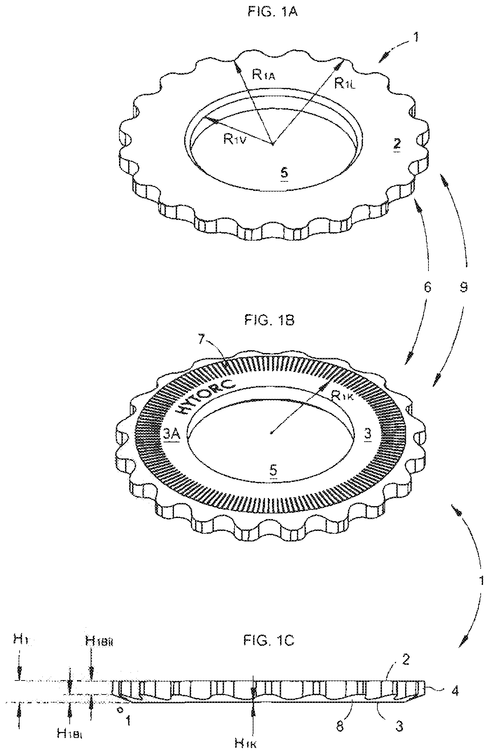

FIG. 1A shows a first embodiment of a HYTORC® Z®Washer 1 for use with HYTORC®'s torque/tension systems. It is a perspective view of a top side, or top bearing face, 2 of washer 1. FIG. 1B shows a perspective view of a bottom side, or a bottom bearing face, 3 of washer 1. And FIG. 1C shows a side view of an edge side, or side bearing face, 4 of washer 1.

Generally washer 1 is an annular shape having an internal void 5. As shown in FIGs. 1, washer 1's annular shape includes radially extending lobes 6 which forms a flower-like shape. Generally a top bearing face 2 is smooth with relatively lower surface friction against the nut or bolt head. Note that lubricants may be used on top bearing face 2 to lower surface friction between it and the nut, bolt head or any other such threaded fastener. A bottom bearing face 3 is textured with relatively higher surface friction against the flange surface. Bottom bearing face 3 is shown having a smooth inner surface 3A and rough frictional enhancements, such as knurls, 7 with higher surface friction. Radial raised knurl pattern 7 increases the surface friction of bottom bearing face 3. In the illustrated embodiment, knurled surface 7 takes the form of a ring or annulus located beyond smooth surface 3A. Outer lobes 6 include angled bevel faces 8 formed between bottom bearing face 3 and side bearing face 4.

Washer 1 has, inter alia, annular radius $R_{1A}$, a lobe radius $R_{1L}$, a knurl radius $R_{1K}$ and a void radius $R_{1V}$. Washer 1 has a height $H_1$, a first bevel height $H_{1Bi}$, a second bevel height $H_{1Bii}$, a knurl height $H_{1K}$ and a bevel angle $°_1$.

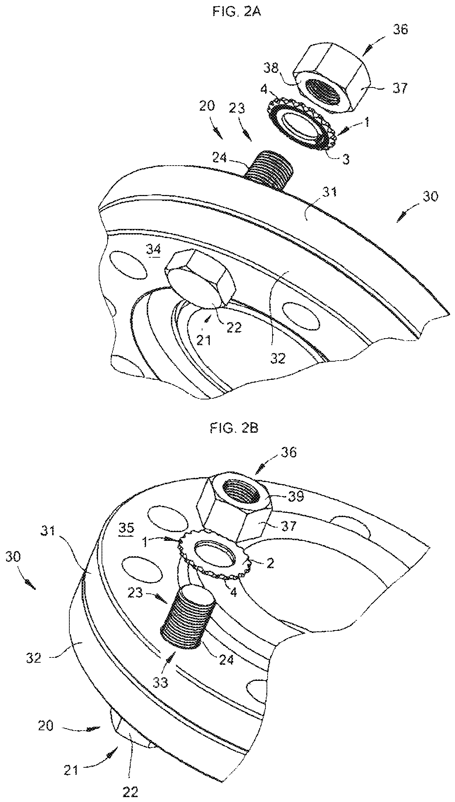

FIG. 2A shows an upward facing perspective view and FIG. 2B shows a downward facing perspective view of a joint 30 to be closed. Joint 30 includes a first member 31 and a second member 32 which are fastened in face-to-face relation by a fastener 20, commonly known in the art as a bolt. Fastener 20 has a first end 21 having a bolt head 22 and a second end 23 having a thread engagement 24. Second end 23 of fastener 20 is inserted through an opening 33 in first and second members 31 and 32 that extends from a bearing face 34 of second member 32 to a bearing face 35 of first member 32. In preparation of a tightening process, washer 1 is placed over second end 23 with bottom bearing face 3 toward bearing face 35. Threaded nut 36 is placed over second end 23.

The Z® Washer is used on only one side of the joint and no other washer should be used under it. Normal bolt and nut lubrication practices should be followed. Lubricant is only necessary on the bolt threads and between the nut or bolt head and the top of the Z® Washer, and should not be used between the washer and the flange. Note that the correct torque value for any given bolt is heavily dependent upon the lubricant used. Normally no lubricant is necessary on the back-side nut or bolt head.

Typical industrial bolting practice is to adjust the stud so that when it is tightened the top end will protrude 2-3 threads above the nut. This is for inspection purposes to ensure that the nut and stud are fully engaged. There is usually no reason for the stud to extend more than this, and any excess length should be adjusted to the other side of the flange so that the socket can engage the entire nut without obstruction. It is permissible in areas of high corrosion for the stud to be flush with the nut after tightening to lessen the risk of thread damage and so that the nut can be more easily removed. Advantageously washer 1 thickness is ideal. If the washer was excessively thick, the fastener system would have insufficient male threads available. Conversely, if the washer was insufficiently thick, it could fail under high compressive loads.

**The HYTORC® Z® Gun (In General)**. A reaction arm-free power tool for gall-minimized tightening and/or loosening of an industrial threaded fastener of the kind having a coaxial reaction surface, a stud and either a nut threadedly engageable with the stud or a stud-head connected to the stud includes: a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance.

Standard air impact wrenches hammer the bolt with uncontrolled force with high noise and excessive vibration. The HYTORC Z®Gun is a precision torque multiplier which produces consistent and measured power on bolt after bolt without the uncontrolled force, high noise and/or excessive vibration of standard air impact wrenches. The Z® Gun is the first torque-accurate reaction arm-free pneumatic bolting tool in the world. It ensures even and accurate bolt load. The Z® Gun incorporates a powerful impact mechanism and a precise torque multiplier in the same tool combining rapid run-down with calibrated torque. It is operated by a pistol grip trigger and features a directional control switch for tightening or loosening, a speed selection handle for high and low speeds, and a self-reacting socket drive which engages the Z® Washer under the nut. The impact mechanism zips nuts on or off regardless of corrosion or thread flaws. The torque multiplier mechanism breaks out fasteners or tightens them down. It works with the Z® Washer so no external reaction arms, no pinch points and no inaccurate side loads. It does any bolting job faster, safer and better than ever before, all with one tool.

The Z® Gun has built in dual-speed capability that is controlled by simply and quickly shifting from high speed rundown mode to low-speed torqueing power and back again. In the high speed mode the dual socket rotates at several hundred revolutions per minute but torque is limited so that the tool cannot spin or kick back in the operator's hands. Shifting the selector upwards locks the tool in to the power/torque mode and the nut or bolt is tightened to the desired torque automatically, based on calibrated pneumatic fluid pressures.

Advantageously, the Z®Gun addresses industrial concerns and issues with hydraulic, pneumatic or electric torque intensifying tools. It: maximizes the benefits of and eliminates the detriments of torque and tension; maximizes the benefits of and eliminates the detriments of HYTORC NUT™, HYTORC WASHER™, HYTORC® AVANTI®, HYTORC® XXI®, HYTORC® jGUN®, HYTORC® FLIP-Gun® and HYTORC®THRILL®-which can gall thread engagements due to side load and accumulation of dried up corrosion; minimizes operator vibration exposure; provides higher inertia in the intermittent force mode due to a higher mass from cooperation between the multiplication and impaction mechanisms, which increases the torque output of the impaction mechanism; runs down and runs off fasteners at higher speed without the use of a reaction arm even when a torque higher than the one absorbable by an operator is required to overcome adverse bolting application characteristics; loosens highly torqued and/or corroded fasteners stuck to their joints and tightens fasteners to a desired higher and more precise torque with use of a coaxial reaction surface in the higher resistance torque mode. The vibration force mechanism can be activated while the nut is tight to pulverize dried corrosion before applying full torque to the nut for loosening. This results in less torque necessary to loosen the industrial threaded fastener, and the pulverized dried grease does not pile up or concentrate on portions of threads. In addition during tightening and loosening the nut stays parallel to the joint face and threads are not subjected to the enormous and irregular side load making the facial and thread friction more consistent. This assures a more even torque load and thus, even joint compression to avoid leaks and gasket failure in tightening. Furthermore tool use is simplified, risk of operator error reduced and operator safety increased.

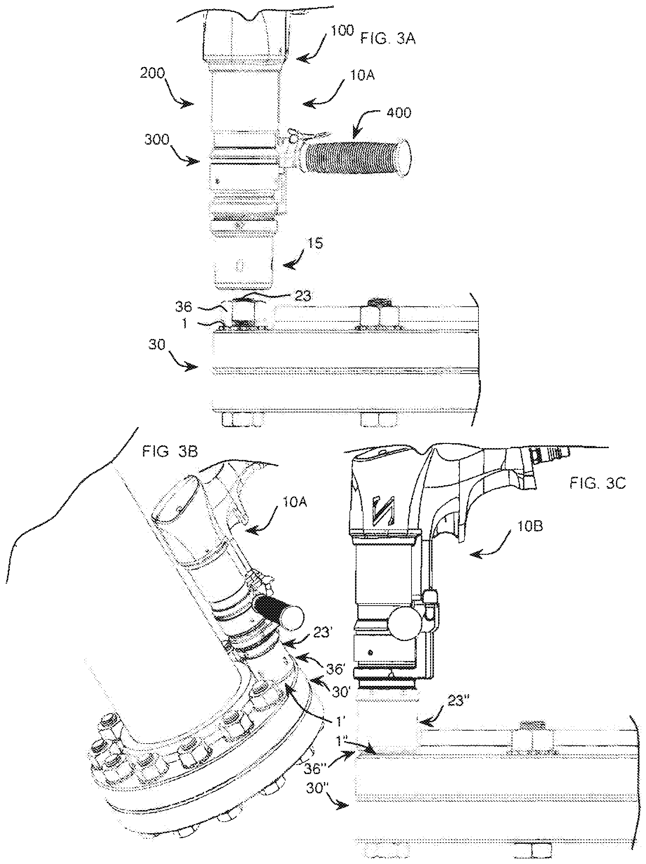

Industrial threaded fastener 20 is typically tightened using a torque, tension and/or torque and tension tool hydraulically, pneumatically or electrically driven. FIGs. 3A, 3B and 3C show a reaction arm-free power tool 10, the HYTORC® Z® Gun, for gall-minimized tightening and/or loosening of fastener 20. Tool 10 includes a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance. Note that tool 10 operates in a higher speed, lower torque ("HSLT") mode, as shown as tool 10A of FIGs. 3A and 3B, and a lower speed, higher torque ("LSHT") mode, as shown as tool 10B of FIG. 3C.

Tool 10A of FIGs. 3A and 3B and tool 10B of FIG. 3C includes: a drive input and output assembly 100; a turning force multiplication assembly 200; a vibration force assembly 300; a mode shifting assembly 400; and a dual drive output and reaction socket assembly 15, such as the HYTORC® Z® Socket.

In HSLT mode tool 10A either: compresses washer 1 between seated nut 36 on pre-loaded fastener 20 on pre-tightened joint 30 to a pre-determined pre-tightening torque; decompresses washer 1 between nut 36 on unloaded fastener 20 on loosened joint 30 from the pre-determined pre-tightening torque; and/or vibrates pressurized washer 1 between tightened nut 36 on loaded fastener 20 on tightened joint 30 to adequately pulverize bolt thread corrosion. In LSHT mode tool 10B either: pressurizes washer 1 between tightened nut 36 on loaded fastener 20 and tightened joint 30 to a pre-determined tightening torque; and/or compresses washer 1 between seated nut 36 on pre-loosened fastener 20 on pre-loosened joint 30 from the pre-determined tightening torque.

In HSLT mode tool 10A either: runs down either nut 36 or both nut 36 and washer 1 on fastener 20 with the turning force in the one direction to seat nut 36 and compress washer 1 on pre-loaded fastener 20 on pre-tightened joint 30 to a pre-determined pre-tightening torque; runs up either seated nut 36 or both seated nut 36 and compressed washer 1 on pre-loosened fastener 20 on pre-loosened joint 30 with the turning force in the opposite direction from the pre-determined pre-loosening torque; or vibrates (impacts) tightened nut 36 over pressurized washer 1 to apply vibration to adequately pulverize thread corrosion. In LSHT mode tool 10B either: tightens seated nut 36 on compressed washer 1 on pre-loaded fastener 20 on pre-tightened joint 30 with the turning force in the one direction to the pre-determined tightening torque and applies the reaction force in the opposite direction to compressed washer 1; or loosens tightened nut 36 over pressurized washer 1 on loaded fastener 20 on tightened joint 30 with the turning force in the opposite direction from the pre-determined tightening torque and applies the reaction force in the one direction to pressurized washer 1.

During operation tool 10B in LSHT mode switches to tool 10A in HSLT mode upon unseating nut 36 and decompressing washer 1 at the pre-determined pre-loosening torque. During operation tool 10A in HSLT switches to tool 10B in LSHT mode upon either: seating nut 36 and decompressing washer 1 at the pre-determined pre-tightening torque; or adequate pulverization of thread corrosion. Note that the operator uses mode-shifting assembly 400 to switch the tool from LSHT mode to the HSLT mode or visa versa. Note that mode shifting assembly 400 is a manual switch, but may be automatic. Similarly, note that activation or deactivation of vibration (impaction) force assembly 300 may occur either manually or automatically. Note that LSHT mode can be switched from torque regulated to vibration assisted or vice versa, and that HSLT mode can be switched from vibration regulated to torque assisted or vice versa. Note that vibration (impaction) force assembly 300 can continue operating even if washer 1 begins or ceases rotation. And note that LSHT mode may be vibration assisted for loosening nut 36 to help overcome chemical, heat and/or lubrication corrosion and avoid bolt thread galling.

Applying torque to a fastener creates facial friction, thread friction as well as bolt load. Friction and bolt load are inversely proportional: as friction increases, the amount of bolt load generated decreases. The speed at which a fastener is tightened has a pronounced affect on the magnitude of friction, and thereby bolt load generated in a joint to be closed. Advantageously the Z® Gun is able to utilize the principle that thread and under-head coefficients of friction decrease as rotation speed increases.

The Z® Gun operates, for example, as follows. Suppose a job requires tightening 1½" studs with 2⅜" nuts to 520 ft-lbs of torque using a Z® Gun-A1. The Z® Gun-A1 is used for ranges of 300-1200 ft-lbs of torque. The Z® Gun-A1 comes with a standard drive size of ¾" square drive and has dimensions (LxWxH) of 11.92" by 3.29" by 9.47". The drive output housing has radius of 1.98". The handle height and width are 6.94" and 2.12", respectively. The rundown and final torque RPMs range approximately from 4000 to 7, respectively. The turning force of the tool is determined by air pressure supplied by a filter/regulator/lubricator (FRL). The operator consults the corresponding pressure/torque conversion chart for this value. In this case, 520 ft-lbs of final torque corresponds to a pneumatic pressure 50 psi. The operator thus sets the air supply pressure of the FRL to 50 psi.

Per FIG. 3B, tool 10A runs down nut 36 until snug against the flange in HSLT mode. Washer 1' is compressed between seated nut 36' and seated joint 30'. In run down (HSLT) mode, the shifter (mode shifting assembly 400) is in the downward position and tool 10A is held with both hands.

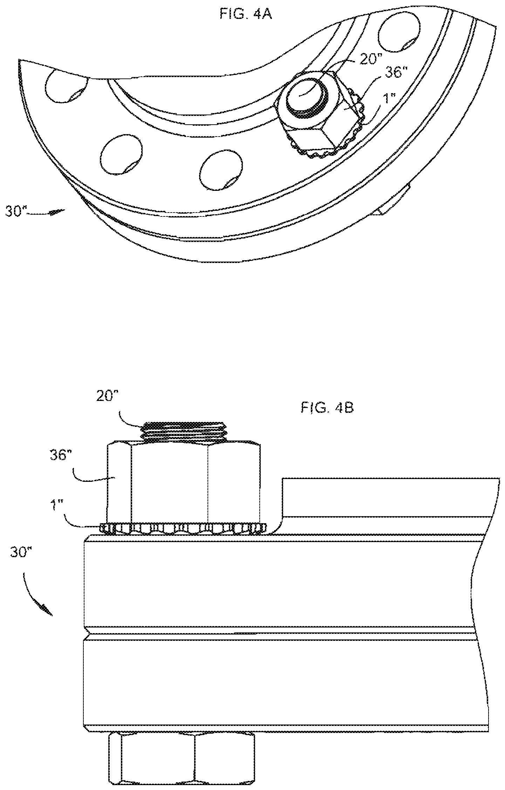

Per FIG. 3C, to begin torqueing in LSHT mode, the operator pulls shifter 400 toward him in the upward position. Seated nut 36' is engaged ensuring that outer reaction socket 17 fully encompasses compressed washer 1'. Note the lack of pinch points because both hands are safely out of the tightening zone around seated nut 36'. The operator depresses the trigger until tool 10B stalls and will no longer advance inner drive socket 16. The operator has applied 520 ft-lbs of torque to tightened nut 36" and pressurized washer 1", and every other nut will get the same tightening force as long as the FRL pressure is maintained. FIGs. 4A and 4B show a tightened joint 30" which includes tightened fastener 20", tightened nut 36" and pressurized washer 1".

Note that bevel faces 8 assist washer 1 in clearing weld fillets formed between flanges and pipes in joint 30 and other clearance issues. Further bevel faces 8 assist the outer reaction socket in engaging and rotatably coupling with washer 1. Bevel faces 8 may also accept modifications made to outer reaction socket 17 to allow for use on inverted bolting applications.

The operator reverses the process for removal of tightened nut 36", this time beginning in LSHT mode. The effects of time and corrosion can make nuts and/or bolts more difficult to remove than they were to tighten. Since achieving a specific torque value is not of concern in loosening, the operator may turn up the FRL air pressure to at or near its maximum, giving the tool nearly full power. A directional control is shifted to loosen. The operator applies tool 10B to the application and positions an inner drive socket 16 on tightened nut 36" and an outer reaction socket 17 on pressurized washer 1". The operator pulls speed-selector 400 upwards, activates tool 10B and proceeds to loosen tightened nut 36" until it can be turned by hand and react off of pressurized washers 1". The operator shifts speed-selector 400 to the HSLT position to run off nut 36. Recall that the vibration force mechanism can be activated while the nut is tight to pulverize dried corrosion before applying full torque to the nut for loosening. This results in less torque necessary to loosen the industrial threaded fastener, and the pulverized dried grease does not pile up or concentrate on portions of threads.

Note that portions of this specification associated with FIGs. 16-23 provide a thorough discussion of the HYTORC Z®Gun and related tools.

**HYTORC® Z® Sockets**. Z® Washer benefits are optimized when used with HYTORC® Z® Sockets having dual drive coaxial action and reaction. Outer sleeves react on Z® Washers and inner sleeves turn the nuts or bolt heads adjacent (on top of) the washers. Several dual socket systems proprietary to HYTORC® do exactly that. First and foremost, the Z® Gun having a Z® Socket is the fastest and easiest way to get all the benefits of this reaction-free technology. Portions of the outer socket surround the Z® Washer and rotatably couples with splines on the body of the torque tool. The inner socket connects to the tool's drive and turns the nut. The Z® Gun impact action runs the nut down rapidly and then shifts effortlessly to the controlled torqueing mode while reacting against the Z® Washer. There are no external pinch points or unwanted side loads. For the first time controlled torque is possible with an air tool, without sacrificing speed and flexibility. These proprietary socket assemblies exceed all of the applicable ANSI standards for toughness and safety and come in a full range of inch and metric sizes to fit any job.

Applicant disclosed important characteristics about washers in its HYTORC WASHER™-related patent filings. Washers positioned in the load path either turn with the nut (or bolt head) or stand still; never will washers turn in opposite direction as the nut due to facial friction and load compression. Applicant's innovation determined the efficacy of reacting off in-line washers. Notwithstanding friction benefits from the threaded insert, the HYTORC WASHER™ is viable because of this observation.

Generally joints to be closed are tightened by way of a bolt and a nut. The bolt, having a hardened washer adjacent its bolt head, is inserted through holes in the joint. The nut, having an adjacent geometrically engageable hardened washer, is screwed to the bolt. An inner action socket turns the nut and tightens the joint and an outer reaction socket transfers the tool's reaction force to the geometrically engageable hardened washer. As the action torque to the joint increases, the reaction force of the action torque proportionately increases. The rotatably coupled outer socket is geometrically engaged with the hardened washer that eliminates the rotation of the tool relative to the operator due to the reaction force.

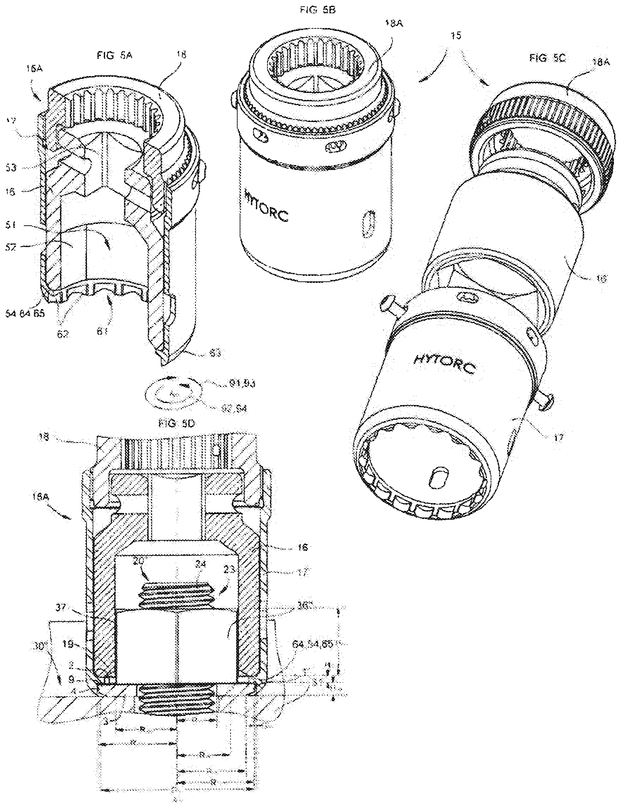

FIGs. 5A, 5B and 5C are perspective views of dual drive coaxial action and reaction assembly 15. FIG. 5A is an assembled cross section perspective view. FIG. 5B is an assembled perspective view. FIG. 5C is an exploded perspective view. FIG. 5D is a plan cross-section view of dual drive coaxial action and reaction socket assembly 15 on tightened joint 30".

In HSLT mode, as shown in FIGs. 3A and 3B, socket assembly 15 is substantially for transferring a vibrated form of a turning force to nut 36 and washer 1 in one direction. In LSHT mode, as shown in FIG. 3C, the results of which are shown in FIGs. 4A and 4B, socket assembly 15 is substantially for transferring a multiplied form of the turning force to nut 36 in the one direction and the corresponding multiplied form of a reaction force in another direction to washer 1, which acts as a stationary object.

Referring to FIG. 5A, inner drive socket 16 includes an inner edge 52 with a nut or bolt head engaging means 51. Outer reaction socket 17 has a lower inner edge 62 with a washer 1 engaging means 61 for engaging washer outer edge 4, or outer socket engaging means 9. Inner drive socket 16 is substantially disposed inside outer reaction socket 17. They are coupled together via a socket coupling means 18. The sockets cooperatively and relatively rotatable in opposite directions through the tool housing. Lower inner edge 62 and its washer 1 engaging means 61 and washer 1 outer edge 4 and its outer socket engaging means 9 are substantially vertical. Outer reaction socket 17 includes a lower outer edge 63 having a tapered surface inclined inwardly toward a bottom of lower inner edge 62. A bottom face 54 of inner socket 16 rotates on and/or over an upper face 64 of a lower inner edge 65 of outer socket 17. Note that socket coupling means 18 is designed for use with HYTORC®'s hydraulic square drive tools. Note that socket coupling means 18A is designed for use with HYTORC®'s pneumatic and electric torque guns, such as tool 10A (and 10B).

Washer 1 has, inter alia, annular radius $R_{1A}$, lobe radius $R_{1L}$, knurl radius $R_{1K}$ and a center bore radius $R_{1V}$. Washer 1 has a height $H_{1W}$, a first bevel height $H_{1Bi}$, a second bevel height $H_{1Bii}$, a knurl height $H_{1K}$ and a bevel angle °1. Nut 36 has a hex radius $R_{36N}$ and a height $H_{36N}$. Outer reaction socket 17 has washer engagement radius $R_{17W}$ that includes a washer/outer socket gap width $G_{1A}$ that assists outer reaction socket 17 in easily engaging washer 1. A void space 19 having separation height $H_{1L}$ provides sufficient clearance between inner and outer sockets 16 and 17. Inner socket 16 is free to rotate on upper face 64.

Note that any suitable engagement geometry will do, such as that disclosed in HYTORC®'s patents and patent applications.

But note U.S. Patent No. 8,631,724, having Issue Date of 21 January 2014, entitled "FASTENING SOCKETS, WASHERS AND FASTENERS USED WITH THE WASHERS AND THE FASTENING SOCKETS". Outer socket engagement means of the '724 patent do not engage with the outer surface of a washer, but merely an "outer edge portion", thereby increasing failure probabilities.

Outer reaction socket 17 of tool 10A is idle and inactive in HSLT mode. It is not spline engaged with housing of turning force multiplication assembly 200. Impaction and/or vibration force transmitters of vibration force assembly 300 are spline engaged to an output drive shaft, which turns inner drive socket 16 to run up or down nut 36 on fastener 20. Outer reaction socket 17 of tool 10B, however, is rotatably coupled and geometrically engaged with washer 1 under nut 36. Upon seating of nut 36', compressed washer 1' serves as the stationary object by which the housing of turning force multiplication assembly 200 reacts via reaction socket 17. With the housing of turning force multiplication assembly 300 held still, the turning force multiplication transmitters tighten seated nut 36" via the turning force output drive shaft. During operation of any embodiment of tools having reaction socket assemblies the drive socket turns either a nut or a bolt head. During operation of one embodiment of such a tool the reaction socket stands still during HSLT mode. During operation of another embodiment of such a tool the reaction socket turns in the same direction as the drive socket in HSLT mode but stands still in LSHT mode. And during operation of another embodiment of such a tool the reaction socket either stands still or turns in the opposite direction with the drive socket in HSLT but stands still in LSHT mode.

In other words the drive socket is always operatively connected with either the nut or the bolt head during all torque modes from lower resistance to higher resistance. And the reaction socket is either: operatively connected to the housing and the coaxial reaction surface to transfer a reaction force to the coaxial reaction surface during the higher resistance torque mode; operatively connected to the housing and the coaxial reaction surface during either the lower resistance torque mode or the intermittent force mode; or operatively connected to the housing and operatively disconnected from the coaxial reaction surface during either the lower resistance torque mode or the intermittent force mode.

In other words a torque power tool includes: a drive means to connect with a drive socket of a dual drive coaxial action and reaction socket assembly to turn a nut or a bolt head; a reaction means to connect with a reaction socket of the dual drive coaxial action and reaction socket assembly to pass on the reaction force to a washer; a connecting means between the drive and reaction means; at least two modes of operation including a high speed low torque mode and a low speed high torque mode; wherein the drive socket is turned in one direction by the drive means during both the low speed high torque mode and the high speed low torque mode; wherein the reaction socket is turned in the one direction when the connecting means between the drive and the reaction means is activated in the high speed low torque mode but does not turn the washer when the connecting means is deactivated in the high torque low speed mode.

And in other words a torque power tool includes: a drive means for connecting a drive socket to a nut or a bolt head; a first reaction means and a second reaction means for connecting a reaction socket to a washer; at least two modes of operation - a high speed low torque mode and a low speed high torque mode; wherein the drive socket is turned by the drive means during both modes of to turn the nut or the bolt head; wherein the reaction socket connects to a washer underneath the nut or the bolt head; a first reaction means which stops said reaction socket from turning in the low speed high torque mode while the washer takes up a higher magnitude reaction force; and a second reaction means which stops the reaction socket from turning in the high speed low torque mode while an operator takes up a lower magnitude reaction force. In this case, a turning force multiplication assembly housing spline adaptor is the first reaction means. And a mode shifting assembly-switching arm having a spline adaptor is the second reaction means.

Dual sockets, particularly reaction sleeves (sockets) were developed for use in conjunction with all of HYTORC®'s electric, hydraulic, and pneumatic torque/tension systems. It was necessary to minimize outside diameters of reaction sleeves to provide maximum clearance between tool reaction systems and the surrounding fastener environments. Minimizing outside diameters of reaction sleeves required minimizing outside diameters of action sockets too.

Generally numerous part geometries were devised for sleeves, sockets and adaptor rings. All potential components were prototyped and evaluated experimentally in HYTORC®'s research and development center. Quality tests included subjecting the parts to their particular application load for countless cycles. Various material and heat-treatment alternatives were also evaluated experimentally.

Note that portions of this specification associated with FIGs. 16-23 provide additional discussion of the HYTORC Z® Sockets.

**HYTORC® Z® Washer** - **Fastener Radial Engagement Differential.** In torque tools with reaction fixtures of the prior art, reaction torque is equal and opposite to the action torque. But the reaction force applied by the reaction arm is far greater on a nearby stationary object. The reaction force is multiplied by distance, the reaction arm length. Indeed side load, or reaction abutment force, for a tool may range from 2x to 4x its torque output at abutment points of a distance of, for example, ½ foot from the turning force axis of the drive. That greater reaction force is concentrated at only that one location. Naturally shorter reaction arms transfer smaller reaction abutment force to abutment points closer to the turning force axis of the drive. It stands to reason that an extremely short reaction arm would transfer a reaction abutment force of similar, yet slightly larger, magnitude as the torque tool output because the abutment point is extremely close to the turning force axis of the drive.

Irregularities in threads yield adverse bolting characteristics. Among other detriments, side load causes the nut and bolt threads to engage with enormous force on the near side where it is applied such that the dried out grease gets piled up in that location when the nut is turned. Often only small fractions of total thread surface areas are engaged between the bolt and the nut. This causes bolt threads to gall, which requires substantially more torque and thus substantially more side load to loosen the nut. This chain of events often ruins bolt and nut threads. The fastener locks up or seizes at the point where all of the turning force is used by thread friction, which can lead to breakage of the fastener or the tool turning it.

The torque power tool originally used to tighten the fastener is often insufficient for loosening the same corroded fastener. Such corroded fasteners may require loosening torque values ranging from 2x to 4x higher than the tightening torque requiring a more powerful tool for breakout loosening. High temperature bolting applications such as, for example, in turbines and casings, are usually critical requiring either stainless or precision manufactured fasteners with extremely high replacement costs. In addition the use of fine thread bolts, which is popular as of late, multiplies this problem.

Similarly reaction torque is equal and opposite to action torque in HYTORC® dual drive coaxial action and reaction socket assembly. But the reaction force intensification characteristic is applicable too. Referring back to Applicant's HYTORC WASHER™ and SMARTWASHER™ related patent disclosures, these washers had substantially similar radius as that of the nut. Reaction forces applied to these washers were of similar magnitude as the equal and opposite reaction torque. This helps to explain why HYTORC WASHERs™ and SMARTWASHERs™ sometimes rotated with the nut or bolt head.

Industrial bolting professionals have recognized the necessity of using relatively similar fastener component sizes. In normal bolting operations it matters not whether the bolt head or the nut is torqued. This assumes, of course, that the bolt head and the nut face are of the same diameter and where contact surfaces are the same to yield the same coefficient of friction. If they are not then it does matter. Say the nut was flanged and the bolt head was not. If the tightening torque was determined assuming that the nut was to be tightened but the bolt head was subsequently tightened instead then the bolt could be overloaded. Typically 50% of the torque is used to overcome friction under the tightening surface. Hence a smaller friction radius will result in more torque going into the thread of the bolt and hence being over tightened. If the reverse were true, namely that the torque was determined assuming that the bolt head was to be tightened and then the nut was subsequently tightened, the bolt would be under tightened.

Just as an extremely long reaction arm applies an extremely greater reaction force to a nearby stationary object, an extremely short reaction arm applies a reaction abutment force of similar, yet slightly larger, magnitude as the torque tool output. In this sense outer reaction socket 17 can be considered a 360° reaction arm applying that reaction abutment force of similar, yet slightly larger, magnitude as the torque tool output infinitely around outer edge 4 of washer 1. Indeed outer reaction socket 17 applies a greater reaction abutment force to reaction washer 1 under nut 36. This is achievable only by having a slightly larger washer 1 - outer reaction socket 17 geometrically shaped engagement than a nut 36 - inner drive socket 16 geometrically shaped engagement. Applicant's fundamental observation about washers coupled with this new observation ensures a still washer in which to react.

Referring to FIG. 5D, outer edge 4 of pressurized washer 1" extends beyond an outer edge 37 of tightened nut 36". Notably a reaction force 92 acting in another direction 94 received by washer outer edge 4 is greater than an action torque 91 acting in one direction 93 received by nut 36. Pressurized washer 1" absorbs reaction force 92 of tool 10B such that tool 10B applies action torque 91 to seated nut 36' and applies a slightly greater but opposite reaction force 92 to washer outer edge 4. Seated nut 1' turns but compressed washer 1' stands still. This relative positioning, namely, that washer outside edge 4 is farther from the center of rotation, or turning force axis $A_{10}$, than nut outer edge 37, is one innovative aspect. Reaction force 92 acts through the effective lever arm of outer socket 17 a distance $R_{1A}$ away from turning force axis $A_{10}$ that tends to hold washer 1 still. As a result of the differential in radius of the outer polygonal engagements, washer 1 remains stationary on joint 30 rather than rotate with nut 36 as fastener 20 is tightened or loosened.

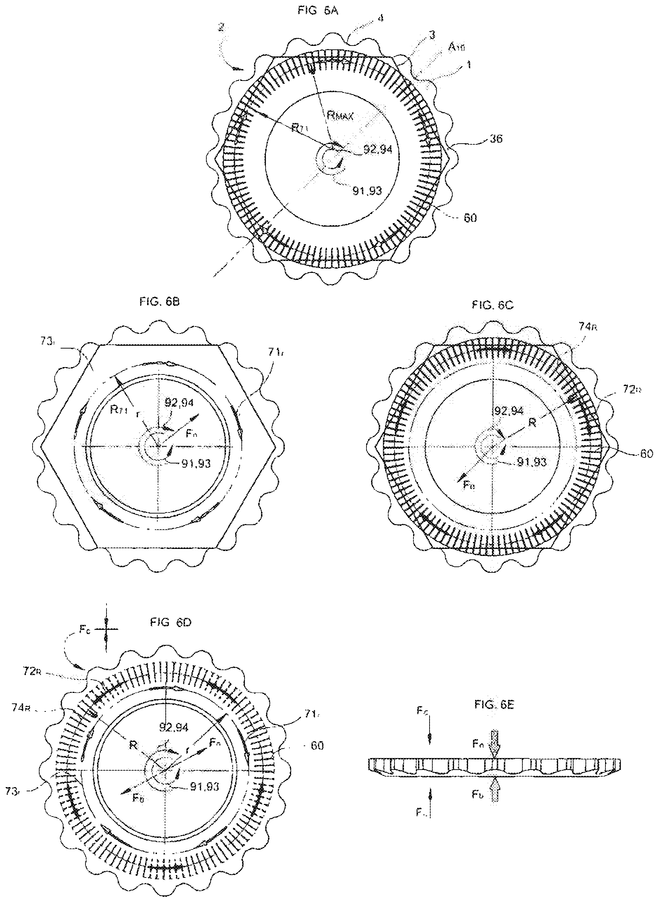

HYTORC® Z® Washer Friction Coefficient Increasing Treatment Means. Referring to FIGs. 6, this shows a bottom-up view of bottom bearing face 3 formed with friction coefficient increasing treatment means 60. Nut 36 is shown adjacent smooth top bearing face 2. Frictional forces are lower between nut 36 and washer 1 at the engagement of smooth contact surfaces 2 and 38 than the engagement of rough contact surface 3 and flange surface 30. Thus nut 36 tends to rotate and washer 1 tends to remain still.

FIGs. 6B, 6C, 6D and 6E explain this phenomena. FIG. 6B shows nut 36 being torqued and compressed against top bearing face 2 of washer 1. Top bearing face 2 and a bottom bearing face 38 of nut 1 are smooth. During a tightening process, a friction force $71_r$ between nut 36 and washer 1 acts in one direction 92. A compression force $F_n$ of nut 36 acts on washer 1 in a downward direction along turning force axis $A_{10}$. A radius r is an effective frictional radius, or the distance from turning force axis $A_{10}$ to a center of frictional area $73_r$ of bottom bearing face 38 of nut 36.

FIG. 6C shows washer 1 being compressed against bearing face 35 of joint 30. Bearing face 35 and bottom bearing face 3 of washer 1 are engaged frictionally and with load. During a tightening process, a friction force $72_R$ between washer 1 and joint 30 acts in another direction 93. A compression force $F_b$ of joint 30 acts on washer 1 in an upward direction along turning force axis $A_{10}$. A radius R is an effective frictional radius, or the distance from turning force axis $A_{10}$ to a center of frictional area $74_R$ of bottom bearing face 3 of washer 1.

FIG. 6D shows a combination of FIGs. 6B and 6C. FIG. 6E shows $F_n$ and $F_b$. A compression force $F_c$ generated by nut 36 tightening on fastener 20 is equal on both sides of washer 1 such that $F_n = F_b = F_c$. Friction force $(F_R) = \mu * F_c$,

where $\mu$ is the coefficient of friction. Note that the effective frictional radius of friction coefficient increasing treatment means 60, or R, is greater than the effective frictional radius of nut 36, or r, such that Fc * R > Fc * r. This means that the torque to overcome friction between nut 36 and washer 1 is smaller than the torque which would overcome the friction between friction coefficient increasing treatment means 60 of washer 1 and joint 30.

Referring back to the example in FIG. 6A, friction coefficient increasing treatment means 60 is shown, for example, as radial raised knurl pattern 7, having inner radius $R_7$. Radial raised knurl pattern 7 is shown positioned as far from turning force axis $A_{10}$ as feasible at a substantially maximum radius, $R_{MAX}$, to maximize torque ($\tau_{RMAX}$) while still below a compression area of nut 36. As the clamping force increases, knurl pattern 7 sets itself on the flange face 35 material, thereby resisting the attempt of washer 1 to rotate with nut 36. The coefficient of friction, $\mu$, remains constant and is multiplied by constant compression force $F_c$ to yield a constant friction force ($F_b$). The reaction torque ($\tau_R$) is F * R. Maximum torque can be achieved at substantially maximum radius, $R_{MAX}$, such that $\tau_{RMAX}$ = F * $R_{MAX}$. In other words, effective frictional radius, R, of washer 1 is greater than effective frictional radius, r, of nut 36. Generally effective friction radius of Z® Washers are greater than an effective friction radius of the nuts or bolt heads. Note that principles of mechanics (statics, dynamics, etc.) to describe traditional bolting applications and associated forces are well known in the art.

Explained another way, washer 1's resistance to sliding or rotating while reaction torque is applied is a function of the load and coefficient of friction. The following expressions depict the relationships between sliding force, friction, load and torque in a reaction washer:

$$\text{Sliding Force Resistance} = (\text{Coefficient of Friction}) \times (\text{Load})$$

$$F_R = \mu * F_N$$

where: $F_R$ = Force (Resistance), $\mu$ = Coefficient of Friction, and $F_N$ = Force Normal (Weight or Load).

In a threaded fastener the force to overcome friction and create sliding or rotation is a function of applied torque and the friction radius. So the force to create sliding can be expressed as:

$$F_S = (\text{Torque}) / (\text{Friction Radius})$$

$$F_S = \tau / r_F$$

where: $F_R$ = Force (Sliding), $\tau$ = Torque and $r_F$ = Effective Friction Radius. Therefore in a fastener:

$$F_S = F_R$$

$$\tau / r_F = \mu * F_N,$$

such that:

$$\tau = \mu * r_F * F_N$$

The above expression shows that the resistance to sliding under torque is function of the coefficient of friction, load and radius of the friction surface. This effective friction radius is usually taken as the mean of the central bore hole and outer bearing face radii. As the friction radius is increased the resistance to sliding or turning increases. It is therefore understood that a means of increasing the washer friction radius relative to the nut or bolt friction radius will anchor the washer relative nut or bolt. Because they are equal and opposite torque forces, reaction washers and nuts or bolts will always have identical applied bolt load torque forces. Coefficients of friction are identical in fasteners when similar materials and lubricants are applied throughout. By increasing the friction radius of the washer bearing face it can therefore be ensured that washers will remain anchored relative to nut or bolt in all fastening situations.

Biasing the bearing surface outward increases the washer friction radius. This can be done by adding surface features to the outermost area of the bearing face while neglecting the innermost areas. Because of high loads and typical embedment of mating surfaces only slight selective surface conditioning is required to effectively increase the friction radius.

The position and coverage area of friction coefficient increasing treatment means, for example the raised knurl feature, and its relation to the footprint of the nut or bolt head ensures effectiveness of the $Z^®$ System. The bottom surface of the washer includes outwardly positioned friction coefficient increasing treatments, defining a frictional portion for engagement with the surface of the joint. The frictional portion is disposed about an outer peripheral portion of the bottom surface and extends inwardly to a width less than the total width of the washer body. The frictionally enhanced surface tends to lock up the nut by maintaining bolt load, thereby preventing unintended loosening. In other words the bottom surface of the washer is roughened in order to assure substantial friction between the joint and the washer upon tightening or loosening of the fastener. Frictional forces developed between the washer and the joint are substantial and reliably serve to prevent the undesirable rotation of the washer upon loading and during the initial stage of unloading.

Unexpectedly experimentally repeatable performance is not possible if frictionally enhanced surface 7 covers completely or is positioned at or relatively near the central bore of lower surface 3 of washer 1. Most of the time, this configuration fails and washer 1 turns with nut 36.

The $Z^®$ Washer concept similarly works with merely an outer ring having friction coefficient increasing treatment means. It is not necessary to have both smooth inner portion, i.e. inner surface 3A, and a roughened outer portion. But the different surface textures of the underside of the washer does assist with frictional biasing on the bottom surface as a whole and between the bottom and the top sides of the washer.

This application seeks to define, claim and protect a reaction-type washer with frictional area shifted outward, e.g. a reaction washer friction radius outer biasing with respect to the nut. This produces a novel and unobvious shift of the friction surface radius preventing the washer from spinning before the nut. Prior art reaction-type washer without frictional biasing tended to spin, especially when used on hard surfaces. They were marginal in performance and worked only in ideal conditions on ideal surfaces. Spinning reaction-type washers undesirably caused damage to the flange faces, inefficient industrial bolting and system maintenance operations, and economic loss. Still washers with outer positioning of friction coefficient increasing treatment maintain unblemished flange faces, increase efficiencies of industrial bolting and system maintenance operations and minimize economic loss.

Relating back to FIG. 5D, relative washer / fastener radial engagement differentials, namely, that washer 1 outside edge 4 is farther from the center of rotation, or turning force axis $A_{10}$, than nut 36 outer edge 37, serve as another embodiment friction coefficient increasing treatment means. Greater washer/flange surface area having longer engagement radius increases facial friction over lesser nut/washer surface area having shorter engagement radius.

Explained another way, in bolting applications, friction torque generated by the washer-flange surface area interaction is greater than friction torque generated by the nut-washer surface area interaction. The washer remains stationary so that it is possible to attach a holding socket non-rotatably relative to the housing of the tool. The holding socket is brought into engagement with the outer polygonal edge of the washer while the tightening tool actionably engages with the nut. Upon tightening the washer is compressed under the nut and the housing of the tool is secured against rotation relative to the washer. The washer absorbs the reaction moment and reaction force of the tool housing that is opposite to the tightening torque and diverts it into the compressed washer. No external reaction means is necessary.

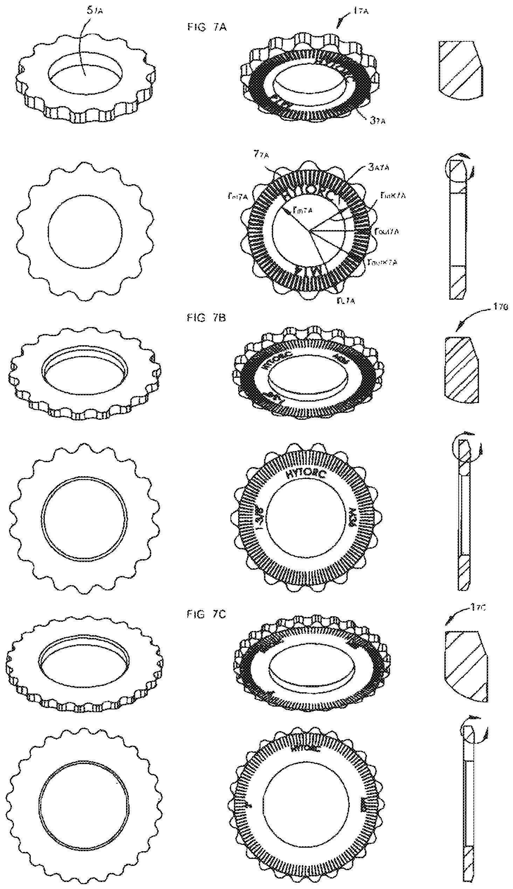

FIGs. 7A, 7B and 7C show varied washer dimensions and widths of friction coefficient increasing treatment means such as knurl bands. FIG. 7A shows a washer $1_{7A}$ with internal void, or central bore, $5_{7A}$ for use with an M14 bolt, a relatively small size. Knurl band $7_{7A}$ encompasses a majority of surface area lower bearing face $3_{7A}$. Nonetheless lower bearing face $3_{7A}$ has a smooth inner surface $3A_{7A}$ adjacent void $5_{7A}$. Indeed smooth inner surface $3A_{7A}$ is formed between void $5_{7A}$, which accepts fastener 20, and knurl band $7_{7A}$. Washer $1_{7A}$ has an inner radius, nn7A, an outer radius, $r_{out7A}$, an inner knurl radius, $r_{inK7A}$, an outer knurl radius, $r_{outK7A}$, and a lobe radius, $r_{L7A}$. Similar dimensions are applicable to but not shown in FIGs. 7B and 7C.

Recall that HYTORC WASHERs™ and HYTORC SMARTWASHERs™ added unnecessary height to bolting applications. Thicknesses of $Z^®$ Washers are typically small compared to their outer diameters. For example, the average ratio of the thickness $H_{1W}$ to the outer diameter $D_{1A}$ of the washers disclosed in the drawings is about 0.08 and may range from 0.04 to 0.12. Other ratios describe $Z^®$ Washers, including: the average ratio of height $H_{1W}$ of the washer to the height $H_{36N}$ of the nut is about 0.170 and may range from 0.10 to 0.30; the average ratio of the diameter $D_{1A}$ of the washer and diameter $D_{36}$ of the nut is about 1.10 and may range from 0.80 to 1.40. These ratios are provided merely for descriptive purposes,

Note the difficulty in quantifying meaningful characteristics of the $Z^®$ System frictional biasing. For example, relative surface areas of washers and nuts (or bolt heads) minimally effect friction biasing outcomes with the $Z^®$ System. Indeed relatively small threaded fasteners may have vastly different ratios than relatively large threaded fasteners.

The most informative data involves calculation of the effective friction radius of the washer and the threaded fastener. $Z^®$ Washers work so reliably because friction coefficient increasing treatments are selectively biased away from the central bore and towards outer edge. The effective friction radius of the washer is greater than the effective friction radius of the threaded fastener. For example, the effective friction radius of a washer having a radial band of friction coefficient increasing treatments on its bottom side is the center of that band. Note that this discussion correctly assumes the ideal case where bolt load is distributed uniformly under the nut or bolt head due to the use of the Z® Washer.

Note that friction enhancements may not be necessary in many applications, although they ensure that the washer stays still on all applications, regardless of: relative washer/fastener surface areas or engagement radii; relative fastener/joint material hardness; and relative fastener/joint surface treatments like lubricants (molycoat, etc.) or coatings (paint, etc.). The friction enhancements become impactful at the beginning of a tightening process where very little or no load is present on the stud and/or nut. This friction bias initiates washer hold every time.

Alternatively friction coefficient increasing treatment means includes roughenings, polygonal surfaces, splines, knurls, spikes, grooves, slots, protruding points, scoring or other such projections. Other options include pressed fit projections, concentric or spiral rings, radial riffs or teeth, waffle patterns, etc. Any operation that will force the outer surface areas to have more aggressive interaction with the flange surface such as selectively knurling, sanding, blasting, milling, machining, forging, casting, forming, shaping, roughing, stamping, engraving, punching bending or even just relieving internal areas is sufficient. Note that combinations of such friction coefficient increasing treatment means may be utilized. If the washer 1 - outer reaction socket 17 engagement is slightly larger than the nut 36 - inner drive socket 16 engagement, friction coefficient increasing treatment means either: may not be needed; may be positioned anywhere about the washer bottom surface; or may be positioned substantially beyond an effective friction radius of the nut or the bolt head about the washer bottom surface. To attain the inventive properties it is, sufficient that the washer bottom side be even. The opposing frictional surface, however, may also be tapered outwardly, whereby the outer edge of the frictional ring is thicker than the inner edge. However, if required, the washer and therefore its bottom side can also have a curvature. Particularly good results are obtained with a convex curve towards the joint. This is disclosed in U.S. Patent No. 7,462,007, having Issue Date of 9 December 2008, entitled "Reactive Biasing Fasteners".

Generally reaction washers for industrial bolting include: an external shape that allows rotational coupling with a torque application device; and an underside bearing friction surface area that is discontinuous and selectively biased in areas outward from the center bore. These surface friction features are selectively created on the washer's underside and excluding any portion of area near the radius of the center bore. These surface friction features may be created through knurling, sanding, blasting, milling, machining, forging, casting, forming, shaping, roughing, stamping, engraving, punching or bending. Surface friction features may be created by merely relieving material near the reaction washer bore. Surface friction features also may be either: created with discontinuous surfaces and/or textures featured in an area or areas outward from the bore; and/or positioned singularly, randomly or in any array arrangement.

**Alternative Z® Washer Geometries.** FIGs. 8A through 8L show alternative shapes for washer 1. Washers may have an outer edge (and corresponding engaging means) shaped with any suitable geometry to non-rotatably engage with the outer socket inner edge (and its corresponding engaging means) shaped with a corresponding suitable or substantially identical geometry. Z® Washer 1's standard commercial shape is a "flower pattern" washer including concave portions extending inwardly and convex portions extending outwardly which are alternately and repeatedly provided in a radial direction around an imaginary reference circle that is centered at a central point of the washer. FIGs. 8B, 8E, 8G, 8H and 8I are clear derivations of such flower shaped washers. Note that FIG. 8K shows a multi-sided shape engagement and FIG. 8J shows spline engagement, both of which may be considered flower shaped with increasing numbers of engagement teeth.

Other suitable geometries include shapes such as triangle, curvilinear triangle, square, rectangle, parallelogram, rhombus, trapezoid, trapezium, kite, pentagon, hexagon, heptagon, octagon, nonagon, decagon, circle with outer projections, ellipse or oval. Note that outside edges of any suitable shape may be curved, rather than angular, to facilitate easy engagement with Z®Sockets.

FIGs. 8D1, 8D2 and 8D3 show the embodiment of FIG. 8D, Z® Washer $1_{8D}$ for use with various power tools. Perspective views of the top and bottom faces and a side, cross-sectional view of washer $1_{8D}$, respectively, are shown. Generally washer $1_{8D}$ has an annular hexagonal shape having similar dimensions and characteristics as shown in FIGs. 1A, 1B and 1C, except with an "8D" subscript. Washer $1_{8D}$'s hexagonal shape includes radially extending side corners $6_{8A}$ which forms a hex-like shape. Generally a top bearing face $2_{8D}$ is smooth with lower surface friction and a bottom bearing face $3_{8D}$ has frictional enhancements, or bottom corners, $7_{8D}$ with higher surface friction.

Note that lubricants may be used on top bearing face $2_{8D}$ to lower surface friction between it and threaded nut 36, or any other such threaded fastener. Radial bottom corners $7_{8D}$ increase the surface friction of bottom bearing face $3_{8D}$. Side corners $6_{8D}$ while not shown, may include angled bevel faces $8_{8D}$ formed between top bearing face $2_{8D}$ and a side bearing face $4_{8D}$. Such bevel faces $8_{8D}$ may make up outer edge portion which includes tapered surfaces and engaging teeth, the tapered surfaces being gradually inclined outwardly and toward bottom bearing face $3_{8D}$ and side bearing face $4_{8D}$.

Washer $1_{8D}$ has, inter alia, annular radius $R_{8A}$, a lobe radius $R_{8L}$, a knurl radius $R_{8K}$ and a void radius $R_{8V}$. Washer $1_{8D}$ has a height Hs, a first bevel height $H_{8Bi}$, a second bevel height $H_{8Bii}$, a knurl height $H_{8K}$ and a bevel angle $°_8$. Such bevel faces $8_{8A}$ may assist washer $1_{8A}$ in clearing a corner radius of a flange and other clearance issues. Further bevel faces 8 assist the outer reaction socket in engaging and rotatably coupling with washer 1. Bevel faces 8 may also accept modifications to outer reaction socket 17 to allow for inverted bolting applications.

**Alternative Placement of Z® Washer Friction Coefficient Increasing Treatment Means.** FIGs. 8D4 - 8D10 show washer $1_{8D}$ with various iterations of frictionally biased faces with relatively higher friction against the flange surface and relatively lower friction against the nut. In other words, washer $1_{8D}$ is shown with various types, sizes and locations of friction coefficient increasing treatment means. Note that these variations are shown with washer $1_{8D}$ but apply to all reaction washers disclosed herein . FIG. 8D4 is shown with no frictional enhancements, just a smooth bottom side. FIG. 8D5 is shown with frictional enhancements that are formed recessed within the washer's bottom face by removing material proximate to the central bore. FIG. 8D6 shows a relatively thin band of frictional enhancements formed at an outer edge portion of the bottom face. FIG. 8D7 shows a relatively thick band of frictional enhancements formed equidistant from an inner edge and outer edge portion of the bottom face. FIG. 8D8 shows a relatively thin band having width of 1X of frictional enhancements formed a distance 1X from outer edge and 2X from inner edge of the bottom face. FIG. 8D9 shows friction enhancement means, in this case a downwardly sloping ring having sharp edges formed at outer edge of the bottom face. Washer $1_{8D5}$, while shown curved, imparts no axial biasing force to the elongated bolt. Alternatively Washer $1_{8D5}$ may have no variations in height except at the sharp edges.

As shown in FIG. 8D10, washers may also be provided with configurations for positive locking engagement with the outer reaction socket. Such positive locking engagements are indentions formed in the outer edge of washer $1_{8D}$. The outer reaction socket would include corresponding engagement means to allow for hands-free operation, and once the nut is seated, hands-free operation on an inverted bolting application.

Disclosures of reaction-style washers for industrial bolting having friction surfaces of the prior art discuss neither the importance of location nor the extent of coverage of such friction surfaces. Applicant discovered that friction coefficient increasing treatment means located at either inner washer radii near the bolt or about the entire underside of the washer tends towards washer movement, or rotation with the nut. These strategies were marginally successful occasionally yielding still washers. In other words, more friction treatments over larger, entire and/or interior portions of the underside of washers are substantially less effective than friction treatments over smaller and/or exterior portions.

**Alternative Fastener and Z® Socket Types for Use with Z®Washer.** FIG. 9A shows washer $1_{8D}$ for use with a bolt having a bolt head 20A threaded in a blind hole and HYTORC® dual drive coaxial action and reaction socket assembly 15. FIG. 9B shows washer $1_{8D}$ for use with a socket head cap screw 20B threaded in a blind hole and a modified HYTORC® dual drive coaxial action and reaction socket assembly 15C. Various fastener geometries may be used with tools, parts and accessories of the Z® System with corresponding design changes, such as shown in FIG. 9B. Modified socket assembly 15C includes a male fastener drive engagement means 16C rather than action socket 16.

**Reduced Z® Washer Surface Area.** FIG. 10 is similar to FIG. 5D except that an outer edge $4_{10A}$ of a pressurized washer $1_{10A}$" curtails from outer edge 37 of tightened nut 36". Notably reaction torque force $92_{10A}$ acting in another direction 94 received by washer outer edge $4_{10A}$ may be less than action torque force 91 acting in one direction 93 received by nut 36. Pressurized washer $1_{10A}$" absorbs reaction torque force $92_{10A}$ of tool 10B such that tool 10B applies action torque 91 to seated nut 36' and may apply less reaction force $92_{10A}$ to washer outer edge $4_{10A}$. Aggressive friction enhancements $7_{10A}$ are necessary to prevent washer $1_{10A}$ from turning with nut 36. Seated nut 36' turns but compressed washer $1_{10A}$' stands still. This relative positioning, namely, that friction enhancement $7_{10A}$ and therefore an effective friction radius of washer $1_{10A}$ is farther from the center of rotation, or turning force axis $A_{10}$, than an effective friction radius of nut 36, is one innovative. Reaction force $92_{10A}$ acts through outer socket 17A a distance $R_{10A}$ or so away from turning force axis $A_{10}$ which tends to hold washer $1_{10A}$ still. As a result of the differential in effective friction radii, washer $1_{10A}$ remains stationary on joint 30 rather than rotate with nut 36 as fastener 20 is tightened or loosened. Note that bottom face 54 of inner socket 16 rotates on and/or over an upper face 64A of a lower inner edge 65A of outer socket 17A. In this case inner socket 16 and outer socket 17A may experience additional facial friction due to a larger surface area of upper face 64A.

In other words washers having outer edges which either co-terminate with or curtail from an outer edge of the nut or the bolt head can be used with the HYTORC® Z® System. In such cases it is necessary for the bottom surface of the washer to be formed with aggressive friction coefficient increasing treatment means to ensure that the effective friction radius of the washer is greater than an effective friction radius of the nut or the bolt head. Successful outcomes are likely with aggressive friction enhancements even if the reaction force received by the washer outer edge is substantially equal to or less than the action torque received by a nut or a bolt head outer edge. In these situations such aggressive friction enhancements may include roughenings, polygonal surfaces, splines, knurls, spikes, grooves, slots, protruding points, or other such projections. Offsetting the aggressive friction coefficient increasing treatment means beyond $R_{20}$ remains an important feature in this case. Note that modified outer socket 17A requires a sophisticated design to engage and rotatably couple with washer 1. Note also that modified outer socket 17A may allow for inverted bolting applications.

**Alternative Z® Socket Sizes**. FIGs. 11A, 11B and 11C show various reaction socket sizes, including outer socket $17_{11A}$ having straight walls and outer sockets $17_{11B}$ and $17_{11c}$ having tapered walls. These variations allow for threaded fasteners and HYTORC® Z® Washers of different sizes to be used with the same Z®Gun. Other configurations may be used as needed.

**Z® System Applied to HYTORC® Torque Tools.** HYTORC® has developed spline adapters and reaction plates for adapting the Z® System to its array of electrically, hydraulically and pneumatically operated torque power tool models for regular clearance, low clearance and offset link bolting applications. FIG. 12A shows socket coupling means, or spline adapters, 18 and 18A, as discussed with respect to FIGs. 5A, 5B, 5C and 5D. Spline adapter 18A is designed for use with HYTORC® pneumatic and electric torque guns, such as Z® Gun 10A (and 10B), as shown again in FIG. 12B. It is shaped as an annular ring having splined engagements on its inner and outer sides. Inner drive socket 16 and outer reaction socket 17 of dual drive socket 15 are cooperatively coupled together and relatively rotatable in opposite directions in LSHT mode through the tool housing and/or other known and/or proprietary means via socket coupling means 18A.

As shown in FIG. 12C, spline adapter 18 is designed for use with Applicant's hydraulic torque tools, such as the HYTORC® ICE® 10C and the HYTORC® AVANTI® 10D and other such tools. It is shaped as a stepped annular ring with an upper portion and a lower portion fused together having different radius. The upper ring has a shorter radius and interior splined engagements to nonrotatably engage with splined reaction support portions 19A and 19B of tools 10C and 10D. The lower ring has a longer radius and exterior splined engagements to nonrotatably engage with splined portions on outer reaction socket 16. Inner drive socket 16 and outer reaction socket 17 of dual drive socket 15A are cooperatively coupled together and relatively rotatable in opposite directions through the tool housings and/or other known and/or proprietary means via socket coupling means 18.

FIGs. 13A and 13B show a Z® Reaction Pad 17B for use with the HYTORC® STEALTH® 10E designed mainly for low clearance bolting applications. Reaction pad 17B is shaped to fit the dimensions of STEALTH® 10E and non-rotatably attaches to the tool housing via pins or screws. Z® Reaction Pad 17B non-rotatably engages with Z® Washer 1.

**Z® System Applied to HYTORC® Offset Link**. Z® System benefits are achievable with proprietary dual drive interchangeable offset links, such as, for example, apparatus 80. Link 80 is powered by HYTORC®'s proprietary coaxial action and reaction torque tools, such as, for example, HYTORC® ICE® 10C hydraulic torque tool or the HYTORC® Z® Gun 10B (or 10A) pneumatic torque multiplier. Other such tools include HYTORC®'s proprietary jGUN® Single Speed, jGUN® Dual Speed Plus, AVANTI® 10D and/or STEALTH® 10E. Such proprietary dual drive interchangeable offset links are disclosed thoroughly in WO 2014/176468 A1

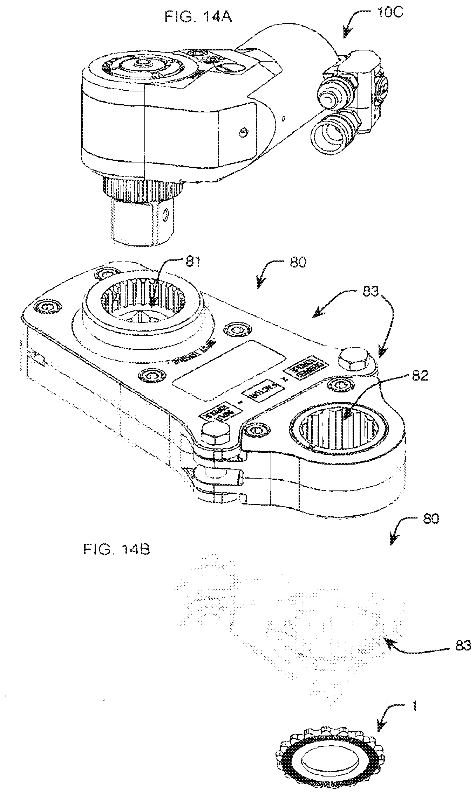

FIGs. 14A and 14B show top and a bottom perspective views of offset drive link assembly 80, for transmission and multiplication of torque from HYTORC® ICE® 10C for tightening or loosening a threaded fastener (not shown) over Z® Washer 1. Link 80 includes: a drive force input assembly 81; a drive force output assembly 82; and a reaction force assembly 83.

Generally during a tightening operation, a bottom knurled face of Z® Washer 1 rests on a joint to be closed while a bottom face of a nut or bolt head to be tightened rests on a top smooth face of Z® Washer 1. Outer edges of Z® Washer 1 nonrotatably engage with and react in a recess of an outer reaction socket of reaction force assembly 83. Meanwhile an inner socket of drive force output assembly 82 tightens the nut or bolt head over Z®Washer 1.

Advantageously the offset drive link assembly: allows access to previously unreachable fasteners due to, for example protruding threads, limited clearances and obstructions; makes practical previously unusable devices driven either electrically, hydraulically, manually and/or pneumatically; makes feasible previously unusable advanced materials, such as, for example aircraft-grade aluminum; creates modular components, such as, for example hex-reducing and -increasing drive bushings, male to female drive adaptors, to meet bolting application characteristics; yields accurate and customizable torque multiplication; tames drive force and reaction force application; overcomes corrosion, thread and facial deformation; avoids bolt thread galling; nullifies side load; ensures balanced bolt load for symmetrical joint compression; simplifies link and tool use; minimizes risk of operator error; and maximizes bolting safety.

**The HYTORC® Z® System Used with a HYTORC® Dual Faced Friction Washer.** Per FIGs. 15A - 15G, it may be necessary to keep the back nut (not shown) or bolt head from turning depending on relative friction conditions in play during use of the HYTORC® Z® System. If necessary the operator inserts a HYTORC® proprietary dual faced friction washer 85 under the back nut or bolt head 22. Its two friction enhanced faces 86 and 87 keep bolt head 22 from turning, especially as soon as load begins to be applied to bolt 24. Generally friction discussions related to Z® Washer 1 apply to friction enhanced faces 86 and 87. Similar benefits are achieved, as discussed with lower bearing face 3 of Z® Washer 1, by strategic placement of the friction enhancements on faces 86 and 87.

In other words, a HYTORC® proprietary washer system, or dual counter-torque washer system, includes a first washer having external reaction force engagement means and one friction face for use under a nut or bolt head to be tightened or loosened (such as Z® Washer 1), and a second washer having two friction faces for use under a nut or bolt head on the other side of the joint (such as dual faced friction washer 85). This dual counter-torque washer system stops the stud or bolt from turning along, so as to control the thread and facial friction of the fastener to achieve a better translation from torque to bolt load. Further, use of dual faced friction washer 85 eliminates the need for a backup wrench. Note that any friction coefficient increasing treatments discussed with respect to the HYTORC® Z® Washer is applicable to HYTORC® Dual Faced Friction Washer 85.

Note that this dual counter-torque washer system may be used with any portion, any combination or all of the HYTORC® Z® System. Recall that torque has unknown friction and tension has unknown bolt relaxation. This washer system may come in a set to eliminate uncontrollable facial friction and uncontrollable side load to improve the bolt load accuracy of torque and tension.

Further, direct tension indicating washers, or Squirter® Washers, may be used with any portion, any combination or all of the HYTORC® Z® System. They are disclosed in the following U.S. patents issued to Applied Bolting Technology Products, Inc., , 5,769,581, 5,931,618, 6,425,718 and 8,002,641. In one particularly advantageous embodiment, another HYTORC® proprietary washer system, or dual counter-torque and/or load indicating washer system (not shown), includes a first washer having external reaction force engagement means and one friction face for use under a nut or bolt head to be tightened or loosened (such as Z® Washer 1), and a second washer having two friction faces for use under a nut or bolt head on the other side of the joint (such as dual faced friction washer 85) including characteristics of Squirter® Washers. This dual counter-torque washer system stops the stud or bolt from turning along, so as to control the thread and facial friction of the fastener to achieve a better translation from torque to bolt load, and clearly indicate once a bolting job is done. Note that any friction coefficient increasing treatments discussed with respect to the HYTORC® Z® Washer is applicable to HYTORC® Dual Faced Friction Washer 85 including characteristics of Squirter® Washers.

**The HYTORC® Z® System Used with a HYTORC® Z® Nut or Z® Bolt.** Applicant's recent Z® System related research and development includes applying friction coefficient increasing treatments discussed with respect to the HYTORC® Z® Washer to nuts and bolt heads. As discussed in relation to FIGs. 15A - 15G, it may be necessary to keep the back nut (not shown) or bolt head from turning depending on relative friction conditions in play during use of the HYTORC® Z® System. One solution is the use of HYTORC® proprietary dual faced friction washer 85 under the back nut or bolt head 22.

Per FIGs. 15H - 15K, another solution is the application of friction coefficient increasing treatments discussed with respect to the HYTORC® Z® Washer to nuts and bolt heads, such as, for example, the bottom face of the back nut (not shown) or bolt head 22A and/or 22B. Their respective friction enhanced faces 86A and 86B keep bolt heads 22A and 22B from turning, especially as soon as load begins to be applied to bolts 24A and 24B.. Note that friction enhancements of 86A are quite similar to those of washer 1, as shown in many FIGs. Note that friction enhancements of 86B are quite similar to those of washer $1_{8D6}$ in FIG. 8D9.

In other words, a HYTORC® proprietary washer and nut or bolt system, or counter-torque Z® Washer and Z® Nut or Z® Bolt system, includes a first washer having external reaction force engagement means and one friction face for use under a nut or bolt head to be tightened or loosened (such as Z® Washer 1), and a nut or bolt having a lower friction face on the other side of the joint (such as Z® Bolt Head 22A). The Z® Washer - Z® Nut/Bolt System stops the stud or bolt from turning along, so as to control the thread and facial friction of the fastener to achieve a better translation from torque to bolt load, and eliminates the need for a backup wrench. Further, Z® Washer - Z® Nut/Bolt System is an alternative to the dual counter-torque washer system in situations when the latter is more expensive and/or less effective.

Generally, most discussion of FIGs. 1 - 15G related to the HYTORC® Z® System, and more specifically, most discussion of FIGs. 7 and 8 related to Z® Washers 1 - $1_{8D7}$ (such as types and placements of friction coefficient increasing treatments and outer engagement geometries), may be applied to the back nut and/or bolt heads of FIGs. 15H - 15K.

Note that the Z® Washer - Z® Nut/Bolt System may be used with any portion, any combination or all of the HYTORC® Z® System. Recall that torque has unknown friction and tension has unknown bolt relaxation. The Z® Washer - Z® Nut/Bolt System may come assembled and/or as portions, combinations and/or sets thereof to eliminate uncontrollable facial friction and uncontrollable side load to improve the bolt load accuracy of torque and tension.

**The HYTORC® Z® Gun (In Detail).** Referring to FIGs. 16A and 16B by way of example, these show perspective views of tools 10A and 10B, originally shown in FIGs. 3A-3C as the HYTORC Z® Gun. Tools 10A and 10B include: drive input and output assembly 100; turning force multiplication assembly 200; vibration force assembly 300; mode shifting assembly 400; and dual drive output and reaction socket assembly 15, or the HYTORC® Z® Socket.

Referring to FIG. 17A by way of example, this shows a side, cross-sectional view of tool 10A in LSHT mode. Referring to FIG. 17B by way of example, this shows a side, cross-sectional view of tool 10B in HSLT mode.

FIGs. 17A and 17B show drive input and output assembly 100 of tools 10A and 10B. Drive input components include drive tool housing 101 containing a drive generating mechanism 102, handle assembly 103, and a switching mechanism 104. Drive generating mechanism 102 generates torque turning force 91 in one direction 93 to turn nut 36 and is shown formed as a motor drive means which may include either a hydraulic, pneumatic, electric or manual motor. Drive tool housing 101 is shown generally as a cylindrical body with handle assembly 103 that is held by an operator. Handle assembly 103 includes a switching mechanism 104 for switching drive-generating mechanism 102 between an inoperative position and an operative position, and vice-versa. A turning force input shaft 121 connects drive input components of drive input and output assembly 100 with turning force multiplication assembly 200 and vibration force assembly 300 and transfers turning force 91 between the same. A turning force output shaft 122 includes a driving part 123, which can be formed for example as a square drive. Turning force output shaft 122 connects drive output components of drive input and output assembly 100 with turning force multiplication assembly 200 and vibration force assembly 300 and transfers a multiplied or vibrated form of turning force 91 between the same and dual drive output and reaction socket assembly 15. In one mode of operation, a reaction force spline adaptor 443 receives torque reaction force 92 in the opposite direction 94.

FIG. 18 is a side, cross-sectional view of turning force multiplication assembly 200 and vibration force assembly 300 of tool 10A in LSHT mode. FIG. 18 also shows portions of drive input and output assembly 100. Components not otherwise shown in other FIGs. include turning force output shaft bearing 191. Figure 19 is a is a perspective, cross-sectional view of drive tool housing assembly 101, drive tool handle assembly 103 and related internal components of tool 10A and tool 10B. FIG. 19 shows portions of drive input and output assembly 100. Components shown include: a handle rear cover 131; a gasket 137 adjacent rear cover 131 and the back of housing 101; motor assembly 102; an air valve assembly 132 having an outer air valve 133 and an inner air valve 134 held in place by a dowel pin 135. Rear cover 131 attaches to the back of and holds in such components in housing 101 by BHCS torque screws 136. A trigger assembly 150 includes: switching mechanism 104; springs 151; a trigger shaft bushing 152; and a trigger rod 153. Handle 103 includes: a control valve assembly 155 with a control valve 157 and a dowel pin 156; a conical spring 161; a regulator valve spacer 162; o-rings 163, one formed between control valve assembly 155 and an internal regulator housing 164 and one formed between internal regulator housing 164 and bottom plate 173. A mesh screen 171 is formed between bottom plate 173 and a noise filter 172. A socket head cap screw 174 connects such components and bottom plate 173 having a gasket 176 to handle assembly 103. An air fitting 175 extrudes from bottom plate 173 and connects to internal regulator housing 164. A handle push-button assembly 180 (not shown) allows an operator to change turning force direction and includes: a push button handle insert 181; a push button rack 182; a spring 183; and connectors 184.

Turning force multiplication assembly 200 includes a turning force multiplication mechanism 210 in a turning force multiplication mechanism housing 201 substantially for LSHT mode including a plurality of turning force multiplication transmitter assemblies. In the embodiments shown in FIGs. 17A and 17B, turning force multiplication assembly 200 includes five (5) multiplication transmitter assemblies 211, 212, 213, 214 and 215. It is to be understood that there are numerous known types of force multiplication mechanisms. Generally turning force multiplication transmitter assemblies 211 - 215 make up turning force multiplication mechanism 210, a compound epicyclic gearing system. It may include a plurality of outer planetary gears revolving about a central sun gear. The planetary gears may be mounted on movable carriers which themselves may rotate relative to the sun gear. Such compound epicyclic gearing systems may include outer ring gears that mesh with the planetary gears. Simple epicyclic gearing systems have one sun, one ring, one carrier, and one planetary set. Compound planetary gearing systems may include meshed-planetary structures, stepped-planet structures, and/or multi-stage planetary structures. Compared to simple epicyclic gearing systems, compound epicyclic gearing systems have the advantages of larger reduction ratio, higher torque-to-weight ratio, and more flexible configurations.

Turning force multiplication transmitter assemblies 211-215 may include: gear cages; planetary gears; ring gears; sun gears; wobble gears; cycloidal gears; epicyclic gears; connectors; spacers; shifting rings; retaining rings; bushings; bearings; caps; transmission gears; transmission shafts; positioning pins; drive wheels; springs; or any combination or portion thereof. Turning force multiplication transmitters such as 211 - 215 may include other known like components as well. Note that turning force input shaft 121 also may be considered a turning force multiplication transmitter; specifically it's a first stage motor sun gear of turning force multiplication transmitter 211. Turning force multiplication assemblies are well known and disclosed and described. An example is disclosed and described in Applicant's U.S. Patent No. 7,950,309.

FIG. 18 shows more detail of portions of turning force multiplication assembly 200 than FIGs. 17A and 17B. Components turning force multiplication assembly 200 shown in FIG. 18 and not in FIGs. 17A and 17B include: a lock nut 250; a lock washer 249; a bearing 241; a housing adapter 247; a bearing spacer 252; an internal retaining ring 243; a bearing 242; a gearbox connector 248; a top and a bottom internal retaining ring 251; a top and bottom ball bearing 246; a double sealed bearing 244; and an internal retaining ring 245.

Vibration force assembly 300 includes a vibration force mechanism 310 in a vibration force mechanism housing 301 substantially for HSLT mode including either one or a plurality of vibration transmitters. In the embodiment shown in FIGs. 17A and 17B, vibration force assembly 300 includes two vibration, specifically impaction, transmitters 311 and 312. It is to be understood that there are various known vibration force mechanisms, and often involve impaction force mechanisms consisting of an anvil and a turning hammer. The motor turns the hammer and the anvil has a turning resistance. Each impact imparts a hammering force, which is passed on to the output drive.

Generally vibration force assemblies may include vibration force mechanisms such as ultrasonic force mechanisms including an ultrasonic force transmitters; mass imbalance force mechanisms including mass imbalance force transmitters, or any other time-varying disturbance (load, displacement or velocity) mechanisms including a time-varying disturbance (load, displacement or velocity) force transmitters. Further vibration force assemblies may include: hammers; anvils; connectors; spacers; shifting rings retaining rings; bushings; bearings; caps; transmission gears; transmission shafts; positioning pins; drive wheels; springs; or any combination thereof. Vibration transmitters such as 311 and 312 may include other known like components as well. FIG. 18 also shows a dowel pin 320.

Generally the RPMs of tools 10A and 10B decrease as torque output increases. The activation or deactivation of vibration force mechanism 310 alternatively may be such that when the RPMs drop below or go beyond a predetermined number, vibration force mechanism 310 becomes ineffective or effective. In the HSLT mode vibration force mechanism 310 provides a turning force to the nut. In LSHT mode vibration force mechanism 310 acts as an extension to pass on the turning force from one part of the tool to another. Note that vibration force mechanism 310 can be located either close to the tool motor, close to the tool output drive or anywhere in between.

In HSLT mode, vibration force mechanism 310 always receives a turning force and turns; the housing may or may not receive a turning force; and the torque output is relatively low, which is why the housing does not need to react. Note that in the embodiments of FIG. 17A and 17B, vibration force mechanism 310 is operable only in a higher speed mode, such as HSLT mode. This in turn means that at a lower speed when the torque intensifier mechanism is operable, such as LSHT mode, there is no impact and/or minimal vibration. During HSLT mode, at least two multiplication transmitters are unitary and rotate with the hammer to increase inertia and assist in the hammering motion from the impaction mechanism. Note that when a fastener exhibits little or no corrosion, thread and facial deformation and/or thread galling, vibration force mechanism 310 may not be necessary in HSLT mode.

Slide action mode shifting assembly 400 is substantially for shifting tool 10A from LSHT mode to HSLT mode and tool 10B from HSLT mode to LSHT mode. In the embodiments shown in FIGs. 17A and 17B, slide action mode-shifting assembly 400 includes: a shifter base 401; a shifter collar 442; a spline shifter swivel 443; a shifter spline ring 445; an external shifting ring 456; and an internal shifting assembly 450. Internal shifting assembly 450, as shown in FIGs. 17A and 17B includes: an internal shifting bushing 452; an internal shifting ring 453; and coupling ball bearings 454.

Slide action mode-shifting assembly 400 may include: manual assemblies (sequential manual, non-synchronous or preselected) or automatic assemblies (manumatic, semi-automatic, electrohydraulic, saxomat, dual clutch or continuously variable); torque converters; pumps; planetary gears; clutches; bands; valves; connectors; spacers; shifting rings retaining rings; bushings; bearings; collars; locking balls; caps; transmission gears; transmission shafts; synchronizers; positioning pins; drive wheels; springs; or any combination or portion thereof. Mode shifting components may include other known like components as well. It is to be understood that there are various known mode-shifting assemblies, and often involve shifting components consisting of collars, rings and locking balls.

FIG. 18 shows more detail of portions of slide action mode shifting assembly 400 than FIGs. 17A or 17B. Additional components of shifting assembly 400 shown in FIG. 18 and not shown in FIGs. 17A and 17B include: internal retaining rings 451, 457 and 459; a bottom and a top bushing 446 and 447; and shifter ring reaction plugs 458. Figure 20 is a perspective view of mode shifting assembly 400 of tool 10A and tool 10B. FIG. 20 shows substantial external portions of mode-shifting assembly 400. Components not otherwise shown in other FIGs. include: a lock shaft cap 402; a handle insert 403; a handle grip 404; a pull handle 405; an actuator link and shifter pin 406; a pivot pin 407; a shifter extension bracket 410; SHCS 411; a shifter fastener assembly 430; a bottom and a top shifter link 441; a wave spring 448; and a holder spline 449.

Referring back to FIGs. 5A - 5D, they show perspective and cross-sectional view of dual drive output and reaction socket assembly 15 of tool 10A and tool 10B and dual drive output and reaction socket assembly 15A of tool 10C and tool 10D.

In LSHT mode, dual drive output and reaction socket assembly 15 is substantially for transferring a multiplied form of turning force 91 to nut 36 in one direction 93 and the corresponding multiplied form of reaction force 92 in another direction 94 to Z®Washer 1, which acts as a stationary object. In HSLT mode, dual drive output and reaction socket assembly 15 is substantially for transferring a vibrated form of turning force 91 to either nut 36 or nut 36 and washer 1 in one direction 93. In the embodiment shown in FIGs. 17A and 17B, dual drive output and reaction socket assembly 15 includes an inner drive socket 16 and an outer reaction socket 17. Outer reaction socket 17 is non-rotatably engageable with reaction force spline shifter swivel 443 during the LSHT mode. It is to be understood that there are various known engagement mechanisms to transfer turning and reaction forces to threaded fasteners and nuts and washers thereof, including castellation, spline and other geometries.

Tool 10A operates per the following in LSHT mode. The operator pulls shifter base 401 toward a rear position. Coupling/locking ball bearings 454 disengage from turning force multiplication mechanism housing 201 and engage with shifter spline ring 445 inside reaction force spline shifter swivel 443. Shifter base 401 is linked with turning force multiplication mechanism housing 201. Turning force multiplication transmitters 211 - 215 are unlocked and free to rotate relative to each other. The operator's pulling of shifter base 401 toward a rear position also engages shifting assembly vibration (impaction) force spline ring 453 with vibration (impaction) force mechanism housing 301. This locks up vibration (impaction) force transmitters 311 and 312 and thus vibration (impaction) force assembly 300. And this allows turning force output drive shaft 120 to be driven by the fifth gear cage of turning force multiplication transmitter 215, which is spline engaged with vibration (impaction) force mechanism housing 301. Spline shifter swivel 443 is spline engaged with reaction socket 17. And reaction socket 17 is geometrically engaged with washer 1 under nut 36. Upon seating of nut 36, compressed locking disc washer 1 serves as the stationary object by which turning force multiplication mechanism housing 201 reacts off of reaction socket 17. With turning force multiplication mechanism housing 201 held still, turning force multiplication transmitters 211 - 215 tighten seated nut 36 via turning force output drive shaft 120.

Generally operation of tool 10B requires activation or deactivation of impaction mechanism 310. Slide action mode shifting assembly 400 can shift tool 10A between either: multiplication mechanism 210; impaction mechanism 310; part of multiplication mechanism 210 (such as for example one of the plurality of multiplication transmitters); part of impaction mechanism 310 (such as for example one of the plurality of impaction transmitters); or any combination thereof.

Tool 10B operates per the following in HSLT mode. The operator pushes shifter base 401 toward a forward position Coupling/locking ball bearings 454 engage with turning force multiplication mechanism housing 201 and vibration (impaction) force mechanism housing 301. Shifter spline ring 445 disengages from inside reaction force spline shifter swivel 443, thereby rendering it idle and inactive. Therefore reaction socket 17 is idle and inactive because it is not spline engaged with turning force multiplication mechanism housing 201. With coupling/locking ball bearings 454 engaged with vibration (impaction) force mechanism housing 301, turning force multiplication transmitters 211 - 215 are locked up and unable to rotate relative to each other. Thus turning force multiplication assembly 200 turns as a unitary mass via turning force input shaft 121. Motor 102 turns turning force input shaft 121 that includes the first stage sun motor gear of turning force multiplication transmitter 211. The operator's pushing of shifter base 401 toward a forward position also disengages shifting assembly vibration (impaction) force spline ring 453 from vibration (impaction) force mechanism housing 301. This unlocks vibration (impaction) force transmitters 311 and 312 and thus vibration (impaction) force assembly 300. Vibration (impaction) force mechanism housing 301 is spline engaged with the fifth gear cage of turning force multiplication transmitter 215. Vibration (impaction) force transmitter 312 (anvil), is spline engaged to turning force output drive shaft 120, which runs up or down nut 36 on stud 23 by impact of vibration (impaction) force transmitter 311 (hammer).

Referring back to FIGs. 3A-3C and FIGs. 4A-4B, generally and from the perspective of nut 36, tool 10A either tightens, loosens or tightens and loosens nut 36 in LSHT mode. And tool 10B either runs up, runs down or runs up and runs down nut 36 in HSLT mode. Generally and from the perspective of washer 1, tool 10A, in LSHT mode, either: pressurizes washer 1" between tightened nut 36" on loaded stud 23" and tightened joint 30" to the pre-determined tightening torque; and/or compresses washer 1' between seated nut 36' on pre-loosened stud 23' on pre-loosened joint 30' from the pre-determined tightening torque. Generally and from the perspective of washer 1, tool 10B in HSLT mode, either: compresses washer 1' between seated nut 21' on pre-loaded stud 23' on pre-tightened joint 30' to the pre-determined pre-tightening torque; decompresses washer 1 between nut 36 on stud 23 on loosened joint 30 from the pre-determined pre-tightening torque; or vibrates pressurized washer 1" between tightened nut 21" on loaded stud 23" on tightened joint 30" to adequately pulverize bolt thread corrosion. Note that reference numerals with ' and " represent similar force magnitudes.

During HSLT mode tool 10B either: runs down either nut 36 or both nut 36 and washer 1 on stud 23 with turning force 91 in one direction 93 to seat nut 36' and compress washer 1' on pre-loaded stud 23' on pre-tightened joint 30' to a pre-determined pre-tightening torque; runs up either seated nut 36' or both seated nut 36' and compressed washer 1' on pre-loosened stud 23' on pre-loosened joint 30' with turning force 92 in an opposite direction 94 from a pre-determined pre-loosening torque; or vibrates (impacts) tightened nut 36" over pressurized washer 1" to apply vibration to adequately pulverize thread corrosion. During LSHT mode tool 10A either: tightens seated nut 36' on compressed washer 1' on pre-loaded bolt 23' on pre-tightened joint 30' with turning force 91 in one direction 93 to the pre-determined tightening torque and applies reaction force 92 in opposite direction 93 to compressed washer 1'; or loosens tightened nut 36" over pressurized washer 1" on loaded stud 23" on tightened joint 30" with turning force 92 in opposite direction 94 from a pre-determined tightening torque and applies reaction force 91 in one direction 93 to pressurized washer 1". Note that reference numerals with ' and " represent similar force magnitudes.

During operation tool 10A switches from LSHT mode to tool 10B in HSLT mode upon unseating nut 36 and decompressing washer 1 at the pre-determined pre-loosening torque. During operation tool 10B switches from HSLT mode to tool 10A in LSHT mode upon either: seating nut 36 and decompressing washer 1 at the pre-determined pre-tightening torque; or adequate pulverization of thread corrosion. Note that the operator uses mode-shifting assembly 400 to switch the tool from LSHT mode to the HSLT mode or visa versa, but such a switch may include other known like components as well. Note that mode shifting assembly 400 is a manual switch, but may be automatic. Similarly, note that activation or deactivation of vibration (impaction) force assembly 300 may occur either manually or automatically. Note that LSHT mode can be switched from torque regulated to vibration assisted or vice versa, and wherein HSLT mode can be switched from vibration regulated to torque assisted or vice versa. Note that vibration (impaction) force assembly 300 can continue operating even if washer 1 begins or ceases rotation. And note that LSHT mode may be vibration assisted for loosening nut 36 to help overcome chemical, heat and/or lubrication corrosion and avoid bolt thread galling.

Note that power tools for gall-reduced tightening and loosening of industrial fasteners may also be characterized in that: turning force multiplication mechanism housing 201 is operatively connected with at least one turning force multiplication transmitter 211 - 215; during LSHT mode at least two of multiplication transmitters 211 - 215 rotate relative to the other; and during HSLT mode at least two of multiplication transmitters 211 - 215 are unitary to assist the hammering motion imparted by the turning force impaction mechanism 310. During HSLT mode, turning force output drive shaft 120 and the combination of the turning force multiplication assembly 200 including its housing turn as a unitary mass in the same direction. This creates inertia that enhances torque output of the impaction mechanism to overcome corrosion, thread and facial deformation and avoid bolt thread galling.

Methods are disclosed of gall-minimized tightening and loosening of two parts with one another with industrial fasteners 20 of the kind having nut 36, washer 1 and stud 23 with a power tool (10A and 10B) of the kind having: motor 102 to generate a turning force; a drive (122 and 123) to transfer turning force 91; turning force multiplication mechanism 210 in turning force multiplication mechanism housing 201 for LSHT mode including turning force multiplication transmitters 211 - 215; vibration force mechanism 310 for HSLT including vibration transmitter 311, 312; drive socket 16 operatively connected with nut 36; reaction socket 17: during LSHT mode, operatively connected to washer 1 to transfer reaction force 92 to washer 1; and during HSLT mode, either operatively connected to or operatively disconnected from washer 1. Such method including: wherein tightening includes: placing washer 1 on a free stud end 25; placing nut 36 over washer 1 on free stud end 25; running down, in HSLT mode, either nut 36 or nut 36 and washer 1 on free stud end 25 to a pre-determined pre-tightening torque to seat nut 36 and compress washer 1; switching from HSLT mode to LSHT mode; and torqueing tight, in LSHT mode, seated nut 36 to a pre-determined tightening torque and pressurizing washer 1 between tightened nut 36 and tightened joint 30; wherein loosening includes: placing tool 10A over tightened nut 36 and pressurized washer 1; torqueing loose, in LSHT mode, tightened nut 36 over pressurized washer 1 to a pre-determined loosening torque; switching from LSHT mode to HSLT mode; and running up, in HSLT mode, either seated nut 36 or seated nut 36 and compressed washer 1 on free stud end 25. The method of loosening further includes: vibrating, in HSLT mode, tightened nut 36 over pressurized washer 1 to apply vibration to pulverize bolt thread corrosion; and switching from HSLT mode to LSHT mode.

Tools 10A and 10B, above, and tools 10F, 10G, 10H and 101, below, are generally describable as power tools for gall-minimized tightening and loosening of an industrial threaded fastener of the kind having a coaxial reaction surface, a stud and either a nut threadedly engageable with the stud or a stud-head connected to the stud. Tools 10A, 10B, 10F, 10G, 10H and 101 include: a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance.

Alternatively tools 10A and 10B, above, and tools 10F, 10G, 10H and 101 below, are describable as power tools for gall-minimized tightening and loosening of an industrial fastener of the kind having a nut, a washer and a stud, the tools including: a motor to generate a turning force; a drive to transfer the turning force; a turning force multiplication mechanism in a housing including a turning force multiplication transmitter for a continuous torque mode; a vibration force mechanism including a vibration transmitter for either: an intermittent torque mode; an intermittent force mode; or both the intermittent torque mode and the intermittent force mode.

Referring to FIG. 21A by way of example, this shows a cross-sectional view of an embodiment as tool 10F, a power tool for gall-minimized tightening, loosening or both tightening and loosening of an industrial threaded fastener 801 of the kind having a stud and a nut threadedly engageable with the stud. Tool 10F includes: a drive input and output assembly 810; a turning force multiplication assembly 820; a vibration force assembly 830; a mode shifting assembly 840; and a drive output socket and reaction arm assembly 850.

Referring to FIG. 21B by way of example, this shows a cross-sectional view of an embodiment as tool 10G. Tools 10F and 10G are similar as noted by duplication of reference numbers. Tool 10G is a reaction arm-free power tool for gall-minimized tightening, loosening or both tightening and loosening of an industrial threaded fastener 802 of the kind having a coaxial reaction surface, such as, for example, HYTORC® Z® Washer 1, a stud and a nut threadedly engageable with the stud. Tool 10G includes: a drive input and output assembly 810; a turning force multiplication assembly 820; a vibration force assembly 830; a mode shifting assembly 840; and dual drive output and reaction socket assembly 855, which is similar to HYTORC®Z® Socket 15.

Tools 10F and 10G include a turning force multiplication mechanism with either one or a plurality of gear stages. A vibration force mechanism includes: a turning force impaction mechanism having a hammer and an anvil; and an intermittent force mechanism 860 of either: an ultrasonic force mechanism including an ultrasonic force transmitter; a mass imbalance force mechanism including a mass imbalance force transmitter; or any other time-varying disturbance (load, displacement, turn or velocity) mechanism including a time-varying disturbance (load, displacement, turn or velocity) force transmitter. Tool 10F represents a modified HYTORC® THRILL® Gun including intermittent force mechanism 860. Tool 10G represents a modified HYTORC® Z® Gun including intermittent force mechanism 860.

Referring to FIG. 22A by way of example, this shows a cross-sectional view of an embodiment as tool 10H, a power tool for gall-minimized tightening, loosening or both tightening and loosening of an industrial threaded fastener 901 of the kind having a stud and a nut threadedly engageable with the stud. Tool 10H includes: a drive input and output assembly 910; a turning force multiplication assembly 920; a vibration force assembly 960; a mode shifting assembly 940; and a drive output socket and reaction arm assembly 950.

Referring to FIG. 22B by way of example, this shows a cross-sectional view of an embodiment as tool 101. Tools 10H and 101 are similar as noted by duplication of reference numbers. Tool 101 is a reaction arm-free power tool for gall-minimized tightening, loosening or both tightening and loosening of an industrial threaded fastener 901 of the kind having a coaxial reaction surface, such as, for example, HYTORC® Z® Washer 1, a stud and a nut threadedly engageable with the stud. Tool 101 includes: a drive input and output assembly 910; a turning force multiplication assembly 920; a vibration force assembly 960; a mode shifting assembly 950; and dual drive output and reaction socket assembly 955, which is similar to HYTORC® Z® Socket 15.

Tools 10H and 101 include a turning force multiplication mechanism with either one or a plurality of gear stages. A vibration force mechanism 960 includes either: an ultrasonic force mechanism including an ultrasonic force transmitter; a mass imbalance force mechanism including a mass imbalance force transmitter; or any other time-varying disturbance (load, displacement, turn or velocity) mechanism including a time-varying disturbance (load, displacement, turn or velocity) force transmitter. Tool 10H represents a modified HYTORC® jGUN® Dual Speed Plus including intermittent force mechanism 960. Tool 101 represents a modified HYTORC® jGUN® Dual Speed Plus including intermittent force mechanism 960 and dual drive output and reaction socket assembly 955, which is similar to HYTORC® Z® Socket 15.

Further to tools 10A, 10B, 10G and 101 the drive socket is operatively connected with the nut. The reaction socket may be operatively connected to the housing and the coaxial reaction surface during the higher resistance torque mode to transfer a reaction force to the coaxial reaction surface. Alternatively the reaction socket may be either operatively connected to the housing and the coaxial reaction surface or operatively connected to the housing and operatively disconnected from the coaxial reaction surface during either the lower resistance torque mode or the intermittent force mode. The drive socket is shown as an inner socket and the reaction socket is shown as an outer socket.

The following discussion relates to tools 10A, 10B, 10F, 10G, 10H and 101. Note that for ease of description any reference to a "nut" or "fastener" includes the possibility of: a stud-head attached to a stud; a nut and a washer on and/or over a stud; a stud-head attached to stud and a washer over the stud. Note that any suitable fastener geometry may be used, such as, for example: an allen key connection; a socket shoulder screw ("SSC") head; a socket head button screw ("SHBS") head; a hex head cap screw ("HHCS") head; a round head slotted screw ("RHSS") head; a flat head torx screw ("FHTS") head; a socket set screw ("SSS") head; or a socket head cap screw "(SHCS") head.

These discussions describe the coaxial reaction surface as a washer. In some instances, however, the washer may be formed either integral with or bonded to a joint to be tightened or loosened. In other instances the coaxial reaction surface is a portion of the stud extending beyond the nut. In still other instances a coaxial reaction arm may abut against a viable and accessible stationary object for gall-minimized tightening and loosening.

*Z®-Squirter® Washer.* FIG. 23A is a top view and FIG. 23B is a bottom view of hybrid Z®-direct tension indicating, or Z®-Squirter®, Washer 2301. Z®-Squirter® Washer 2301 has similar characteristics to Washer 1 shown in previous FIGs. of the present application and similar characteristics to the direct tension indicating washers disclosed in the following U.S. patents issued to Applied Bolting Technology Products, Inc., , 5,769,581, 5,931,618, 6,425,718 and 8,002,641.

Z®-Squirter® Washer 2301 includes protuberances 2312, having a height $H_{23C}$, are formed on a first surface 2314 and corresponding indentations 2316 are formed on a second surface 2318. FIG. 23C is a cross-sectional view of Z®-Squirter® Washer 2301 taken along line 2314 of FIG. 23A and FIG. 23D is an enlarged view of a portion of FIG. 23C. Z®-Squirter® Washer 2301 also includes channels 2362 that extend from each indentation 2316 to an outer edge of second surface 2318. Indentation 2316 is filled with an indicating material 2364 as shown in detail in FIG. 23D. Z®-Squirter® Washer 2301 is manufactured in a process similar to the direct tension indicating washers disclosed in U.S. Patent Nos. 5,769,581, 5,931,618, 6,425,718 and 8,002,641. For example, a tool and die are used to stamp protuberances 2312, indentations 2316 and channels 2362 into Z® Washer 1. Other processes, such as metal machining or metal casting may be used to form Z®-Squirter® Washer 2301. In some cases, the metal product will be heat treated by quenching and tempering after forming to produce spring-like load/deformation properties. In an exemplary embodiment, Z®-Squirter® Washer 2301 is made from carbon steel, but stainless steel, nonferrous metals, and other alloy products may also be used. Indicating material 2364 is an extrudable, elastomeric solid material such as colored silicone.

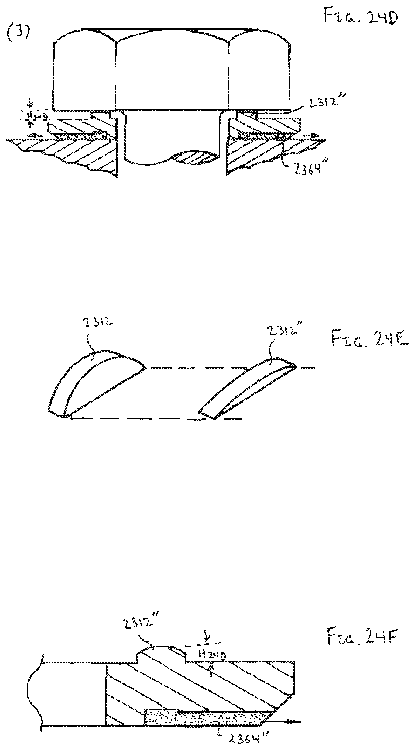

FIGS. 24A-24F illustrate the state of Z®-Squirter® Washer 2301 as a bolt 2350, having a radius similar to $R_{1V}$, is tightened on Z®-Squirter® Washer 2301. FIG. 24A shows the placement of Z®-Squirter® Washer 2301 adjacent to a bolt head 2350 which is threaded to a nut 2352 (not shown). The conditions shown in FIG. 24A are identified as stage 1 where bolt 2350 is at rest. As bolt 2350 is tightened, the bottom of the bolt head contacts protuberances 2312 and begins to compress protuberances 2312 towards first surface 2314 as shown in FIG. 24B. At this state, identified as stage 2, protuberances 2312' on first surface 2314 are slightly compressed, having a height $H_{24B}$. FIG. 24C is an enlarged view of one of indentations 2316 illustrating that the force exerted by protuberance 2312' forces indicating material 2364' into channel 2362. As bolt 2350 is further tightened, protuberances 2312 are compressed and tightening is discontinued when a height H of protuberances 2312" is at or below a predetermined height $H_{24D}$. At this point, the bolt installer knows that the bolt tension is equal to or greater than the required minimum. This state is identified as stage 3 and is shown in FIG. 24D. FIG. 24E shows protuberances 2312 as compared to protuberances 2312". FIG. 24F is an enlarged view of one of indentations 2316 illustrating that the force exerted by protuberance 2312" forces indicating material 2364" through channel 2362. The bolt installer also knows that the bolt tension is equal to or greater than the required minimum once indicating material 2364" is forced through channel 2362; indicating material 2364" is visible on the surface of the bolting application.

Generally the Z®-Squirter® Washer 2301 will serve as a reaction point for torqueing as well as a load indicating appliance in one. It includes the following characteristics and/or benefits: consists of a hardened steel alloy or other resistant material; provides a firm surface upon which a threaded nut or bolt head can turn; protects the bolted joint face from embedment or damaged due to the turning and loading of the threaded nut or bolt head; distributes the resulting clamping force in the bolt over a larger area than that of the nut or bolt head alone; has outer engagement features which can engage a mating socket or similar fixture connected to a torqueing tool for the purpose of providing a point against which the socket or fixture, and therefore the torqueing tool can react; has a roughened or machined bottom surface which fits next to the joint and when compressed provides sufficient friction resistance to resist any torque induced into the nut or bolt; has a smooth or low friction upper surface upon which the nut or bolt head can turn; has surface bumps or protrusions intended to flatten under a predetermined amount of compressive stress under a nut or bolt head; with or without a fluid or soft rubber-like material under the bumps which can be expressed toward the outside periphery of the washer for the purpose of visually indicating the successful compression of the washer and therefore the achievement of the desired predetermined bolt load; eliminates pinch points normally incident to hydraulic bolting tools using with external reaction arms thereby providing greater safety for the tool operator; eliminate the difficulty of finding a suitable external reaction point for the torqueing tool improving safety and speed; eliminate the deleterious effects due to side-loading and bending of bolts or other fasteners during torqueing with an external reaction arm by allowing straight axial tension to be applied; works in concert with other fixtures and appurtenances to reduce torsion in an accompanying back nut; works in a similar fashion with so called "tensioning" tools which create bolt load through direct elongation of a bolt or stud without the use of large torque value; and "squirts" or otherwise indicates that the bolt load has reached the desired level because the washer protrusions have been flattened or sufficiently compressed and the indicating material is visible.

**HYTORC® Z® Washer and Nut Assemblies**. An equal and opposite reaction force is generated during the torqueing process which must be transferred to a suitable reaction point, a stationary object. Referring back to FIGs. 2-5, Z® Washer 1 is placed between upper surface 35 of joint 30 and bottom bearing face 38 of threaded nut 36. Per FIGs. 25A-25E, a Z® Washer 2501 is formed adjacent and unitary with a bottom bearing face 2538 of a threaded nut 2536. HYTORC® Z® Washers are disclosed fully in the present application and WO 2015/095425 A2 A HYTORC® Z® Washer and Nut Assembly 2502 includes: threaded nut 2536; and reaction washer 2501 for receiving counter torque generated due to tightening or loosening of the threaded fastener.

Reaction washer 2501 includes: an outer edge 2514 having a geometric shape 2519 that allows for rotational coupling with a torque device via a dual drive coaxial action and reaction assembly (not shown); and a bottom surface 2513 having friction coefficient increasing treatments 2517 biased in areas outward from a center bore 2515. Reaction washer 2501 is releasably attached to threaded nut 2536. The bond between reaction washer 2501 and threaded nut 2536 breaks at or prior to a predetermined pre-torque and reaction washer 2501 becomes a suitable reaction point. In this example reaction washer 2501 and assembly 2502 separate when the bond breaks once compression and friction forces overcomes such bond. Any suitable bonding and/or connection method and/or agent may be used, such as, for example, adhesives, glues, epoxies, magnets, solvents, solders, welds, etc. Such bonding and/or connection methods and/or agents may be chosen, prepared and/or developed with specific, advantageous and repeatable characteristics to meet any bolting application. Note that such combination creates a nut-washer assembly having similar advantages to that of the HYTORC NUT™.

Per FIGs. 26A-26D, a Z® Washer 2601 is formed adjacent and freely rotatable with a bottom bearing face 2638 of a threaded nut 2236. HYTORC® Z® Washers are disclosed fully in the present application and in WO 2015/095425 A2. A HYTORC® Z® Washer and Nut Assembly 2602 includes: threaded nut 2636; and reaction washer 2601 for receiving counter torque generated due to tightening or loosening of the threaded fastener.

Reaction washer 2601 includes: an outer edge 2614 having a geometric shape 2619 that allows for rotational coupling with a torque device via a dual drive coaxial action and reaction assembly (not shown); and a bottom surface 2613 having friction coefficient increasing treatments 2617 biased in areas outward from a center bore 2615. Portions of lower reaction washer 2601 adjacent center bore 2615 are removed such that a lower inner edge 2662 has a tapered surface inclined outwardly toward bottom surface 2613.

Threaded nut 2636 has an outer surface 2622 with a geometric formation 2626. Geometric formation 2626 is also formed as a coupling means 2629 which nonrotatably engages with the action portion of the torque device.

Portions of lower threaded nut 2636 adjacent outer surface 2622 are removed such that a lower outer edge 2663 has a tapered surface inclined outwardly and downwardly. In other words, bottom surface 2638 is manipulated (deformed or squeezed outwards) such as to create a lip that engages with lower inner edge 2662 of reaction washer 2601. In other words, the nut or stud-head and the reaction washer are connected by a protrusion extending outwardly and downwardly from the bottom surface of the nut or stud-head to engage a depression extending inwardly and upwardly from the bottom surface of the reaction washer. The engagement of assembly 2602 holds together and allows free rotation of threaded nut 2636 and reaction washer 2601.

Free rotation between reaction washer 2601 and threaded nut 2636 ceases at or prior to a predetermined pre-torque and reaction washer 2601 becomes a suitable reaction point. In this example free rotation between reaction washer 2601 and threaded nut 2636 ceases once compression and friction forces overcome such connection.

Any suitable connection method and/or structure may be used. For example, o-rings may be used. In one embodiment, a plastic o-ring shears away at or prior to the pre-determined pre-torque. In another embodiment, a rubber o-ring creates an interference fit that is overcome at or prior to the pre-determined pre-torque. In another embodiment, as shown in FIGs. 27A-27D, the connection structure is formed as deformable press-fit tabs which creates an interference fit that is overcome at or prior to the pre-determined pre-torque. Such methods and/or structures may be chosen, prepared and/or developed with specific, advantageous and repeatable characteristics to meet any bolting application. A HYTORC® Z® Washer and Nut Assembly 2702 includes: threaded nut 2736; and reaction washer 2701 for receiving counter torque generated due to tightening or loosening of the threaded fastener. Note that such combinations create a nut-washer assembly having similar advantages to that of the HYTORC NUT™.

Reaction washers 2501, 2601, 2701 and/or any reasonable variation thereof may be used as suitable reaction points during tightening and or loosening of threaded fasteners when used with apparatus 2502, 2602, 2702 and/or any reasonable variation thereof. Friction coefficient increasing treatments 2517, 2617, 2717 and/or any reasonable variation thereof may include either: roughenings; polygonal surfaces; splines; knurls; spikes; grooves; slots; protruding points or corners; other such projections; or any combination thereof. They may be formed by either: knurling; sanding; blasting; milling; machining; forging; casting; forming; shaping; roughing; stamping; engraving; punching; bending; relieving washer material near the center bore; or any combination thereof. Such friction coefficient increasing treatments may be distributed evenly across lower surfaces 2513, 2613, 2713 and/or any reasonable variation thereof and/or or located away from the radius of center bores 2515, 2615, 2715 and/or any reasonable variation thereof.. They may be formed either: singularly; randomly; in an array; or any combination thereof. These reaction washers have an effective friction radius greater than an effective friction radius of threaded nuts 2536, 2636, 2736 and/or any reasonable variation thereof.

Generally, reaction washers 2501, 2601, 2701 and/or any reasonable variation thereof and threaded nuts 2536, 2636, 2736 and/or any reasonable variation thereof may be held together in any predictably deforming way to prevent unintended disassembly of assemblies 2502, 2602, 2702 and/or any reasonable variation thereof.

Advantageously, reaction washer - threaded nut assemblies 2502, 2602, 2702 and/or any reasonable variation thereof increase bolting speed, efficiency, reliability, repeatability and safety through: control over the nut geometry used with particular reaction washers; control over the reaction washer used with particular stud and/or thread sizes; and prevention of lost components.

**Tapered Fastener Assembly.** Referring to FIGs. 28A-28C by way of example, this shows an apparatus 2801 - a stepped conical fastener assembly . Apparatus 2801 has an inner sleeve member 2810 and an outer sleeve member 2820 and is used with, by way of example, a threaded stud 2830. Inner sleeve member 2810 is rotatably and threadedly engagable with stud 2830; rotatably and taperedly engagable with outer sleeve member 2820; and non-rotatably engagable with an action portion of a torque input device. Outer sleeve member 2820 is non-rotatably engagable with a reaction portion of the torque input device; and rotatably and taperedly engagable with inner sleeve member 2810. Inner sleeve member 2810, when rotated by the action portion of the torque input device, applies a load to stud 2830 to close a joint (not shown).

Inner sleeve member 2810 is an annular body and, as shown in FIGs. 28A and 28B, formed as a sleeve. It has an inner surface 2811 with an inner helical thread means 2815 engagable with an outer surface 2831 with an outer helical thread means 2834 of stud 2830. It has an outer surface 2812 with a cylindrical formation 2816 that is rotatably engagable with an inner surface 2821 with a cylindrical formation 2825 of outer sleeve member 2820. It further has a lower surface 2814 that is rotatably engagable with inner surface 2821.

Cylindrical formation 2816 is shaped as an inverted frustum of a stepped cone that has a tapered or conical appearance from the bottom up. Each step on outer surface 2812 is progressively smaller from top to bottom. An external hollow cylindrical feature is removed from the outside of inner sleeve member 2810 at a shallow depth. Successive external hollow cylindrical features are removed at regular length and width intervals. Each successive feature starts where the preceding feature stops. The geometric pattern of removed external cylindrical features continues until space restricts the addition of another internal cylindrical feature.

Inner sleeve member 2810 further has an upper surface 2813 with a coupling means 2817 which may be formed by a plurality of bores extending in an axial direction and spaced from one another in a circumferential direction. Coupling means 2817 non-rotatably engages with the action portion of the torque input device.

Outer sleeve member 2820 is an annular body and, as shown in FIG. 28B, formed as a sleeve. It has inner surface 2821 with cylindrical formation 2825 that is rotatably engagable with an outer surface 2812 with cylindrical formation 2816 of inner sleeve member 2810. Outer sleeve member 2820 has an outer surface 2822 with a coupling means 2827. Coupling means 2827 is formed by a plurality of outer spines extending in an axial direction and spaced from one another in a circumferential direction. Coupling means 2827 non-rotatably engages with inner spines of a reaction portion of the torque input device.

Cylindrical formation 2825 is shaped as a frustum of a stepped cone that has a tapered or conical appearance from the top down. Each step on inner surface 2821 is progressively smaller from top to bottom. An internal cylindrical feature is removed from the inside of outer sleeve member 2820 at a shallow depth. Successive internal cylindrical features are removed at regular length and width intervals. Each successive feature starts where the preceding feature stops. The geometric pattern of removed internal cylindrical features continues until space restricts the addition of another internal cylindrical feature.

Stud 2830 has a cylindrical shape with outer helical thread means 2834 for mating with inner helical thread means 2815 of inner sleeve 2810. An end 2832 of stud 2830 has a coupling means 2833 which may be formed by a polygonal formation 2835, which in this case is a hexagon shape. Polygonal formation 2835 allows for rotational coupling with the torque input device.

The stepped conical fastener geometry of apparatus 2801 creates tensile load in stud 2830 by the mechanical sliding action through the helical inclined plane between stud threads 2834 and inner sleeve member threads 2815. The torque input device applies rotation under torque to inner sleeve member coupling means 2817 while reacting the torque on outer sleeve member external splines 2827 to create the sliding helical thread action. As outer surface 2812 and inner surface 2821 are substantially smooth, outer sleeve member 2820 remains static while inner sleeve member 2820 rotates. The reaction element of the torque input device is rotationally coupled with end 2832 of stud 2830 by coupling means 2833. This prevents rotation of stud 2830 and allows the relative sliding action between inner sleeve member threads 2815 and studs threads 2834. Stud translation occurs in proportion to the resistance against such translation as the torque input device continually applies torque to inner sleeve member 2810 while reacting on outer sleeve member external splines 2827 and being rotationally coupled with stud 2830 by coupling means 2833.

Inner sleeve member coupling means 2817 may be formed by any suitable geometry or used with other means or features for rotationally coupling with the torque input device such as gear teeth, hex, double hex, castellation or any other common geometry that allows rotational coupling. One possible alternative is hex geometry shown in FIG. 29A as 2947.

Outer sleeve member coupling means 2826 may be formed by any suitable geometry or used with other means or features for rotationally coupling with the torque input device such as gear teeth, hex, double hex, castellation or any other common geometry that allows rotational coupling. One possible alternative is hex geometry shown in FIG. 29B as 2956.

Note that the quantity, dimensions, geometries and intervals of removed external (inner sleeve member 2810) and internal (outer sleeve member 2820) cylindrical features may vary to optimize characteristics of apparatus 2801, such as, for example, stress biasing, depending on the application.

FIG. 28B shows inner sleeve member 2810 with four external cylindrical features removed at regular length and width intervals. FIG. 28B shows outer sleeve member 2820 with four internal cylindrical features removed at regular length and width intervals. As shown in FIG. 29C, varying the quantity, dimensions, geometries and intervals from one removed external and internal cylindrical feature to the next varies the nominal angles, step heights and step widths of an outer surface 2962 with a cylindrical formation 2966 and an inner surface 2961 with a cylindrical formation 2965. Alternatively, the step length may be sized infinitely small to create a nearly smooth taper. External portions of inner sleeve member 2810 and internal portion of outer sleeve member 2820 may be removed in one step to form smooth conical surfaces, respectively.

FIG. 29D shows an outer surface 2972 with a cylindrical formation 2976 and an inner surface 2971 with a cylindrical formation 2975 with mating faces of varying vertical spacing, or step heights. This allows movement on selective steps only as other steps are loaded. Plastic deformation allows vertical movement therefore strategically biasing stress distribution across each stepped face. In other words, increased clearance or spacing between mating faces of inner and outer sleeve members 2810 and 2820 allow for radial expansion during loading.

FIG. 29E shows an outer surface 2982 with a cylindrical formation 2986 and an inner surface 2981 with a cylindrical formation 2985 with mating faces of varying step face angles. This promotes more evenly and controlled biasing stress distribution across the steps. In other words, either or both inner and outer sleeve members 2810 and 2820 may have stepped vertical surfaces with varying pitch angles to bias stress to selective horizontal stepped surfaces.

FIG. 29F shows outer sleeve member 2820 having internal features at bottom that couple with similar mating external features added to stud 2830. These may include splines, knurls, hex, slots, double hex or other geometry. They allow axial translation of stud 2830 but couple rotational movement of outer sleeve member 2820 and stud 2830. Both coupling means 2833 formed of polygonal formation 2835 and the necessity to couple this hex with the reaction member of the torque input device are no longer necessary. Internal spline 2998 and mating external spline 2999 form a spline interface between outer sleeve member 2820 and stud 2830, respectively.

In standard bolting industry terms, apparatus 2801 includes a nut (inner sleeve member 2810) and a washer (outer sleeve member 2820). The standard bolting flat surface nut and washer interface is changed. The torque reaction point is moved upwards, as compared to conventional three-piece fasteners. Apparatus utilizes the concept of conventional three-piece fasteners, which allows for surface conditioning of the outer sleeve to prevent galling, leveraged with a conventional nut and washer arrangement, which retains radial strain such that the inner sleeve may be surface conditioned with minimal risk of fracture.

Advantageously, the apparatus allows for an increased load bearing surface area between the inner sleeve member, which is clamped, and the outer sleeve members without increasing the overall diameter of the apparatus; a three dimensional load bearing surface area rather than a conventional two dimensional plane; more efficiently and evenly distributed load stress distribution over the load bearing surface area; higher torsion strength; and apparatus with lower mass, dimensions and volume.

**Tapered Torsional Coupling.** Referring to FIGs. 30A-30D by way of example, this shows an apparatus 3001 for torsionally coupling a threaded fastener 3010 and a torque input device 3002 in accordance with an embodiment. Apparatus 3001 has a first coupling member 3003 with a tapered external surface 3004 and a polygonal formation 3005; and a second coupling member 3013 having an inversely tapered internal surface 3014 and a polygonal formation 3015 non-rotatably engagable with tapered external surface 3004 of first coupling member 3003.

In other words, apparatus 3001 torsionally couples torque input device 3002 and threaded fastener 3010 of the kind having a shank 3030 with a tapered axial bore 3012 at one end. Apparatus 3001 includes coupling member 3003 having inversely tapered external surface 3004 non-rotatably engagable with tapered axial bore 3012.

Discussion related to quantity, dimensions, geometries and intervals of removed external (inner sleeve member 2810) and internal (outer sleeve member 2820) cylindrical features of FIGs. 28A-10 generally applies to the quantity, dimensions, geometries and intervals of removed external (first coupling member 3003) and internal (second sleeve member 3013) polygonal features of FIGs. 30A-30D. Note that the interface between inner and outer sleeve members 2810 and 2820 is cylindrical and smooth thus allowing relative rotation. Note, however, that the interface between first and second coupling members is polygonal and angled thus no relative rotation is possible.

A conical geometry for torsional coupling of a threaded fastener and a torque output device yields a better load stress distribution. The embodiment of FIGs. 30A-30D introduces a low profile coupling geometry that will allow a torsion-coupling feature on the top of a stud to be formed internally. This distributes stresses more evenly and therefore allows for a more efficient packaging of the coupling features.

Generally, a stepped 12-point hole in the top surface of the stud is used for torsion coupling with a three-piece mechanical stud-tensioning device and/or an apparatus for use with the stud. An internal 12-point feature is placed in the top of the stud at a shallow depth. Successive 12-point features are progressively added at smaller 12-point sizes each at shallow depths and each starting where the preceding 12-point stopped. The pattern of decreasing 12-point geometry will decrease until space restricts the addition of another 12 point. Advantageously, a shaft of the torque input device with external matching features for each of the steps will allow for evenly distributed stress distribution and high torsion strength while decreasing the mass and volume of the studs.

As shown in FIGs. 31B and 31C, varying the depth and size change from one 12-point feature to the next will increase or decrease the nominal angle of the conical shape these features form. The 12-point feature can be substituted with any geometry that will prevent rotation between the two parts, such as the hex in FIG. 31A. Additionally, the step depth can be sized infinitely small to create a smooth taper. Mixed step sizes and geometries can be used to optimize production of such a coupling.

**Two-Part Tapered Nut Assembly.** Referring to FIGs. 32A-32D, by way of example, these show a two-part nut assembly 3202 for use with either a stud or a bolt of a threaded fastener (not shown) and a torque device (not shown) including: a rigid inner member 3210 having an internal surface threadedly engagable with the fastener and an external surface defined by a plurality of steps that form a taper; an outer member 3220 having an inversely tapered internal surface nonrotatably engagable with the tapered external surface of the inner member; and wherein two-part nut assembly 3202, when rotated by an action portion of the torque device, applies a load to the threaded fastener. The inner member is either superficially, partially or thoroughly metallurgically hardened.

Inner member 3210 is a geometric body and, as shown in FIGs. 32B and 32C, formed as a threaded insert. It has an inner surface 3211 with an inner helical thread means 3217 engagable with an outer surface having an outer helical thread means of the stud or the bolt of the threaded fastener. It has an outer surface 3212 with a geometric formation 3216 that is nonrotatably engagable with an inner surface 3221 having a geometric formation 3225 of outer member 3220. Inner member 3210 further has a lower surface 3218 that is adjacent to and co-terminates with a lower surface 3230 of outer member 3220.

In this exemplary embodiment, geometric formation 3216 is shaped as a modified inverted frustum of an angled hexagonal pyramid that has a tapered or conical appearance from the bottom up. A radius of each step on outer surface 3212 is progressively smaller from the top down. An external hollow modified hexagonal feature is removed from the outside of inner member 3210 at a relatively shallow depth. Successive external hollow modified hexagonal features are removed at regular length and width intervals. Each successive feature starts where the preceding feature stops. The geometric pattern of removed external modified hexagonal features continues until space (height) restricts the addition of another such feature.

Inner member 3210 further has an upper surface 3213. Upper surface 3213 may have a coupling means, similar to coupling means 2817 of stepped conical fastener assembly 2801, which would non-rotatably engage with the action portion of the torque device.

Outer member 3220 is a geometric body and, as shown in FIGs. 32A-32C, formed as a sleeve. It has inner surface 3221 with a geometric formation 3225 that is nonrotatably engagable with outer surface 3212 of inner member 3210. Outer member 3220 has an outer surface 3222 with a geometric formation 3226. Geometric formation 3226 is also formed as a coupling means 3229 which nonrotatably engages with the action portion of the torque device. Rotational coupling means 3229 is formed as a modified hexagonal feature in this exemplary embodiment, but may be formed with any suitable geometry. And it may be similar to coupling means 2827 of stepped conical fastener assembly 2801.

In this exemplary embodiment, geometric formation 3225 is shaped as a modified frustum of an angled hexagonal pyramid that also has a tapered or conical appearance from the bottom up. A radius of each step on inner surface 3221 is progressively smaller from the top down. An internal modified hexagonal feature is removed from the inside of outer member 3220 at a relatively shallow depth. Successive internal modified hexagonal features are removed at regular length and width intervals. Each successive feature starts where the preceding feature stops. The geometric pattern of removed internal modified hexagonal features continues until space restricts the addition of another internal modified hexagonal feature.

More generally, outer surface 3212 of inner member 3210 and inner surface 3221 of outer member 3220 are shaped as any suitable rotational coupling means (polygonal and angled in nature), such that inner member 3210 and outer member 3220 are not relatively rotatable. Indeed the action portion of the torque device applies a load to the threaded fastener when apparatus 3202 is rotated by either inner member 3210, outer member 3220 or both inner and outer members 3210 and 3220 due to this rotational coupling. Note that outer member 3220 substantially surrounds inner member 3210. Note that inner member 3210 and outer member 3220 may be pressed together in a predictably deforming way to prevent unintended disassembly of and/or any relaxation stemming from partially mated surfaces of apparatus 3202.

A geometry of a load bearing surface area between inner member 3210 and outer member 3220 allows for improved and strategically biased vertical and radial stress distribution without having to substantially increase a diameter of apparatus 3202. Geometric formations 3216 and 3225 could be shaped either as frustums of angled stepped cones for a relatively low plurality of steps or frustums of angled smooth cones for a relatively high plurality of steps. Note that variable step quantities, dimensions, geometries, angles and/or intervals may be used to achieve such benefits.

One such modification to geometric formation 3216 includes rounded corners 3218 for improved distribution of hoop stresses from thread loading. Note that geometric formation 3216 may be formed with any suitable geometry. One modification to geometric formation 3225 includes rounded corners 3227 for improved distribution of hoop stresses from thread loading. Rounded corners 3227 also accommodate rounded corners 3218 on inner member 3210. Note that geometric formation 3225 may be formed with any suitable geometry. Upper surface 3213 may include an upper edge portion 3215 such as that which is shown in FIG. 32B for improved distribution of bolting stresses. Outer member 3220 further has upper surface 3223 such as that which is shown in FIG. 32B. Upper surface 3223 is slanted downward, or beveled, for improved distribution of bolting stresses. Lower surface 3230 may include a lower edge portion 3228 such as that which is shown in FIG. 32C for improved distribution of bolting stresses.

Referring to FIGs. 32C and 32D, by way of example, these show apparatus 3202 and an apparatus 3202A. The taper of inner member 3210 of apparatus 3202 increases from upper surface 3213 to lower surface 3218. Likewise, the taper of outer member 3220 decreases from upper surface 3223 to lower surface 3230. Apparatus 3202 illustrates a preferred embodiment. Conversely, the taper of inner member 3210A of apparatus 3202A decreases from an upper surface 3213A to a lower surface 3218A. Likewise, the taper of an outer member 3220A increases from an upper surface 3223A to a lower surface 3230A. FIG. 32D illustrates an alternative embodiment, which may be used in limited situations. Note that additional features may be included with apparatus 3202A to increase its viability. One such feature may include a lip, formed on upper surface 3213A, extending radially outward to ensure that outer member 3220A remains adjacent inner member 3210A during loading.

Recall that apparatus 3202 eliminates thread galling. Catastrophic fractures and load loss have previously limited use of hardening processes with threaded fasteners. Advantageously, inner member 3210 of apparatus 3202, however, is either superficially, partially or thoroughly metallurgically hardened. Many metallurgical hardening processes may be used, such as: flame hardening; induction hardening; carburizing; boriding; nitriding; cyaniding; carbonitridring; ferritic nitrocarburizing; annealing; quenching; aging; tempering; heat treating (differential, flame, induction, case, etc.); cold treating (cryogenic); or any combination thereof. Cracks which would otherwise lead to catastrophic failure and/or load loss are prevented with apparatus 3202 as non-metallurigically hardened outer member 3220 substantially surrounds metallurigically hardened inner member 3210.

The stepped conical fastener geometry of apparatus 3202 creates tensile load in the stud or the bolt by the mechanical sliding action through the helical inclined plane between stud threads and inner member threads 3217. The sliding helical thread action is created by using the torque device to apply rotation under torque to either inner member 3210, outer member 3220 or both inner and outer members 3210 and 3220.

**HYTORC® Z® Washer Used with the Two-Part Tapered Nut Assembly.** An equal and opposite reaction force is generated during the torqueing process which must be transferred to a suitable reaction point, a stationary object. Note that lower surfaces 3218 and/or 3230 of inner and/or outer members 3210 and/or 3220, as shown in FIG. 32C, rest on an upper surface of the joint. Alternatively, as shown in FIGs. 33A-33C, a reaction washer 3301 may be formed between these lower surfaces and the upper surface of the joint. Reaction washer 3301 is formed as a HYTORC® Z® Washer, which is disclosed fully in the present application and in WO 2015/095425 A2An apparatus 3202B includes: two-part nut assembly 3202; and reaction washer 3301 for receiving counter torque generated due to tightening or loosening of the threaded fastener.

Reaction washer 3301 includes: an outer edge 3304 having a geometric shape 3309 that allows for rotational coupling with a torque device via a dual drive coaxial action and reaction assembly (not shown); and a bottom surface 3303 having friction coefficient increasing treatments 3307 biased in areas outward from a center bore 3305. Reaction washer 3301 is shown releasably attached to two-part nut assembly 3202. The bond between reaction washer 3301 and two-part nut assembly 3202 breaks at a predetermined pre-torque and reaction washer 3301 becomes a suitable reaction point. In this example reaction washer 3301 and nut assembly 3202 separate once the bond breaks once compression and friction forces overcomes such bond. Any suitable bonding method may be used. Note that such combination creates a nut-washer assembly having similar advantages to that of the HYTORC NUT™. Alternatively reaction washer 3301 and nut assembly 3202 may be separate components.

Reaction washer 3301 may be used as a suitable reaction point during tightening and or loosening of threaded fasteners used with apparatus 3202. Friction coefficient increasing treatments 3307 may include either: roughenings; polygonal surfaces; splines; knurls; spikes; grooves; slots; protruding points or corners; other such projections; or any combination thereof. They may be formed by either: knurling; sanding; blasting; milling; machining; forging; casting; forming; shaping; roughing; stamping; engraving; punching; bending; relieving washer material near the center bore; or any combination thereof. Such friction coefficient increasing treatments may be distributed evenly across lower surface 3303 or located away from the radius of center bore 3305. They may be formed either: singularly; randomly; in an array; or any combination thereof. These reaction washers have an effective friction radius greater than an effective friction radius of assembly 3202.

Note that discussion related to apparatus 2801 in FIGs. 28-29 may be adapted to apparatus 3202. Recall, however, that the inner and the outer sleeve members of apparatus 2801 are not rotatably coupled, and therefore not relatively rotatable. For example, upper surface 3213 may have a coupling means, similar to coupling means 2817 of stepped conical fastener assembly 2801, which would non-rotatably engage with the action portion of the torque device. Such an inner member coupling means may be formed by any suitable geometry or used with other means or features for rotationally coupling with the torque device such as gear teeth, hex, double hex, castellation or any other common geometry that allows rotational coupling. One possible alternative is hex geometry shown in FIG. 29A as 2747. Similarly, outer member coupling means 3229 may be formed by any suitable geometry or used with other means or features for rotationally coupling with the torque device such as gear teeth, hex, double hex, castellation or any other common geometry that allows rotational coupling. One possible alternative is hex geometry shown in FIG. 29B as 2956. Note that the quantity, dimensions, geometries and intervals of removed external (inner member 3210) and internal (outer member 3220) cylindrical features may vary to optimize characteristics of apparatus 3202, such as, for example, stress biasing, depending on the application.

FIGs. 32A-32C show inner sleeve member 3210 with four external cylindrical features removed at regular length and width intervals and outer sleeve member 3220 with four internal cylindrical features removed at regular length and width intervals. As shown in FIG. 29C, however, varying the quantity, dimensions, geometries and intervals from one removed external and internal cylindrical feature to the next varies the nominal angles, step heights and step widths. Alternatively, the step length may be sized infinitely small to create a nearly smooth taper. Angled external portions of inner sleeve member 3210 and angled internal portion of outer sleeve member 3220 may be removed in one step to form a relatively smooth, yet rotatably coupled, conical surface.

FIGs. 32A-32C show mating faces of inner member 3210 and outer member 3220 of constant vertical spacing, or step heights. FIG. 29D shows that mating faces of apparatus 3202 may have varying vertical spacing, or step heights. This allows movement on selective steps only as other steps are loaded. Plastic deformation allows vertical movement therefore strategically biasing stress distribution across each stepped face. In other words, increased clearance or spacing between mating faces of inner and outer sleeve members 2810 and 2820 allow for radial expansion during loading. Note that this feature may be of limited applicability due to the metallurgically hardened characteristics of inner member 3210.

FIGs. 32A-32C show mating faces of inner member 3210 and outer member 3220 of constant step face angles, namely 90°. FIG. 29E shows that mating faces of apparatus 3202 may have varying step face angles. This promotes more evenly and controlled biasing stress distribution across the steps. In other words, either or both inner and outer members 3210 and 3220 may have stepped vertical surfaces with varying pitch angles to bias stress to selective horizontal stepped surfaces.

Note that discussion related to apparatus 3001 in FIGs. 30 and 31 may be adapted to apparatus 3202. Recall, however, that apparatus 3001 is an alternative for known rotatable coupling between a torque device and a stud, while apparatus 3202 is an alternative for known threaded nuts. For example, as shown in FIGs. 31B and 31C, varying the depth and size change from one 12-point feature to the next will increase or decrease the nominal angle of the conical shape these features form in apparatus 3202. The 12-point feature can be substituted with any geometry that will prevent rotation between the two parts, such as the hex in FIG. 31A. Additionally, the step depth can be sized infinitely small to create a smooth taper. Mixed step sizes and geometries can be used to optimize production of such a coupling.

Threaded fasteners having either studs or a bolts and apparatus 3202 are disclosed herein. Torque devices either pneumatically, electrically, hydraulically or manually driven to tighten or loosen such threaded fasteners are disclosed herein. And systems consisting of such threaded fasteners and torque devices are disclosed herein.

Generally, two-part nut assemblies disclosed herein have decreased, relative to known three piece nut assemblies, dimensions for limited bolting clearances and increased, relative to known nuts, prevention of thread galling, fractures and load loss. A load bearing surface area between the inner and the outer members allows for strategically biased vertical and radial stress distribution without having to substantially increase dimensions. They effectively deal with tensile hoop stresses typical of industrial threaded nuts in such a way that minimizes the likelihood of fractures. Put another way, the compact dimensions and selective metallurgical hardening of nut assemblies disclosed herein minimize the risk of fractures and prevent load loss from any fractures that may form. The two-piece structure isolates the portion(s) that will see the highest tensile hoop stresses, namely near the internal threads, to prevent fractures from migrating through the entire assembly. Thread created hoop stress is constrained strictly to the inner member. Strain and deformation that lead to fracture initiation in hardened or surface hardened parts is controlled. And even if fractures were to form, they would only travel through the hardened internal member of the assembly and not lead to catastrophic load loss.

It will be understood that each of the elements described above, or two or more together, may also find a useful application in other types of constructions differing from the types described above. The features disclosed in the foregoing description, the following claims and/or the accompanying drawings, expressed in their specific forms or in terms of a means for performing the disclosed function, or a method or process for attaining the disclosed result, as appropriate, may, separately, or in any combination of such features, be utilized in diverse forms thereof. One such example includes a Z®-Squirter® Washer in combination with a two-part tapered nut assembly in any configuration disclosed with respect to FIGs. 25, 26, 27, 33 and/or any portions thereof.

**Two-Part Tapered Thread Nut Assembly.** While the embodiments of figures 1-33 are not covered by the claimed invention, figures 34A-34C and 35A-35C are the only embodiments according to the claimed invention. Referring to FIGs. 34A-34C, by way of example, these show a two-part tapered thread nut assembly 3402 according to the present invention for use with either a stud or a bolt of a threaded fastener (not shown) and a torque device (not shown) including: a rigid inner member 3410 having an inner surface threadedly engagable with the fastener and an outer surface defined by a thread formation that forms a taper; an outer member 3420 having an inner surface defined by an inversely tapered thread formation that is threadedly engagable with the tapered thread formation of the outer surface of inner member 3410; and wherein two-part nut assembly 3402, when rotated by an action portion of the torque device, applies a load to the threaded fastener. The inner member is either superficially, partially and/or thoroughly metallurgically hardened.

Inner member 3410 is a geometric body and, as shown in FIGs. 34B and 34C, formed as a threaded insert. It has an inner surface 3411 with an inner helical thread means 3417 engagable with an outer surface having an outer helical thread means of the stud or the bolt of the threaded fastener. It has an outer surface 3412 with a geometric formation, or tapered thread formation, 3416 that is rotatably engagable with an inner surface 3421 having a geometric formation, or inversely tapered thread formation, 3425 of outer member 3420. Inner member 3410 further has a lower surface 3418 that is adjacent to and co-terminates with a lower surface 3430 of outer member 3420.

In this exemplary embodiment, tapered thread formation formation 3416 is shaped as a modified inverted frustum of a smooth conical pyramid that has a tapered or conical appearance from the bottom up. A radius of each thread on outer surface 3412 is progressively smaller from the top down. An external hollow circular feature is removed from the outside of inner member 3410 at a relatively shallow depth. Successive external hollow circular features are removed at continuous length and width intervals. Each successive feature starts where the preceding feature stops. The geometric pattern of removed external circular features continues until space (height) restricts the addition of another such feature.

Inner member 3410 further has an upper surface 3413. Upper surface 3413 may have a coupling means, similar to coupling means 2817 of stepped conical fastener assembly 2801, which would non-rotatably engage with the action portion of the torque device.

Outer member 3420 is a geometric body and, as shown in FIGs. 34A-34C, formed as a sleeve. It has inner surface 3421 with inversely tapered thread formation 3425 that is rotatably engagable with outer surface 3412 of inner member 3410. Outer member 3420 has an outer surface 3422 with a geometric formation 3426. Geometric formation 3426 is also formed as a coupling means 3429 which nonrotatably engages with the action portion of the torque device. Rotational coupling means 3429 is formed as a modified hexagonal feature in this exemplary embodiment, but may be formed with any suitable geometry. And it may be similar to coupling means 2827 of stepped conical fastener assembly 2801.

In this exemplary embodiment, inversely tapered thread formation 3425 is shaped as a modified frustum of a smooth conical pyramid that has a tapered or conical appearance from the bottom up. A radius of each thread on inner surface 3421 is progressively smaller from the top down. An internal circular feature is removed from the inside of outer member 3420 at a relatively shallow depth. Successive internal circular features are removed at continuous length and width intervals. Each successive feature starts where the preceding feature stops. The geometric pattern of removed internal circular features continues until space restricts the addition of another internal circular feature.

More generally, outer surface 3412 of inner member 3410 and inner surface 3421 of outer member 3220 are shaped as any suitable relatively rotatable means (circular and smooth in nature), such that inner member 3410 and outer member 3420 are relatively rotatable until inner and outer members 3410 and 3420 are suitably assembled. Indeed the action portion of the torque device applies a load to the threaded fastener when apparatus 3402 is rotated by either inner member 3410, outer member 3420 or both inner and outer members 3410 and 3420 due to this relatively rotatable means until suitably assembled. Note that outer member 3420 substantially surrounds inner member 3210. Note that inner member 3210 and outer member 3420 may be pressed together in a predictably deforming way to prevent unintended disassembly of and/or any relaxation stemming from partially mated surfaces of apparatus 3402.

A geometry of a load bearing surface area between inner member 3410 and outer member 3420 allows for improved and strategically biased vertical and radial stress distribution without having to substantially increase a diameter of apparatus 3402. Tapered thread formations 3416 and 3425 could be shaped either as frustums of smooth stepped cones for a relatively low plurality of steps or frustums of smoothly sloped cones for a relatively high plurality of steps. Note that variable step quantities, dimensions, geometries, angles and/or intervals may be used to achieve such benefits. Modifications for improved distribution of bolting stresses may include similar features to those described in FIGs. 32B like, for example, rounded corners 3218 and 3227, upper edge portion 3215, slanted upper surface 3223 and/or lower edge portion 3228.

Referring to FIG. 34C, by way of example, it shows apparatus 3402. The taper of inner member 3410 of apparatus 3402 increases from upper surface 3413 to lower surface 3418. Likewise, the taper of outer member 3420 decreases from an upper surface 3423A to lower surface 3430. Another embodiment of apparatus 3402 not shown may correspond to apparatus 3202A of FIG. 32D.

Recall that apparatus 3402 of the present invention eliminates thread galling. Catastrophic fractures and load loss have previously limited use of hardening processes with threaded fasteners. Advantageously, inner member 3410 of apparatus 3402, however, is either superficially, partially or thoroughly metallurgically hardened. Many metallurgical hardening processes may be used, such as: flame hardening; induction hardening; carburizing; boriding; nitriding; cyaniding; carbonitridring; ferritic nitrocarburizing; annealing; quenching; aging; tempering; heat treating (differential, flame, induction, case, etc.); cold treating (cryogenic); or any combination thereof. Cracks which would otherwise lead to catastrophic failure and/or load loss are prevented with apparatus 3402 as non-metallurigically hardened outer member 3420 substantially surrounds metallurigically hardened inner member 3410.

The smooth conical fastener geometry of apparatus 3402 creates tensile load in the stud or the bolt by the mechanical sliding action through the helical inclined plane between stud threads and inner member threads 3417. The sliding helical thread action is created by using the torque device to apply rotation under torque to either inner member 3410, outer member 3420 or both inner and outer members 3410 and 3420.

**HYTORC® Z® Washer Used with the Two-Part Tapered Thread Nut Assembly.** An equal and opposite reaction force is generated during the torqueing process which must be transferred to a suitable reaction point, a stationary object. Note that lower surfaces 3418 and/or 3430 of inner and/or outer members 3410 and/or 3420, as shown in FIG. 34C, rest on an upper surface of the joint. Alternatively, as shown in FIGs. 35A-35C, a reaction washer 3501 may be formed between these lower surfaces and the upper surface of the joint. Reaction washer 3501 is formed as a HYTORC® Z® Washer, which is disclosed fully in the present application and in WO 2015/095425 A2An apparatus 3402B includes: two-part tapered thread nut assembly 3402; and reaction washer 3501 for receiving counter torque generated due to tightening or loosening of the threaded fastener. Note that discussion related to apparatus 3202B of FIGs. 33A-33C may be adapted to apparatus 3402B of FIGs. 35A-35C. Note that discussion related to apparatus 2801 in FIGs. 28-29 may be adapted to apparatus 3402 and 3402B. Note that discussion related to apparatus 3001 in FIGs. 30 and 31 may be adapted to apparatus 3402 and 3402B.

Threaded fasteners having either studs or a bolts and apparatus 3402 and 3402B are disclosed herein. Torque devices either pneumatically, electrically, hydraulically or manually driven to tighten or loosen such threaded fasteners are disclosed herein. And systems consisting of such threaded fasteners and torque devices are disclosed herein.

Generally, two-part nut assemblies disclosed herein have decreased, relative to known three piece nut assemblies, dimensions for limited bolting clearances and increased, relative to known nuts, prevention of thread galling, fractures and load loss. A load bearing surface area between the inner and the outer members allows for strategically biased vertical and radial stress distribution without having to substantially increase dimensions. They effectively deal with tensile hoop stresses typical of industrial threaded nuts in such a way that minimizes the likelihood of fractures. Put another way, the compact dimensions and selective metallurgical hardening of nut assemblies disclosed herein minimize the risk of fractures and prevent load loss from any fractures that may form. The two-piece structure isolates the portion(s) that will see the highest tensile hoop stresses, namely near the internal threads, to prevent fractures from migrating through the entire assembly. Thread created hoop stress is constrained strictly to the inner member. Strain and deformation that lead to fracture initiation in hardened or surface hardened parts is controlled. And even if fractures were to form, they would only travel through the hardened internal member of the assembly and not lead to catastrophic load loss.

**Summary.** Washer 1 is generally shown as a flower washer with a knurled bottom face to provide reaction torque. Per FIGs. 8A-8L, note the suitability of nearly any external shape which non-rotatably engages with reaction sockets, plates and links Also note the suitability of nearly any surface feature that increases facial friction. Examples of external shapes include: any suitable geometric shape like pentagon, hexagon, octagon, etc.; knurls; cutouts; pressed holes; castellations; etc. Examples of surface friction enhancement features include: patterns; finishes; treatments; coatings; platings; roughness; etc. Inventively even before seating of the nut and/or bolt head, the coaxial reaction surface becomes a viable and accessible coaxial stationary object in which to transfer reaction forces of the tools.

Generally tools 10A, 10B, 10F, 10G, 10H and 101 may do any of the following during the intermittent force mode. The tools may run down the nut or the nut and the washer with an intermittent turning force in one direction. The tools may run up the nut or the nut and the washer with the intermittent turning force in an opposite direction. Or the tools may either impact, vibrate or both impact and vibrate the nut or the nut and the washer with either an intermittent turning force to apply vibration and rotation in the opposite direction, the intermittent vibration force to apply vibration, or both.

More specifically tools 10A, 10B, 10F, 10G, 10H and 10I may do any of the following during the intermittent force mode. The tools may run down the nut or the nut and the washer with the intermittent turning force in one direction to seat the nut from a restrictively rotatable state with significant adverse bolting application characteristics to a pre-determined pre-tightening torque state and compress the washer between a joint to be tightened and the seated nut. The tools may run up the nut or the nut and the washer with the intermittent turning force in the opposite direction to unseat the nut from the pre-determined pre-tightening torque state to the restrictively rotatable state with significant adverse bolting application characteristics and decompress the washer between the joint to be loosened and the unseated nut. Or the tools may impact, vibrate or both the nut, and the washer with an intermittent turning force to apply vibration and rotation in the opposite direction, the intermittent vibration force to apply vibration, or both, from an inadequately pulverized thread corrosion state to an adequately pulverized thread corrosion state. For example the tools may generate ultrasonic sound waves via an ultrasonic wave generator, such as vibration force mechanism 960, to vibrate the fastener at ultra-high speeds to pulverize thread corrosion.

Often the intermittent (impact, vibration, ultrasonic, etc.) force is necessary in run down to firmly compress the washer between the nut and the flange face. Absent this impact caused compression the washer might not take the reaction force due to the two frictions of the two washer faces. When properly compressed, the washer face abutting the nut receives a clockwise turning friction because of the torque output of the tool and an equal and opposite counterclockwise turning friction because of the reaction force. As such the turning friction from the washer face that abuts the flange face prevents the washer from turning. In other words the tool is designed to hold the washer stationary while turning the nut, which eliminates the usual side load and the surface differences from nut to nut. Better control of the thread and surface friction is achieved for improved translation of torque to fastener load.

Generally tools 10A, 10B, 10F, 10G, 10H and 101 may do any of the following during the higher resistance torque mode. The tools may tighten the nut with a lower speed, higher torque turning force in one direction and apply a reaction force in an opposite direction to the washer. And/or the tools may loosens the nut with the lower speed, higher torque turning force in the opposite direction and apply the reaction force in the one direction to the washer.

More specifically tools 10A, 10B, 10F, 10G, 10H and 101 may do any of the following during the higher resistance torque mode. The tools may torque up the nut with the lower speed, higher torque turning force in the one direction to tighten the nut from the pre-determined pre-tightening torque state to a pre-determined tightening torque state and apply the reaction force in the opposite direction to the washer to pressurize the washer between a loosened joint and the tightened nut. And/or the tools may torque down the nut with the lower speed, higher torque turning force in the opposite direction to loosen the nut from the pre-determined tightening torque state to the pre-determined pre-tightening torque state and apply the reaction force in the one direction to the washer to depressurize the washer between the loosened joint and the loosened nut.

Generally tools 10A, 10B, 10F, 10G, 10H and 101 may do any of the following during the lower resistance torque mode. The tools may run down the nut or the nut and the washer with a higher speed, lower torque turning force in the one direction. And/or the tools may run up the nut or the nut and the washer with the higher speed, lower torque turning force in the opposite direction.

More specifically tools 10A, 10B, 10F, 10G, 10H and 10I may do any of the following during the lower resistance torque mode. The tools may run down the nut or the nut and the washer with a higher speed, lower torque turning force in the one direction to seat the nut from a freely rotatable state with insignificant adverse bolting application characteristics to the pre-determined pre-tightening torque state and compress the washer between the joint to be tightened and the seated nut. And/or the tools may run up the nut or the nut and the washer with the higher speed, lower torque turning force in the opposite direction to unseat the nut from the pre-determined pre-tightening torque state to the freely rotatable state with insignificant adverse bolting application characteristics and decompress the washer between the joint to be loosened and the unseated nut.

Generally tools 10A, 10B, 10F, 10G, 10H and 101 may tighten, loosen or tighten and loosen the nut in the higher resistance torque mode. The tools may run up, run down or impact the nut or the nut and the washer in the intermittent torque mode or the lower resistance torque mode. The tools may switch from the intermittent torque mode to the higher resistance torque mode upon seating the nut and compressing the washer at the pre-determined pre-tightening torque state and/or adequate pulverization of thread corrosion. The tools may switch from the higher resistance torque mode to the intermittent torque mode and/or the lower resistance torque mode upon unseating the nut and decompressing the washer at the pre-determined pre-loosening torque state. The tools may switch from the lower resistance torque mode to the higher resistance torque mode upon seating the nut and compressing the washer at the pre-determined pre-tightening torque state.

In operation the tools can switch: from the higher resistance torque mode to the intermittent torque mode; from the higher resistance torque mode to the lower resistance torque mode; from the lower resistance torque mode to the intermittent torque mode; from the lower resistance torque mode to the higher resistance torque mode; from the intermittent torque mode to the higher resistance torque mode; or from the intermittent torque mode to the lower resistance torque mode.

Activation or deactivation of the vibration mechanism or the torque multiplication mechanism may occur manually or automatically. Thus the switching mechanism may be manual or automatic. Further the switching mechanism and therefore any mode or combination of modes and corresponding mechanisms may be activated automatically in accordance with an observed load on the fastener. For example a gall-minimized power tool may need vibration and/or impaction to pulverize corrosion in a tightened fastener and to run up or down the nut in high speed. The torque-tightened nut cannot turn with just vibration and/or impaction. An operator may need to activate vibration and/or impaction to pulverize up dried corrosion in the torque tightened nut, which can occur independent of or in combination with the torque multiplication mechanism. As noted the torque necessary to loosen the nut is greater than the initial tightening torque as lubrication is dried or gone, corrosion is present, and the stud is still loaded and stretched. In other words, it takes higher torque values to unload and unstretch the stud. Once the nut is loosened it can be turned in higher speed, or run upped, during the lower resistance torque mode and/or the intermittent torque mode. The nut, however, may have to free itself over the corroded and/or damaged or flawed stud threads. Often this requires vibration and/or intermittent force in combination with the torque multiplication mechanism. In run down the nut is turned in higher speed during the lower resistance torque mode and/or the intermittent torque mode. Here too the lower resistance torque mode alone may be insufficient to overcome corroded and/or damaged or flawed stud threads. Similarly often this requires vibration or intermittent force and/or intermittent force in combination with the torque multiplication mechanism.

Generally methods are disclosed of gall-minimized tightening and/or loosening of an industrial threaded fastener of the kind having a coaxial reaction surface, a stud and either a nut threadedly engageable with the stud or a stud-head connected to the stud with a reaction arm-free power tool of the kind having: a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance. The tightening method includes: running down in one direction either the nut, the stud-head, the nut and the coaxial reaction surface or the stud-head and the coaxial reaction surface; and torqueing tight in the one direction either the nut or the stud-head while reacting in the opposite direction off of the coaxial reaction surface. The loosening method includes: torqueing loose in the opposite direction either the nut or the stud-head while reacting in the one direction off of the coaxial reaction surface; and running up in the opposite direction either the nut, the stud-head, the nut and the coaxial reaction surface or the stud-head and the coaxial reaction surface.

The following discussion relates to configurations of reaction arm-free power tools for gall-reduced tightening and loosening of industrial fasteners Note that like terms are interchangeable, such as for example: intensifier, multiplier and multiplication; impact and impaction.

More specifically, in one embodiment of the impact mode, the tool housing and the gear stages stand still while the impact rattles. When the impact mechanism is distant from the motor, a shaft from the motor goes through the center of the multipliers to the impact mechanism and from there to the output drive. When the impact mechanism is immediately after the motor and in front of the multipliers the motor drives the impact mechanism and a shaft goes from the impact mechanism through the center of the multipliers to the output drive

In another embodiment of the impact mode, the tool housing and the gear stages rotate in unison while the impact rattles by locking up the gear stages. This may be accomplished by connecting either: the sun gear with the ring gear; the sun gear with the gear cage; or the gear cage with the ring gear of a planetary stage. In each case all gear cages and the housing act like one turning extension from the motor to the impact mechanism or from the impact mechanism to the output drive of the tool.

In another embodiment of the impact mode, the tool housing stands still and the gear cages rotate in unison while the impact rattles by locking up the gear cages with one another. When the impact mechanism is distant from the motor the gear cage(s) act like an extension inside the housing from the motor to the impact mechanism. When the impact mechanism is immediately after the motor and in front of the multipliers the gear cages or gear cage act like an extension inside the housing from the impact mechanism to the output drive of the tool.

Generally during LSHT mode at least two multiplication transmitters rotate relative to the other. In the multiplier mode, the tool housing always rotates opposite to the sun gears and the output shaft of the multipliers, which is why the tool housing has to react. When torque is intensified by the multiplier, the turning speed is so slow that the impact mechanism is ineffective. If the impact mechanism is located after the multiplier and close to the output drive of the tool, the impact mechanism will not impact if it turns with the last sun gear. If the impact mechanism is located before the multiplier and close to the motor, the impact mechanism turns at high speed and needs to be locked.

In one embodiment where the impact mechanism is distant from the motor, the following occurs: the impact mechanism stands still while the multipliers turn; the output shaft from the motor goes to the multiplier for torque multiplication; and the last sun gear extends through the impact mechanism to the output drive. When the impact mechanism is immediately after the motor and in front of the multipliers, the output shaft from the motor goes through the impact mechanism to the multiplier for torque multiplication and the last sun gear extends to the output drive.

In another embodiment, the impact mechanism turns at the speed of the last sun gear of the force applying multipliers. When the impact mechanism is distant from the motor, the output shaft from the motor goes to the multiplier for torque multiplication and the last sun gear turns the impact mechanism, which turns the output shaft of the tool. When the impact mechanism is immediately after the motor and in front of the multipliers, turning the impact mechanism to turn the multipliers would result in impacting, which is to be avoided. On the other hand, the impact mechanism can be locked by locking the hammer with the impact housing, or by locking the hammer with the anvil. The impact mechanism acts as an extension between the motor output drive and the first sun gear of the multiplier.

The speed of the last sun gear of the multiplier may be high enough to operate the impact mechanism. Impaction on the output shaft of the tool is avoidable by locking the hammer with the impact housing, the hammer with the anvil, the impact housing with the tool housing or the hammer with the tool housing.

In a specific embodiment of LSHT mode the multiplication mechanism is close to the motor and before the impaction mechanism. The motor bypasses the multiplication mechanism and extends its output force through at least one part of the multiplication mechanism by means of a pin toward the output drive. In another specific embodiment of LSHT mode the impact mechanism is close to the motor and before the multiplication mechanism. The impaction mechanism extends its output force through at least one part of the multiplication mechanism by means of a pin toward the output drive.

The power tool for gall-minimized tightening and loosening of industrial fasteners is described herein as having two or three modes, lower speed higher torque mode, higher speed lower torque mode and intermittent force mode. It is to be understood that the at least two modes as described herein are merely examples. Further modes can be added to one or the other modes and/or the input and/or the output means. It is to be understood that the power tool is not limited to merely two speeds but can have multiple speeds. For example, known torque intensifier tools are usually powered by air or electric motors. Often the force output and rotation speeds of such motors are increased or decreased by means of planetary gears or the like, which may become part of the motor. Often known torque intensifier tools temporarily eliminate one or several of the intensifier means to increase the tool motor rotation speed. Other known torque intensifier tools use gear intensification and/or reduction mechanisms as stand alone components or adjacent the motor to increase and/or decrease shaft rotation speeds. The present power tool may also include such gear intensification and/or reduction mechanisms as stand alone components, as multiplication transmitters and part of multiplication mechanism 210 or as vibration transmitters and part of vibration mechanism 310. Indeed multiplication assembly 200 can be configured to have multiple multiplication transmitters contained in multiple multiplication assembly housings.

Advantageously, the invention allows for a load bearing surface area between the inner member and the outer member allows for strategically biased vertical and radial stress distribution without having to substantially increase the overall dimensions; a three dimensional load bearing surface area rather than a conventional two dimensional plane; more efficiently and evenly distributed load stress distribution over the load bearing surface area; higher torsion strength; apparatus with lower mass, dimensions and volume is small enough to fit in tight and/or limited spaces typical of industrial bolting applications; eliminates thread galling; and prevents catastrophic fractures and load loss, which previously limited use of hardening processes with threaded fasteners.

Z®-Squirter® Washers, HYTORC® Z® Washer and Nut Assemblies, Tapered Fastener Assemblies, Tapered Torsional Couplings, Two-Part Tapered Nut Assemblies, Two-Part Tapered Thread Nut Assemblies and any combinations thereof are further disclosed.

Note that any type of suitable components, sizes and materials of apparatus may be used, including: fastener categories, for example wood screws, machine screws, thread cutting machine screws, sheet metal screws, self drilling SMS, hex bolts, carriage bolts, lag bolts, socket screws, set screws, j-bolts, shoulder bolts, sex screws, mating screws, hanger bolts, etc.; head styles, for example flat, oval, pan, truss, round, hex, hex washer, slotted hex washer, socket cap, button, etc.; drive types, for example phillips and frearson, slotted, combination, socket, hex, allen, square, torx, multiple other geometries, etc.; nut types, for example hex, jam, cap, acorn, flange, square, torque lock, slotted, castle, etc.; washer types, for example flat, fender, finishing, square, dock, reaction, etc.; and thread types, for example sharp V, American national, unified, metric, square, ACME, whitworth standard, knuckle, buttress, single, double, triple, double square, triple ACME, etc.

**Claims**

1.  A two-part tapered thread nut assembly (3402) for use with either a stud or a bolt of a threaded fastener and a torque device including:

    a rigid inner member (3410), either superficially, partially, selectively or thoroughly metallurgically hardened, having:

    an inner surface (3411) threadedly engagable with the fastener;
    an outer surface (3412) defined by a thread formation (3416) that forms a taper;

    an outer member (3420) having an inner surface (3411) defined by :

    an inversely tapered thread formation (3425) that is threadedly engagable with the tapered thread formation (3416) of the outer surface (3412) of the inner member (3410); and
    wherein the two-part nut assembly (3402), when rotated by an action portion of the torque device, applies a load to the threaded fastener,
    wherein the thread formation (3416) of the outer surface (3412) of the inner member (3410) and the inversely tapered thread formation (3425) of the inner surface (3411) of the outer member (3420) are formed of a thread direction different from that of a thread formation of the inner surface (3411) of the inner member (3410) and a thread formation of the fastener such that during installation, the outer member (3420) and the inner member (3410) and the fastener are loaded with substantially similar torque.

2.  An assembly (3402) according to claim 1, wherein the outer member (3420) substantially surrounds the inner member (3410).

3.  An assembly (3402) according to any preceding claim, wherein the thread formations (3416, 3425) are formed of a thread pitch different from that of a thread formation of the inner surface (3411) of the inner member (3410) and a thread formation of the fastener.

4.  An apparatus (3402B) including an assembly (3402) according to claim 1 including a reaction washer (3501) having:

    an outer edge having a geometric shape (3426, 3429) that allows for rotational coupling with the torque device via a dual drive coaxial action and reaction assembly; and
    a bottom surface having friction coefficient increasing treatments biased in areas outward from a center bore.

5.  An apparatus (3402B) according to claim 4, wherein the reaction washer (3501) is releasably attachable to the assembly (3402), and wherein the reaction washer (3501) detaches at a predetermined pre-torque to become a reaction point.

6.  An apparatus (3402B) according to claim 4, wherein the reaction washer (3501) is releasably attachable to the assembly (3402) by a bond which breaks at or prior to a predetermined pre-torque once compression and friction forces overcome such bond such that the reaction washer (3501) becomes a reaction point.

7. An apparatus (3402B) according to claim 4, including any suitable bonding and/or connection method and/or agent, such as adhesives, glues, epoxies, magnets, solvents, solders, welds, and/or any combination thereof.

8. An apparatus (3402B) according to claim 4, wherein the assembly (3402) and the reaction washer (3501) are connected and freely rotatable with each other.

9. An apparatus (3402B) according to claim 4, wherein the assembly (3402) and the reaction washer (3501) are connected by a protrusion extending outwardly and downwardly from a bottom surface of the assembly (3402) to engage a depression extending inwardly and upwardly from a bottom surface of the reaction washer (3501).

10. An apparatus (3402B) according to claim 4, wherein the assembly (3402) and the reaction washer (3501) are connected by an interference fit that is overcome at or prior to a pre-determined pre-torque.

11. A threaded fastener having either a stud or a bolt with a bolt head and an assembly (3402) according to claim 1 or an apparatus (3402B) according to claim 4.

12. A threaded fastener according to claim 11 which is to be either
tightened and/or loosened by an assembly having:

an inner socket having an inner edge with a nut or stud-head engaging means; and
an outer socket having an inner edge with a reaction washer (3501) engaging means for engaging an outer edge of the reaction washer (3501); and
wherein the inner socket is substantially disposed inside the outer socket, and wherein the inner socket and the outer socket are coupled together with a mechanism that allows the inner socket and the outer socket to be cooperatively and relatively rotated in opposite directions.

**Patentansprüche**

1. . Zweiteilige Kegelgewindemutteranordnung (3402) zur Verwendung mit entweder einem Stift oder einem Bolzen eines Gewindeverschlusses und einer Drehmomenteinrichtung, umfassend:

ein starres Innenglied (3410), das entweder oberflächlich, teilweise, wahlweise oder vollständig metallurgisch gehärtet wird, mit einer mit dem Verschluss in Gewindeeingriff bringbaren Innenfläche (3411),
einer durch ein Gewindegebilde (3416), das einen Kegel bildet, definierten Außenfläche (3412),
einem eine Innenfläche (3411) aufweisenden Außenglied, das definiert wird durch:

ein inverses Kegelgewindegebilde (3425), das mit dem Kegelgewindegebilde (3416) der Außenfläche (3412) des Innenglieds (3410) in Gewindeeingriff bringbar ist, und
wobei die zweiteilige Mutteranordnung (3402) beim Drehen durch einen Wirkabschnitt der Drehmomenteinrichtung den Gewindeverschluss belastet,
wobei das Gewindegebilde (3416) der Außenfläche (3412) des Innenglieds (3410) und das inverse Kegelgewindegebilde (3425) der Innenfläche (3411) des Außenglieds (3420) mit einer zur Gewinderichtung eines Gewindegebildes der Innenfläche (3411) des Innenglieds (3410) und eines Gewindegebildes des Verschlusses unterschiedlichen Gewinderichtung so gebildet sind, dass bei der Montage das Außenglied (3420) und das Innenglied (3410) sowie der Verschluss mit einem im Wesentlichen gleichen Drehmoment belastet werden.

2. . Anordnung (3402) nach Anspruch 1, wobei das Außenglied (3420) das Innenglied (3410) im Wesentlichen umschließt.

3. . Anordnung (3402) nach einem der vorhergehenden Ansprüche, wobei die Gewindegebilde (3416, 3425) aus einer von der Gewindesteigung eines Gewindegebildes der Innenfläche (3411) des Innenglieds (3410) und eines Gewindegebildes des Verschlusses unterschiedlichen Gewindesteigung gebildet sind.

4. . Vorrichtung (3402B), umfassend eine Anordnung (3402) nach Anspruch 1, die eine Rotationsunterlegscheibe (3501) umfasst, mit:

einer Außenkante, die eine geometrische Form (3426, 3429) aufweist, die über eine koaxiale Doppelantriebsaktions- und
Reaktionsanordnung eine Rotationskopplung mit der Drehmomenteinrichtung ermöglicht, und
einer unteren Fläche, die Behandlungen aufweist, die einen Reibungskoeffizienten erhöhen und die in Bereichen Richtung auswärts von einem mittigen Bohrloch vorgelagert sind.

5. . Vorrichtung (3402B) nach Anspruch 4, wobei die Reaktionsunterlegscheibe (3501) lösbar mit der Anordnung (3402) befestigbar ist, und wobei sich die Reaktionsunterlegscheibe (3501) bei einem vorbestimmten Vordrehmomentwert löst, um ein geeigneter Reaktionspunkt zu werden.

6. . Vorrichtung (3402B) nach Anspruch 4, wobei die Reaktionsunterlegscheibe (3501) über eine Klebeverbindung, die bei oder vor einem vorbestimmten Vordrehmomentwert zerbricht, sobald die Kompressions- und Reibungskräfte die genannte Klebeverbindung so überwunden haben, dass die Reaktionsunterlegscheibe zu einem Reaktionspunkt wird, lösbar mit der Anordnung (3402) befestigbar ist.

7. . Vorrichtung (3402B) nach Anspruch 4, umfassend jedes geeignete Klebe- und/oder Verbindungsverfahren bzw. -Mittel wie z.B. Klebemittel, Klebstoffe, Epoxide, Magneten, Lösemittel, Lotmittel, Schweißungen und/oder jede Kombination davon.

8. . Vorrichtung (3402B) nach Anspruch 4, wobei die Anordnung (3492) und die Reaktionsunterlegscheibe (3501) verbunden und frei drehbar miteinander sind.

9. . Vorrichtung (3402B) nach Anspruch 4, wobei die Anordnung (3402) und die Reaktionsunterlegscheibe (3501) über einen sich nach außen und nach unten von einer unteren Fläche der Anordnung (3402) erstreckenden Vorsprung verbunden sind, um in eine sich nach innen und nach oben von einer unteren Fläche der Reaktionsunterlegscheibe (3501) erstreckende Vertiefung einzugreifen.

10. . Vorrichtung (3402B) nach Anspruch 4, wobei die Anordnung (3402) und die Reaktionsunterlegscheibe (3501) über eine Presspassung verbunden sind, die an oder vor dem vorbestimmten Vordrehmoment überwunden wird.

11. . Gewindeverschluss umfassend entweder einen Stift oder einen Bolzen mit einem Bolzenkopf und eine Anordnung (3402) gemäß Anspruch 4.

12. . Gewindeverschluss nach Anspruch 11, der durch eine Anordnung entweder anzuziehen oder zu lockern ist, umfassend:

eine Innenaufnahme, die eine Mutter- bzw. Stiftkopfumgreifmittel aufweisende innere Kante aufweist, und
eine Außenaufnahme, die eine innere Kante aufweist, die Umgreifmittel für eine Reaktionsunterlegscheibe (3501) zum Umgreifen einer Außenkante der Unterlegscheibe (3501) aufweist, und
wobei die Innenaufnahme im Wesentlichen innerhalb der Außenaufnahme liegt und wobei die Innen- und Außenaufnahme über eine Mechanik miteinander gekoppelt sind, die eine kooperatives und relatives gegenläufiges Drehen der Innen- und Außenaufnahme ermöglicht.

## Revendications

1. Ensemble écrou à filetage conique (3402) en deux parties destiné à l'utilisation avec une tige filetée ou un boulon d'un élément de fixation fileté et un dispositif de couple, comprenant :

un élément interne (3410) rigide, superficiellement, partiellement, sélectivement ou entièrement durci de manière métallurgique, présentant :

une surface interne (3411) pouvant venir en prise par filetage avec l'élément de fixation ;
une surface externe (3412) définie par une formation de filetage (3416) qui forme un cône tronqué ;

un élément externe (3420) présentant une surface interne (3411) définie par :

une formation de filetage (3425) à conicité inverse, qui peut venir en prise par filetage avec la formation de filetage (3416) tronconique de la surface externe (3412) de l'élément interne (3410) ; et

dans lequel l'ensemble écrou (3402) en deux parties, quand il est tourné par une partie d'action du dispositif de couple, applique une charge à l'élément de fixation fileté,

dans lequel la formation de filetage (3416) de la surface externe (3412) de l'élément interne (3410) et la formation de filetage (3425) à conicité inverse de la surface interne (3411) de l'élément externe (3420) sont formées dans un sens de filetage différent de celui d'une formation de filetage de la surface interne (3411) de l'élément interne (3410) et d'une formation de filetage de l'élément de fixation de telle sorte que, pendant l'installation, l'élément externe (3420) et l'élément interne (3410) et

l'élément de fixation sont soumis à une charge avec un couple sensiblement identique.

2.  Ensemble (3402) selon la revendication 1, dans lequel l'élément externe (3420) entoure sensiblement l'élément interne (3410).

3.  Ensemble (3402) selon l'une quelconque des revendications précédentes, dans lequel les formations de filetage (3416, 3425) sont formées avec un pas de filetage différent de celui d'une formation de filetage de la surface interne (3411) de l'élément interne (3410) et d'une formation de filetage de l'élément de fixation.

4.  Appareil (3402B) comprenant un ensemble (3402) selon la revendication 1 comprenant une rondelle de réaction (3501) présentant :

    un bord externe présentant une forme géométrique (3426, 3429) qui permet un accouplement en rotation avec le dispositif de couple par le biais d'un ensemble d'action et réaction coaxiales à double entraînement ; et
    une surface inférieure présentant un traitement augmentant le coefficient de frottement, soumise à une sollicitation dans des zones à l'extérieur d'un trou central.

5.  Appareil (3402B) selon la revendication 4, dans lequel la rondelle de réaction (3501) peut être fixée de manière détachable à l'ensemble (3402), et dans lequel la rondelle de réaction (3501) se détache à un précouple prédéfini pour devenir un point de réaction.

6.  Appareil (3402B) selon la revendication 4, dans lequel la rondelle de réaction (3501) peut être fixée de manière détachable à l'ensemble (3402) par une liaison qui se rompt à ou avant un précouple prédéfini une fois que les forces de compression et de frottement surmontent ladite liaison de telle sorte que la rondelle de réaction (3501) devient un point de réaction.

7.  Appareil (3402B) selon la revendication 4, comprenant un quelconque procédé et/ou agent de liaison et/ou de connexion adapté, tel que des adhésifs, colles, résines époxy, aimants, solvants, brasures, soudures et/ou toute combinaison de ceux-ci.

8.  Appareil (3402B) selon la revendication 4, dans lequel l'ensemble (3402) et la rondelle de réaction (3501) sont connectés l'un à l'autre et librement rotatifs l'un avec l'autre.

9.  Appareil (3402B) selon la revendication 4, dans lequel l'ensemble (3402) et la rondelle de réaction (3501) sont connectés par une saillie s'étendant vers l'extérieur et vers le bas depuis une surface inférieure de l'ensemble (3402) pour venir en prise avec un creux s'étendant vers l'intérieur et vers le haut depuis une surface inférieure de la rondelle de réaction (3501).

10. Appareil (3402B) selon la revendication 4, dans lequel l'ensemble (3402) et la rondelle de réaction (3501) sont connectés par un ajustement avec serrage qui est surmonté à ou avant un précouple prédéfini.

11. Élément de fixation fileté présentant soit une tige filetée soit un boulon avec une tête de boulon et un ensemble (3402) selon la revendication 1 ou un appareil (3402B) selon la revendication 4.

12. Élément de fixation fileté selon la revendication 11, qui est destiné à être serré et/ou desserré par un ensemble présentant :

    un manchon interne présentant un bord interne avec un moyen de mise en prise avec un écrou ou une tête de tige filetée ; et

un manchon externe présentant un bord interne avec un moyen de mise en prise avec une rondelle de réaction (3501) pour venir en prise avec un bord externe de la rondelle de réaction (3501) ; et

dans lequel le manchon interne est sensiblement disposé à l'intérieur du manchon externe, et le manchon interne et le manchon externe sont couplés l'un à l'autre avec un mécanisme qui permet au manchon interne et au manchon externe d'être tournés de manière relative et coopérative dans des directions opposées.

EP 3 589 451 B1

FIG. 1A

FIG. 1B

FIG. 1C

FIG. 2A

FIG. 2B

FIG. 3A

FIG 3B

FIG. 3C

FIG. 4A

20"

36"

1"

30"

20"

FIG. 4B

36"

1"

30"

FIG 5A · FIG 5B · FIG 5C · FIG 5D

FIG. 5A

FIG. 6B

FIG. 6C

FIG 6D

FIG. 6E

FIG 7A

FIG 7B

FIG 7C

FIG. 8A

FIG. 8B

FIG. 8C

FIG. 8D

FIG. 8E

FIG. 8F

FIG. 8G

FIG. 8H

FIG. 8I

FIG 8J

FIG. 8K

FIG. 8L

FIG. 8D1

FIG. 8D2

180

FIG. 8D3

180

FIG 8D4

~ 1801

FIG. 8D5

~ 1802

FIG 8D6

~ 1803

FIG 8D7

~ 1804

FIG. 8D8

~ 1805

FIG. 8D9

~ 1806

FIG 8D10

~ 1807

FIG 9A

FIG. 10

FIG 9B

FIG. 11A

FIG 11B

FIG. 11C

ZIRS108-M39
2 3/8 - 60mm HX
1000 FT.LB

FIG. 13A

17B

FIG. 13B

10E

FIG 12A

18A

18

20

36

1

30

FIG 13B

FIG 12C

10D

10C

10A

19A

19B

16

18

17

15A

30

36

1

16

18A

17

15

30

36

1

20

20

FIG. 14A

10C

81

80

83

82

80

FIG. 14B

83

1

FIG. 15A

85

87

86

FIG. 15B

FIG. 15C

85

86

87

FIG. 15D

30

36

1

85

22

24

FIG. 15E

36

1

24

85

22

FIG. 15F

36

1

24

22

30

36 24

FIG. 15G

1

85

22

FIG. 15H

FIG. 15I

Fig. 15J

Fig. 15K

FIG. 16A

FIG. 16B

FIG. 17A

FIG. 17B

# EP 3 589 451 B1

**FIG. 18**

FIG. 19

FIG. 20

10F

860 830 820 840 810

801 850

**FIG. 21A**

10G

860 830 820 840 810

802 855

**FIG. 21B**

FIG. 22A

FIG. 22B

FIG. 23A

FIG. 23B

FIG. 23C

FIG. 23D

FIG. 24A

(1)

2350

2312
2360

~2R$_{1N}$

FIG. 24B

(2)

2350

H$_{24B}$

2312'
2314

2364'

FIG. 24C

2312'

H$_{24B}$

2364'

(3)

FIG. 24D

2312″
2364″

FIG. 24E

2312
2312″

FIG. 24F

2312″
H24D
2364″

FIG. 25A

FIG. 25B

FIG. 25C

FIG. 25D

FIG. 25E

FIG. 26A

2663 FIG. 26B

FIG. 26C

FIG. 26D

2702

2736

2701

FIG. 27A

FIG. 27B

FIG. 27C

FIG. 27D

FIG. 28A

FIG. 28B

FIG. 28C

FIG. 29A

FIG. 29B

FIG. 29C

FIG. 29D

FIG. 29E

FIG. 29F

FIG. 30A

FIG. 30B

FIG. 30C

FIG. 30D

FIG. 31A

FIG. 31B

FIG. 31C

FIG. 32A

FIG. 32B

FIG. 32C

FIG. 32D

3301

3307

$R_{3301V}$

3303A

3305

$R_{3301K}$

$R_{3301L}$

3303

$R_{3301A}$

3309

3306

**FIG. 33A**

3202B

3306

3309

3312

**FIG. 33B**

3202B

3304

**FIG. 33C**

3402

3410

3420

FIG. 34A

3413

3412
3416

3423A
3423B

3422
3426

3429

FIG. 34B

3411
3417

3421
3425

3430
3418

FIG. 34C

3501

FIG. 35A

3402B

FIG. 35B

FIG. 35C

## REFERENCES CITED IN THE DESCRIPTION

### Patent documents cited in the description

- WO 2017151991 A1
- WO 2016176518 A2
- WO 2015095425 A2
- WO 2014176468 A1
- WO 2011098923 A2
- WO 2013019278 A1
- WO 2012017331 A2
- WO 2012017331 A3
- US 5931618 A
- US 8002641 B2
- US 8079795 B2
- US 8978232 B2
- US 5137408 A
- US 5318397 A
- US 5622465 A
- US 5640749 A
- US 5888041 A
- US 6254322 B1
- CA 1242096 A
- WO 8607624 A1
- US 1157596 A
- US 6227839 A1
- US 2013180369 A1
- US 4322989 A1
- US 4671142 A
- US 4706526 A
- US 5016502 A
- US 6152243 A
- US 7765895 D
- US 54999558 B
- US 5341560 A
- US 5539970 A
- US 5538379 A
- US 5946789 A
- US 6230589 B
- US 6254323 B
- US 6461093 B
- US 6490952 B
- US 6609868 B
- US 6929439 B
- US 6883401 B
- US 6986298 B
- US 7003862 B
- US 7066053 B
- US 7125213 B
- US 7188552 B
- US 7207760 B
- US 7735397 B
- US 8079795 B
- US 7462007 B
- US 7857566 B
- US 6298752 B
- US 6490952 A
- US 7641579 B
- US 7798038 B
- US 7832310 B
- US 7950309 B
- US 8042434 B
- US D608614 S
- US 13577995 B
- US 8631724 B
- US 5769581 A
- US 6425718 B
- US 8002641 B
- WO 2015095425 A